# EUROPEAN PATENT APPLICATION

(11) **EP 4 811 521 A1**
(43) Date of publication of application: **23.09.2026**
(21) Application number: 24923226.5
(22) Date of filing: 31.07.2024
(51) Int. Cl.: H01M 50/244, H01M 10/655, H01M 10/6556, H01M 10/658

(54) **BATTERY AND ELECTRICAL APPARATUS**

(30) Priority: 06.02.2024 CN 202420286916 U
(71) Applicant: Contemporary Amperex Technology Co., Limited, Ningde, Fujian 352100 (CN)
(72) Inventor: CHEN, Hang, Ningde, Fujian 352100 (CN); WANG, Qing, Ningde, Fujian 352100 (CN); WANG, Yong, Ningde, Fujian 352100 (CN)
(74) Representative: Lorenz Seidler Gossel Part. mbB
(86) International application number: PCT/CN2024/109041
(87) International publication number: WO 2025/167011

(57) **Abstract**

A battery (200) and an electrical apparatus (1000) are provided. The battery (200) includes a housing assembly (1010), a battery cell (100), and a heat exchange assembly (1020). The housing assembly (1010) includes a housing (101) and an expansion beam (105), where the expansion beam (105) is disposed within the housing (101). The battery cell (100) is disposed within the housing (101) and abuts the expansion beam (105). The heat exchange assembly (1020) includes a first heat exchange member (102), where the first heat exchange member (102) is disposed within the housing (101) and between the battery cell (100) and the housing (101). The first heat exchange member (102) is configured to exchange heat with the battery cell (100), and the first heat exchange member (102) is spaced apart from the expansion beam (105), such that the first heat exchange member (102) and the expansion beam (105) are thermally insulated from each other.

## Description

### CROSS-REFERENCE TO RELATED APPLICATIONS

This application is based on Chinese Patent Application No.202420286916.7, filed on February 6, 2024, and claims priority to the foregoing Chinese patent application, the entire content of which is incorporated herein by reference.

### TECHNICAL FIELD

This application relates to the field of battery technologies, and more particularly to a battery and an electrical apparatus.

### BACKGROUND

In recent years, new energy vehicles have developed by leaps and bounds. In the field of electric vehicles, batteries, as the power source of electric vehicles, play an irreplaceable and important role. Typically, batteries use heat exchange assemblies to control the temperature of battery cells, and the temperature control balance capability of heat exchange assemblies for battery cells needs to be improved.

### SUMMARY

This application provides a battery and an electrical apparatus. The battery can reduce the loss of heat or cold from the first heat exchange member, thereby improving thermal management performance.

According to a first aspect, an embodiment of this application provides a battery, including: a housing assembly, including a housing and an expansion beam, where the expansion beam is disposed within the housing; a battery cell, disposed within the housing and abutting the expansion beam; and a heat exchange assembly, including a first heat exchange member, where the first heat exchange member is disposed within the housing and between the battery cell and the housing, the first heat exchange member is configured to exchange heat with the battery cell, and the first heat exchange member is spaced apart from the expansion beam, such that the first heat exchange member and the expansion beam are thermally insulated from each other.

In the above technical solution, by spacing the first heat exchange member apart from the expansion beam, such that the first heat exchange member and the expansion beam are thermally insulated from each other, the heat exchange amount between the first heat exchange member and the expansion beam is reduced, the heat or cold transferred from the first heat exchange member to the expansion beam is lowered, and the temperature difference between a battery cell adjacent to the expansion beam and a battery cell at another location is alleviated. This is beneficial for improving the uniform temperature distribution inside the battery, and also beneficial for increasing the proportion of heat or cold transferred from the first heat exchange member to the battery cell, thereby improving the thermal management performance of the battery.

In some embodiments, the heat exchange assembly further includes at least one of a second heat exchange member and a third heat exchange member, where the second heat exchange member is disposed outside the housing, and the third heat exchange member is disposed between two adjacent battery cells.

In the above technical solution, configuring the heat exchange assembly to include at least one of the second heat exchange member and the third heat exchange member helps to improve the temperature control capability of the heat exchange assembly for the battery cell, thereby improving the thermal management performance of the battery, and facilitates temperature control of the battery cell through different heat transfer paths according to varying heat exchange requirements of the battery cell.

In some embodiments, the battery further includes: a thermal insulation member, where the thermal insulation member is disposed between the first heat exchange member and the expansion beam.

In the above technical solution, disposing the thermal insulation member between the first heat exchange member and the expansion beam is beneficial to further increasing the thermal resistance between the first heat exchange member and the expansion beam, which facilitates further reduction of the heat exchange amount between the first heat exchange member and the expansion beam.

In some embodiments, there are multiple expansion beams, where one expansion beam divides an internal space of the housing into a first cavity and a second cavity, a part of the first heat exchange member and the battery cell are both disposed in the first cavity, at least one avoidance channel is formed between the expansion beam and the housing, the first heat exchange member passes through the corresponding avoidance channel, so that the first heat exchange member extends from the first cavity to the second cavity, and a wall surface of the expansion beam facing towards the avoidance channel is spaced apart from the first heat exchange member.

In the above technical solution, by forming the at least one avoidance channel between the expansion beam and the housing, and with the first heat exchange member passing through the corresponding avoidance channel, the first heat exchange member extends from the first cavity to the second cavity, facilitating the assembly of the first heat exchange member and the expansion beam, and making it unnecessary for the first heat exchange member to bend around the expansion beam to extend to the second cavity, which is beneficial for simplifying the structure of the first heat exchange member. In addition, the arrangement of the avoidance channel allows all interfaces of the first heat exchange member to be located in the second cavity, meaning that the interfaces of the first heat exchange member and the battery cell are located in different cavities, which facilitates provision of suitable arrangement space by the housing for communication of the first heat exchange member with other components. In addition, the expansion beam can separate the interfaces of the first heat exchange member from the battery cell, which is beneficial for reducing the impact of heat exchange medium leakage at the interface locations of the first heat exchange member on the battery cell, thereby improving the use reliability of the battery cell. Moreover, the wall surface of the expansion beam corresponding to the avoidance channel is spaced apart from the first heat exchange member, which facilitates the thermal insulation between the first heat exchange member and the expansion beam in a case that the first heat exchange member passes from one side of the expansion beam to the other side of the expansion beam.

In some embodiments, the expansion beam has a first recess, and/or a wall of the housing has a second recess, where the first recess and/or the second recess forms the avoidance channel. In the above technical solution, forming the avoidance channel with the first recess and/or the second recess facilitates the formation of the avoidance channel, and helps to offer as required the avoidance channel with a suitable cross-sectional area so as to allow it to accommodate the passing-through portion of the first heat exchange member, so that the cross-sectional area of the avoidance channel can be appropriately reduced while ensuring the smooth passing-through of the first heat exchange member, which is beneficial for reducing the difficulty of forming the avoidance channel, and/or reducing the weakening of the expansion beam.

In some embodiments, portions of the first heat exchange member located on two opposite sides of the expansion beam are connected at an obtuse angle.

In the above technical solution, by connecting the portions of the first heat exchange member located on two opposite sides of the expansion beam at an obtuse angle, during the assembly process of the first heat exchange member, the passing-through portion of the first heat exchange member first aligns with the avoidance channel. At this time, the first heat exchange member is generally tilted. As the first heat exchange member passes through, the tilt angle of the first heat exchange member gradually decreases until the first heat exchange member completes passing-through. At this time, most of the first heat exchange member fits against the corresponding wall of the housing, which facilitates the passing-through of the first heat exchange member and is beneficial for improving the ease of installation of the first heat exchange member.

In some embodiments, the first heat exchange member includes a heat exchange tube and a current collector, where a heat exchange flow passage is defined within the heat exchange tube, an end portion of the heat exchange flow passage passes through a corresponding avoidance channel, the current collector corresponds one-to-one with the avoidance channel, and the current collector communicates with the end portion of the heat exchange flow passage and is disposed in the second cavity; and the current collector communicates with interfaces of a plurality of end portions of the corresponding avoidance channel, or the current collector separates interfaces of a plurality of end portions of the corresponding avoidance channel into a plurality of independent flow channels.

In the above technical solution, configuring the first heat exchange member to include the heat exchange tube and the current collector facilitates flexible configuration of the first heat exchange member by adjusting at least one of the number of heat exchange tubes and the number of current collectors. In addition, the disposition of the current collector facilitates improvement in the overall structural stability and reliability of the first heat exchange member on the premise of ensuring normal circulation of the medium within each heat exchange tube.

In some embodiments, the avoidance channel is configured to allow the corresponding current collector to pass through.

In the above technical solution, configuring the avoidance channel to allow the corresponding current collector to pass through is convenient to provide sufficient operating space for connecting the heat exchange tube and the current collector, which facilitates the connection operation of the heat exchange tube and the current collector.

In some embodiments, a wall of the housing is formed with a second recess, where the second recess forms at least part of the avoidance channel, and a portion of the first heat exchange member passing through the avoidance channel is disposed within the second recess; and the expansion beam abuts a part of the wall of the housing other than the second recess; or the expansion beam is spaced apart from a part of the wall of the housing other than the second recess.

In the above technical solution, by configuring the expansion beam to abut the part of the wall of the housing other than the second recess, for the expansion beam and the above wall of the housing, at the passing-through location of the first heat exchange member, the expansion beam is spaced apart from the wall of the housing, that is, the expansion beam is spaced apart from the second recess c, so as to avoid the first heat exchange member while achieving thermal insulation between the expansion beam and the first heat exchange member. At the location where the first heat exchange member does not pass through, the expansion beam abuts the wall of the housing, that is, the expansion beam is flush with the wall of the housing, which facilitates increasing the contact area between the expansion beam and the housing, thereby helping to improve the installation reliability of the expansion beam. Configuring the expansion beam to be spaced apart from the part of the wall of the housing other than the second recess is beneficial to further increasing the spacing between the entire expansion beam and the first heat exchange member, which facilitates improving the thermal resistance between the entire expansion beam and the first heat exchange member, reduces the heat or cold transferred from the first heat exchange member to the expansion beam, and facilitates improving the energy utilization rate of the first heat exchange member.

In some embodiments, the battery further includes: a thermal insulation member, where the thermal insulation member includes a first thermal insulation portion, and the first thermal insulation portion is disposed between the wall surface of the expansion beam facing towards the avoidance channel and the first heat exchange member.

In the above technical solution, by disposing the first thermal insulation portion between the wall surface of the expansion beam facing towards the avoidance channel and the first heat exchange member, the first thermal insulation portion corresponds to the second recess, so as to further increase the thermal resistance between the expansion beam and the first heat exchange member through the thermal insulation member.

In some embodiments, the thermal insulation member further includes a second thermal insulation portion, where the second thermal insulation portion is disposed between a part of the wall of the housing other than the second recess and the expansion beam. In the above technical solution, disposing the second thermal insulation portion between the part of the wall of the housing other than the second recess and the expansion beam is convenient to sandwich the thermal insulation member between the housing and the expansion beam, and facilitates reliable installation of the thermal insulation member through the fixation of the expansion beam and the housing. Thus, this allows the thermal insulation member to provide a relatively flat mating surface for the connection of the housing and the expansion beam, and at the same time, and is beneficial to reducing the depth of the second recess, thereby improving the convenience of forming the second recess.

In some embodiments, the expansion beam is further provided with a first fixing member, and at least part of the first fixing member is located within the expansion beam; and the battery further includes a second fixing member, and the second fixing member passes through the housing, the second thermal insulation portion, and the expansion beam, and is connected to the first fixing member. In the above technical solution, by disposing the at least part of the first fixing member within the expansion beam, and by passing the second fixing member through the housing, the second thermal insulation portion, and the expansion beam and connecting it to the first fixing member, the housing, the thermal insulation member, and the expansion beam are fixed by a simple fixing manner, and the reliable installation of the thermal insulation member is achieved. In addition, the second fixing member can be installed along a direction in which the thermal insulation member faces towards the expansion beam, allowing for sufficient operating space during the assembly of the second fixing member, and improving assembly convenience. In addition, the second fixing member passing through the second thermal insulation portion facilitates spacing the second fixing member apart from the first heat exchange member, so that the arrangement of the second fixing member does not affect the first heat exchange member.

In some embodiments, the expansion beam has a first recess, where the first recess is configured to form at least part of the avoidance channel, the expansion beam further has a first mating surface abutting the battery cell, and the housing assembly further includes a bearing member, where the bearing member is disposed in the avoidance channel and has a second mating surface abutting the battery cell, the first mating surface and the second mating surface are arranged flush, and the bearing member has a slot for avoiding the first heat exchange member, where the slot runs through an outer peripheral side of the bearing member.

In the above technical solution, by disposing the bearing member in the avoidance channel and arranging the second mating surface flush with the first mating surface, the bearing member can bear the expansion force of the battery cell together with the expansion beam, which is beneficial for reducing the risk of lithium precipitation caused by excessive deformation differences of the battery cell at the avoidance channel location and other locations, and also beneficial for reducing the risk of shell rupture and electrolyte leakage caused by uneven force on the battery cell, thereby improving the use reliability of the battery.

In some embodiments, a stop portion that abuts the bearing member in a normal direction of the first mating surface is formed on at least one of the expansion beam and the housing, so as to restrict movement of the bearing member in a direction from the first cavity towards the second cavity. In the above technical solution, by forming the stop portion on at least one of the expansion beam and the housing, to restrict the movement of the bearing member in the direction from the first cavity towards the second cavity, the reliable positioning of the bearing member in the width direction of the expansion beam is achieved. In addition, the stop portion can resist the expansion force applied by the battery cell to the bearing member, which is beneficial for improving the bearing capacity of the bearing member, so that the bearing member can stably bear the expansion force of the battery cell, reducing the probability of the bearing member moving towards the second cavity under the action of the battery cell. If at least one of the expansion beam and the housing is also connected and fixed to the bearing member in another manner, for example, at least one of the expansion beam and the housing is bonded to the bearing member, the above solution is beneficial for reducing the force exerted on the another connection manner between at least one of the expansion beam and the housing and the bearing member, which is beneficial for improving the arrangement reliability and stability of the bearing member.

In some embodiments, the stop portion is formed on a side of the expansion beam facing towards the first cavity at a location of the avoidance channel; and/or a stop step protruding towards the expansion beam is formed on a wall of the housing on which the first heat exchange member is disposed, where the stop step forms the stop portion.

In the above technical solution, forming the stop portion on the side of the expansion beam facing towards the first cavity at the avoidance space location is convenient to use the inherent structure of the expansion beam to define the stop portion for limiting the bearing member, without requiring additional separate arrangement, which is beneficial for simplifying the structure of the expansion beam. In addition, the stop portion is located on the side of the expansion beam facing towards the first cavity, which is convenient to match the installation manner of the bearing member "mating with the avoidance channel space along the direction from the first cavity towards the second cavity", so that the stop portion does not interfere with the assembly of the bearing member. This is beneficial for improving assembly convenience. Forming the stop step protruding towards the expansion beam on the wall of the housing is convenient to use the inherent structure of the housing to define the stop portion for limiting the bearing member, without requiring additional separate arrangement, where the stop step forms the stop portion. This is beneficial for simplifying the structure of the housing, and the arrangement of the stop step does not affect the sealing performance of the inherent structure of the housing.

In some embodiments, in a cross-section of the expansion beam, the stop portion on the expansion beam is formed as an arc-shaped structure, and the cross-section of the expansion beam is perpendicular to a length direction of the expansion beam.

In the above technical solution, configuring the stop portion on the expansion beam to be arc-shaped in the cross-section of the expansion beam, on the premise that the stop portion can restrict the movement of the bearing member, can also, to a certain extent, avoid the portion of the bearing member that mates with the stop portion. In addition, the stop portion being located on the side of the expansion beam facing towards the first cavity is convenient to alleviate the situation that the bearing member, due to its mating with the stop portion, tends to protrude from the first mating surface towards the first cavity, thereby facilitating the flush arrangement of the second mating surface and the first mating surface. In addition, when the portion of the expansion beam corresponding to the stop portion is an integrally formed bent plate, the stop portion can be located at the bending position of the plate, so that the stop portion can be formed directly during the forming process of the bent plate, which is beneficial for reducing processing steps of the expansion beam, reducing processing difficulty, and improving production efficiency.

In some embodiments, the bearing member includes a plate body portion, where a surface on a side of a thickness of the plate body portion forms the second mating surface, and the slot runs through two sides of the thickness of the plate body portion; and a mating portion, where the mating portion is formed at an outer edge of the plate body portion, and abuts the expansion beam, so as to restrict movement of the bearing member in a direction from the first cavity towards the second cavity. In the above technical solution, configuring the bearing member to include the plate body portion and the mating portion is convenient for the plate body portion to provide a relatively flat second mating surface with a large area, and improves the bearing member's ability to cover the avoidance space. In addition, the mating portion can achieve positioning of the bearing member and reliable installation of the bearing member, so that the bearing member has a certain ability to withstand the expansion force of the battery cell, and the bearing member has a simple structure and is easy to implement. In addition, since the mating portion abuts the expansion beam, if the expansion beam deforms to some extent under the action of the battery cell, causing the first mating surface to deviate from its original position and/or original posture, this is convenient for the mating portion to adapt to the deformation of the expansion beam, causing the second mating surface of the bearing member to adaptively adjust with the change of the first mating surface, which to a certain extent facilitates keeping the second mating surface and the first mating surface always flush or slightly misaligned.

In some embodiments, the mating portion has a first surface and a second surface, where the first surface is formed as an arc-shaped surface recessed towards the second surface and mates with the expansion beam, and the second surface is connected to the second surface and is arranged flush with the second mating surface.

In the above technical solution, since the first surface is arc-shaped, configuring the first surface of the mating portion to abut the expansion beam facilitates the limited mating of the bearing member with the expansion beam, and facilitates ensuring that the second surface does not protrude from the second mating surface towards the first cavity, which does not affect the mating of the second mating surface with the battery cell.

In some embodiments, at least one snap hole is formed on the expansion beam, and the bearing member further includes at least one snap hook portion, where the snap hook portion is formed at an outer edge of the plate body portion and is located on a side of the plate body portion away from the second mating surface, and the snap hook portion is snapped into the corresponding snap hole.

In the above technical solution, snapping the snap hook portion of the bearing member into the snap hole in the expansion beam facilitates the movement of the bearing member in the direction from the second cavity towards the first cavity, which is beneficial for further improving the installation reliability of the bearing member and alleviating the problem that the bearing member is prone to detach from the avoidance channel along the direction from the second cavity towards the first cavity during the assembly process of the battery. For example, the above arrangement can achieve pre-positioning of the bearing member, which is beneficial for further improving the battery assembly efficiency.

In some embodiments, the bearing member further includes at least one support portion, where the support portion is disposed on a side of the plate body portion away from the second mating surface, and is arranged to avoid the first heat exchange member, and the support portion abuts the housing.

In the above embodiment, providing the support portion is convenient to strengthen the plate body portion and improve the structural strength of the bearing member, and the support portion does not affect the abutting cooperation between the plate body portion and the battery cell. The support portion abutting the housing facilitates distributing the force applied by the battery cell to the bearing member to the housing through the support portion, which is beneficial for further improving the installation reliability and bearing capacity of the bearing member. Moreover, the bearing member achieves mating with the expansion beam and the housing respectively through the mating portion and the support portion, which facilitates providing relatively balanced support and positioning for the entire plate body portion. In addition, since the support portion is arranged to avoid the slot, the arrangement of the support portion does not interfere with the first heat exchange member, which facilitates convenient assembly of the bearing member.

In some embodiments, a width of the support portion in a thickness direction of the plate body portion increases in a direction from the mating portion towards the first heat exchange member.

In the above technical solution, configuring the width of the support portion in the thickness direction of the plate body to increase in the direction from the mating portion towards the first heat exchange member is convenient to use less material to increase the abutting contact area between the support portion and the housing, improving the mating reliability between the support portion and the housing, and balancing cost and bearing reliability.

In some embodiments, the bearing member is disposed between the first heat exchange member and the expansion beam; a thermal conductivity coefficient of the bearing member is lower than a thermal conductivity coefficient of the expansion beam; and/or the bearing member is spaced apart from the first heat exchange member.

In the above technical solution, disposing the bearing member between the first heat exchange member and the expansion beam, the thermal conductivity coefficient of the bearing member being lower than the thermal conductivity coefficient of the expansion beam, and/or the bearing member being spaced apart from the first heat exchange member are beneficial to increasing the thermal resistance between the first heat exchange member and the expansion beam, and reduce the heat exchange amount between the expansion beam and the first heat exchange member group, which to a certain extent is beneficial for increasing the proportion of heat or cold transferred from the first heat exchange member to the battery cell, thereby improving thermal management performance. In addition, when the bearing member is spaced apart from the first heat exchange member, the risk of interference between the bearing member and the first heat exchange member during assembly of the bearing member can be reduced, improving the convenience of installing the bearing member.

In some embodiments, a strength of a material of the bearing member is at least 0.8 times a strength of a material of the expansion beam.

In the above technical solution, setting the strength of the material of the bearing member to be at least 0.8 times the strength of the material of the expansion beam is convenient to ensure that the bearing member itself has good bearing capacity, so as to reliably and stably withstand the expansion force of the battery cell.

In some embodiments, the first heat exchange member is disposed on a bottom wall of the housing, and an end of the second mating surface facing towards the first heat exchange member is arranged flush with an end of the battery cell facing towards the corresponding first heat exchange member, or an end of the second mating surface facing towards the first heat exchange member is arranged adjacent to the first heat exchange member as compared with an end of the battery cell facing towards the corresponding first heat exchange member.

In the above technical solution, arranging the end of the second mating surface facing towards the first heat exchange member flush with the end of the battery cell facing towards the corresponding first heat exchange member, or arranging the end of the second mating surface facing towards the first heat exchange member adjacent to the first heat exchange member as compared with the end of the battery cell facing towards the corresponding first heat exchange member is convenient to ensure that the entire surface of the battery cell facing towards the expansion beam can be supported, which facilitates improving the uniformity of force exerted on the battery cell when it undergoes expansion deformation, and alleviates problems such as lithium precipitation and electrolyte leakage caused by uneven force, thereby improving the use reliability of the battery.

In some embodiments, the first heat exchange member includes at least one heat exchange tube, where the heat exchange tube is a flat tube or an accordion tube.

In the above technical solution, configuring the heat exchange tube to be a flat tube or an accordion tube is beneficial to reducing the space occupied by the heat exchange tube, and is convenient to use one thickness side of the heat exchange tube to exchange heat with the battery cell, achieving a balance between volumetric energy density and thermal management for the battery. For example, the heat exchange tube can be extruded, and the thickness of the heat exchange tube can be as small as about 0.7 mm. In related art, a water-cooling plate structure is used, and the water-cooling plate typically includes two stacked plates. The two plates are welded and fixed to define flow channels. Therefore, the water-cooling plate usually has a large thickness, exceeding 2.4 mm. It can be seen that the above arrangement of this application can reduce the cost of the first heat exchange member, and reduce the space occupied by the first heat exchange member, which is beneficial for improving the energy density of the battery even when the first heat exchange member is disposed within the housing.

In some embodiments, the first heat exchange member includes a first heat exchange tube, where the first heat exchange tube includes a first heat exchange section and a second heat exchange section, the second heat exchange section is bent to form a U-shaped region, and the first heat exchange section is bent and disposed within the U-shaped region, and is bent and connected to the second heat exchange section.

In the above technical solution, by bending the second heat exchange section to form the U-shaped region, and by bending the first heat exchange section and disposing it within the U-shaped region, when the first heat exchange tube exchanges heat with multiple battery cells, the U-shaped region formed by the peripheral second heat exchange section can be opposed to the peripheral battery cell, and the first heat exchange section within the U-shaped region can be opposed to the internal battery cell, so that the first heat exchange tube can compensate for the temperature difference caused by heat exchange between the peripheral battery cell and the environment, making the heat exchange effect of the peripheral battery cell consistent with that of the internal battery cell, thereby improving the temperature uniformity of the battery. This can increase the service life of the battery to a certain extent.

In some embodiments, the first heat exchange section includes first heat exchange portions and a first bent portion, where a plurality of first heat exchange portions are provided and spaced apart along a first direction, each of the first heat exchange portions extends along a second direction, and the first bent portion is arc-shaped and is bent and connected between two adjacent first heat exchange portions, so that the plurality of first heat exchange portions are sequentially connected, where the second direction is arranged at an included angle to the first direction.

In the above technical solution, on the one hand, by arranging the plurality of first heat exchange portions, the heat exchange area of the first heat exchange section can be increased, which in turn can increase the heat exchange area of the first heat exchange tube, thereby improving the heat exchange effect of the first heat exchange tube. On the other hand, since the internal battery cells are surrounded by the external battery cells, the temperature difference between the internal battery cells is not significant. Therefore, by arranging the plurality of first heat exchange portions, the overall heat exchange effect can be ensured while maintaining a small temperature difference between the internal and external battery cells.

In some embodiments, the second heat exchange section includes a second heat exchange portion, a third heat exchange portion, and a fourth heat exchange portion, where the second heat exchange portion extends along a first peripheral side of the first heat exchange section, the third heat exchange portion is connected between the second heat exchange portion and the first heat exchange section, and extends along a second peripheral side of the first heat exchange section, a first end of the third heat exchange portion is connected to the second heat exchange portion at an included angle, a second end of the third heat exchange portion is connected to the first heat exchange section at an included angle, the fourth heat exchange portion communicates with the second heat exchange portion, and is connected to the second heat exchange portion at an included angle, and the fourth heat exchange portion extends along a third peripheral side of the first heat exchange section.

In the above technical solution, by arranging the second heat exchange portion, the third heat exchange portion, and the fourth heat exchange portion on three sides of the first heat exchange section, respectively, the second heat exchange section can surround the first heat exchange section, which can increase the arrangement compactness of the first heat exchange tube to realize miniaturization of the structure of the first heat exchange tube, thereby being beneficial for improving the volumetric energy density of the battery. In addition, this can simplify the structure of the first heat exchange tube, facilitating the processing and production of the first heat exchange member.

In some embodiments, the first heat exchange section includes a plurality of first heat exchange portions, where the plurality of first heat exchange portions are sequentially bent and connected in a first direction. The second heat exchange portion is located on one side of the plurality of first heat exchange portions along the first direction, the third heat exchange portion is located on a side of the plurality of first heat exchange portions along a second direction, the first direction and the second direction are arranged at an included angle, a first end of the third heat exchange portion is connected to one end of the second heat exchange portion along the second direction, a second end of the third heat exchange portion is connected to one of the plurality of first heat exchange portions that is farthest from the second heat exchange portion along the first direction, the fourth heat exchange portion is located on the other side of the plurality of first heat exchange portions along the second direction, one end of the fourth heat exchange portion is connected to an end of the second heat exchange portion away from the third heat exchange portion, and the other end of the fourth heat exchange portion extends along the first direction leaving the second heat exchange portion. Alternatively, the second heat exchange portion is located on a side of the plurality of first heat exchange portions along the second direction, the third heat exchange portion is located on one side of the plurality of first heat exchange portions along the first direction, the first direction and the second direction are arranged at an included angle, a first end of the third heat exchange portion is connected to an end of the second heat exchange portion along the first direction, a second end of the third heat exchange portion is connected to one of the plurality of first heat exchange portions that is closest to the third heat exchange portion along the first direction, the fourth heat exchange portion is located on the other side of the plurality of first heat exchange portions along the first direction, one end of the fourth heat exchange portion is connected to an end of the second heat exchange portion away from the third heat exchange portion, and the other end of the fourth heat exchange portion extends along the second direction leaving the second heat exchange portion.

In the above embodiment, the positional relationship between the second heat exchange portion, the third heat exchange portion, the fourth heat exchange portion, and the first heat exchange portion is defined by arranging the plurality of first heat exchange portions to be sequentially bent and connected in the first direction, the second heat exchange portion to be located on one side of the plurality of first heat exchange portions along the first direction/second direction, the third heat exchange portion to be located on one side of the plurality of first heat exchange portions along the second direction/first direction, and the fourth heat exchange portion to be located on the other side of the plurality of first heat exchange portions along the second direction/second direction. This further defines the layout of the first heat exchange tube, simplifies the structure of the first heat exchange tube, and facilitates processing and manufacturing.

In some embodiments, the second heat exchange section further includes a fifth heat exchange portion, where the fifth heat exchange portion extends along a fourth peripheral side of the first heat exchange section, and closes at least part of an opening of the U-shaped region formed by the second heat exchange portion, the third heat exchange portion, and the fourth heat exchange portion.

In the above embodiment, by arranging the fifth heat exchange portion, the second heat exchange section can exchange heat with the four peripheral sides of the assembly formed by all battery cells. In this way, the second heat exchange section of one first heat exchange tube can be used to exchange heat with the four peripheral sides of the assembly formed by multiple battery cells, which is beneficial for improving the heat exchange effect on the four peripheral sides of the battery and improving the temperature uniformity of the battery.

In some embodiments, the first heat exchange section is connected downstream of the second heat exchange section along a fluid flow direction; or the first heat exchange tube is configured such that: when heating the battery cell, the first heat exchange section is connected downstream of the second heat exchange section along a fluid flow direction, and when cooling the battery cell, the first heat exchange section is connected upstream of the second heat exchange section along a fluid flow direction.

In the above technical solution, by connecting the first heat exchange section downstream of the second heat exchange section along the fluid flow direction, the first heat exchange flow passage can prioritize heat exchange with the outer peripheral direction of the battery, which is beneficial for alleviating the temperature difference of the battery in different environments, and increasing the service life of the battery to a certain extent. By configuring the first heat exchange tube such that: when heating the battery cell, the first heat exchange section is connected downstream of the second heat exchange section along the fluid flow direction; and when cooling the battery cell, the first heat exchange section is connected upstream of the second heat exchange section along the fluid flow direction, the heat exchange effect on the battery can be further improved, and the temperature uniformity of multiple battery cells can be enhanced.

In some embodiments, the first heat exchange member further includes a second heat exchange tube, where the second heat exchange tube and the first heat exchange tube are disposed on a same side of the battery cell, at least part of the second heat exchange tube is bent and disposed within the U-shaped region of the first heat exchange tube, and bent structures of the second heat exchange tube and the first heat exchange tube are the same or different.

In the above technical solution, providing the second heat exchange tube can increase the diversity of heat exchange flow passages of the heat exchange assembly, making the arrangement of heat exchange tubes more flexible, which is beneficial for further improving the heat exchange effect of the heat exchange assembly and enhancing the temperature uniformity of the battery.

In some embodiments, the second heat exchange tube includes a U-shaped region having the same structure as the first heat exchange tube, and at least part of the first heat exchange section of the first heat exchange tube is disposed within the U-shaped region of the second heat exchange tube.

In the above technical solution, by arranging at least part of the first heat exchange section of the first heat exchange tube within the U-shaped region of the second heat exchange tube, the first heat exchange tube and the second heat exchange tube can be mutually wound and arranged around each other. In this way, the winding manner of multiple heat exchange tubes can be set according to the heat exchange requirements of various parts of the battery module, further enhancing the heat exchange effect of the heat exchange assembly and improving the temperature uniformity of the battery.

In some embodiments, the second heat exchange tube includes a third heat exchange section and a fourth heat exchange section connected by bending, where the third heat exchange section and the fourth heat exchange section are respectively bent to form U-shaped regions, the third heat exchange section is disposed within the U-shaped region of the fourth heat exchange section, and at least part of the first heat exchange section of the first heat exchange tube is disposed within the U-shaped region of the third heat exchange section.

In the above technical solution, by disposing at least part of the first heat exchange section of the first heat exchange tube within the U-shaped region of the third heat exchange section, the at least part of the first heat exchange section of the first heat exchange tube is also located within the U-shaped region of the fourth heat exchange section. On the premise of realizing mutual winding arrangement between the first heat exchange tube and the second heat exchange tube, this facilitates simplifying their winding arrangement, and at the same time, and is beneficial for further improving the heat exchange effect and enhancing the temperature uniformity of the battery.

In some embodiments, the second heat exchange tube further includes a fifth heat exchange section, where the fifth heat exchange section includes fifth heat exchange portions and a second bent portion, a plurality of fifth heat exchange portions are provided and spaced apart along a first direction, each of the first heat exchange portions extends along a second direction, and the second bent portion is arc-shaped and is bent and connected between two adjacent fifth heat exchange portions, so that the plurality of fifth heat exchange portions are sequentially connected, where the second direction is arranged at an included angle to the first direction. The fifth heat exchange section is disposed between the third heat exchange section and the fourth heat exchange section, and/or the fifth heat exchange section is disposed between the third heat exchange section and a corresponding end portion.

In the above technical solution, providing the fifth heat exchange section is convenient to further increase the heat exchange area of the second heat exchange tube, improves the heat exchange effect of the second heat exchange tube, and is beneficial to achieving temperature control of the internal battery cells. In addition, the arrangement of the fifth heat exchange section does not affect the mutual winding of the first heat exchange tube and the second heat exchange tube.

In some embodiments, the first heat exchange member further includes a third heat exchange tube, where at least part of the third heat exchange tube is bent and disposed within the U-shaped region of the second heat exchange tube.

In the above technical solution, disposing at least part of the third heat exchange tube bent within the U-shaped region of the second heat exchange tube is convenient to further achieve good temperature control of the internal battery cells, which is beneficial for improving the temperature distribution of the entire battery and enhancing the temperature uniformity of the battery.

In some embodiments, the expansion beam includes a beam body, where the beam body defines a cavity; and a reinforcing partition, where the reinforcing partition is disposed in the cavity and has a plurality of spaced-apart connecting portions, the plurality of connecting portions include a first connecting portion and a second connecting portion, the first connecting portion and the second connecting portion are respectively connected to two opposite side walls of the beam body, so that the reinforcing partition divides the cavity into a plurality of chambers, and the first connecting portion and the second connecting portion are staggered.

In the above technical solution, by configuring the expansion beam to include the beam body and the reinforcing partition, where the reinforcing partition is disposed in the cavity and divides the cavity of the beam body into the plurality of chambers, the reinforcing partition provides certain support and reinforcement to two opposite sides of the beam body, which is beneficial for improving the structural strength, bearing capacity, and structural stability of the expansion beam, thereby improving the use reliability of the expansion beam.

In some embodiments, the beam body includes a first plate body and a second plate body arranged opposite to each other, where the first plate body and the second plate body are connected and jointly define the cavity, and the reinforcing partition is disposed between the first plate body and the second plate body and has a third connecting portion, where the third connecting portion is sandwiched between the first plate body and the second plate body and is connected to the first plate body and the second plate body.

In the above technical solution, by configuring the beam body to include the first plate body and the second plate body, and by disposing the reinforcing partition between the first plate body and the second plate body, not only are the first plate body connected through the first connecting portion and the third connecting portion, and the second plate body connected through the second connecting portion and the third connecting portion, but also the expansion beam has a simple structure, is easy to assemble, and has good structural stability.

In some embodiments, multiple expansion beams are provided and include a first expansion beam and a second expansion beam spaced apart, where the battery cell is disposed between the first expansion beam and the second expansion beam, a third fixing member is disposed in the cavity of the first expansion beam, a fourth fixing member is disposed in the cavity of the second expansion beam, and the housing assembly further includes a pull rope, where the pull rope passes through the corresponding cavity and is connected to both the third fixing member and the fourth fixing member.

In the above technical solution, by connecting the pull rope to the third fixing member and connecting the pull rope to the fourth fixing member, when the battery cell between the first expansion beam and the second expansion beam undergoes expansion deformation, the pull rope can apply force to the first expansion beam and the second expansion beam to resist the expansion force of the battery cell. Moreover, since the third fixing member and the fourth fixing member are disposed within the cavities of the corresponding expansion beams, even if the connection between at least one of the third fixing member and the fourth fixing member and the corresponding expansion beam fails, the at least one of the third fixing member and the fourth fixing member can still be restricted within the cavity of the corresponding expansion beam, which is beneficial for reducing the risk that the at least one of the third fixing member and the fourth fixing member detaching from the corresponding expansion beam leads to failure of the pull rope.

In some embodiments, the housing includes a first housing, where the first housing is an integrally stamped part and includes a bottom wall and a peripheral wall, the peripheral wall is arranged around the bottom wall, and the expansion beam is connected to both the bottom wall and the peripheral wall.

In the above technical solution, by configuring the first housing, which includes the bottom wall and the peripheral wall, as an integrally stamped part, the forming of the first housing is facilitated, which is beneficial for reducing the cost of the first housing, and also facilitates providing the first housing with good structural strength. In addition, the inherent structure of the first housing achieves sealing between the bottom wall and the peripheral wall, which is beneficial for improving the sealing performance of the bottom of the first housing, thereby saving multiple connecting members (such as bolts) in the housing used to achieve bottom sealing of the first housing, saving the connection process of the bottom wall and the peripheral wall, and improving the assembly efficiency of the housing.

According to a second aspect, an embodiment of this application provides an electrical apparatus, including the battery described above.

In the above technical solution, using the battery described above is convenient to achieve good temperature control of the battery, thereby improving the use reliability of the electrical apparatus.

### DESCRIPTION OF DRAWINGS

The above and/or additional aspects and advantages of this application will become apparent and easily understood from the description of embodiments in conjunction with the following drawings, where
FIG. 1 is a schematic structural diagram of a vehicle provided in some embodiments of this application;
FIG. 2 is an exploded structural diagram of a battery provided in some embodiments of this application;
FIG. 3 is a partial schematic diagram of a battery provided in some embodiments of this application;
FIG. 4 is an exploded view of the battery shown in FIG. 3;
FIG. 5 is a cross-sectional view of the battery shown in FIG. 3;
FIG. 6 is an enlarged view of part A circled in FIG. 5;
FIG. 7 is a partial schematic diagram of a battery provided in some embodiments of this application;
FIG. 8 is a cross-sectional view along line B-B in FIG. 7;
FIG. 9 is an enlarged view of part C circled in FIG. 8;
FIG. 10 is another schematic diagram of the battery shown in FIG. 7;
FIG. 11 is a partial schematic diagram of a battery provided in some embodiments of this application;
FIG. 12 is a schematic diagram of a third heat exchange member and a battery cell provided in some embodiments of this application;
FIG. 13 is a partial schematic diagram of a battery provided in some embodiments of this application;
FIG. 14 is a cross-sectional view along line E-E in FIG. 13;
FIG. 15 is a cross-sectional view along line F-F in FIG. 13;
FIG. 16 is a cross-sectional view along line G-G in FIG. 13;
FIG. 17 is a partial cross-sectional view of a housing provided in some embodiments of this application;
FIG. 18 is a schematic diagram of an assembly process of a first heat exchange member at a cross-sectional position along line D-D in FIG. 13;
FIG. 19 is a partially enlarged view of the assembly process of the first heat exchange member in FIG. 18;
FIG. 20 is a partial schematic diagram of a battery provided in some embodiments of this application;
FIG. 21 is a front view of a bearing member shown in FIG. 20;
FIG. 22 is a top view of the bearing member shown in FIG. 21;
FIG. 23 is a cross-sectional view along line H-H in FIG. 21;
FIG. 24 is a side view of the bearing member shown in FIG. 21;
FIG. 25 is a schematic diagram of a first heat exchange member provided in some embodiments of this application;
FIG. 26 is a schematic diagram of a first heat exchange member provided in some embodiments of this application;
FIG. 27 is a schematic diagram of a first heat exchange member provided in some embodiments of this application;
FIG. 28 is a schematic diagram of a first heat exchange member provided in some embodiments of this application; and
FIG. 29 is a schematic diagram of a first heat exchange member provided in some embodiments of this application.

### Reference signs:

electrical apparatus 1000, controller 300, motor 400, battery 200, avoidance channel 200a, snap hole 200d, battery cell 100, housing assembly 1010, heat exchange assembly 1020, housing 101, first cavity 101a, second cavity 101b, second recess 101c, third recess 101d, first housing 1011, bottom wall 1011a, peripheral wall 1011b, stop step 1011c, first mounting hole 1011d, second housing 1012, first heat exchange member 102, second heat exchange member 103, third heat exchange member 104, expansion beam 105, first expansion beam B1, second expansion beam B2, first recess 105a, first mating surface 105b, third mounting hole 105c, beam body 1051, cavity 1051a, chamber 1051b, first plate body A1, second plate body A2, reinforcing partition 1052, connecting portion 1052a, first connecting portion 1052b, second connecting portion 1052c, third connecting portion 1052d, bearing member 106, second mating surface 106a, slot 106b, stop portion 106c, plate body portion 1061, mating portion 1062, first surface 1062a, second surface 1062b, snap hook portion 1063, support portion 1064, thermal insulation member 107, first thermal insulation portion 1071, second thermal insulation portion 1072, second mounting hole 1072a, first fixing member 1081, second fixing member 1082, gasket 1083, third expansion beam B3, pull rope 110, third fixing member 111, fourth fixing member 112, heat exchange tube 1, heat exchange flow passage 10, first heat exchange tube 1a, second heat exchange tube 1b, third heat exchange tube 1c, end portion 11, first end portion 11a, second end portion 11b, communication section 12, U-shaped region 120, first heat exchange section 121, first heat exchange portion 1211, first bent portion 1212, second heat exchange section 122, second heat exchange portion 1221, third heat exchange portion 1222, fourth heat exchange portion 1223, fifth heat exchange portion 1224, third heat exchange section 123, seventh heat exchange portion 1231, eighth heat exchange portion 1232, ninth heat exchange portion 1233, fourth heat exchange section 124, tenth heat exchange portion 1241, eleventh heat exchange portion 1242, twelfth heat exchange portion 1243, fifth heat exchange section 125, sixth heat exchange portion 1251, second bent portion 1252, sixth heat exchange section 126, seventh heat exchange section 127, thirteenth heat exchange portion 1271, third bent portion 1272, and current collector 2.

### DESCRIPTION OF EMBODIMENTS

In order to make the objectives, technical solutions, and advantages of the embodiments of this application clearer, the technical solutions in the embodiments of this application will be clearly described below in conjunction with the accompanying drawings. Obviously, the described embodiments are some, but not all, embodiments of this application. All other embodiments obtained by those skilled in the art based on the embodiments of this application without creative efforts shall fall within the protection scope of this application.

Unless otherwise defined, all technical and scientific terms used in this application have the same meaning as commonly understood by those skilled in the art to which this application belongs. The terms used in the description of this application are only for the purpose of describing specific embodiments and are not intended to limit this application. The terms "include" and "have" and any variations thereof in the description and claims of this application and the above description of drawings are intended to cover non-exclusive inclusions. The terms "first", "second", and the like in the description and claims of this application or the above description of drawings are used to distinguish different objects, and are not used to describe a specific order or primary-secondary relationship.

In this application, the mention of "embodiment" means that a particular feature, structure, or characteristic described in connection with the embodiment may be included in at least one embodiment of this application. The appearance of this phrase in various places in the specification does not necessarily all refer to the same embodiment, nor are they mutually exclusive independent or alternative embodiments with other embodiments.

In this application, the term "and/or" is merely a descriptive relational relationship between associated objects, indicating that there can be three relationships. For example, A and/or B can represent three situations: A exists alone, both A and B exist, and B exists alone. In addition, the character "/", in this application, generally indicates an "or" relationship between the associated objects.

In the embodiments of this application, the same reference signs represent the same components, and for brevity, detailed descriptions of the same components are omitted in different embodiments. It should be understood that the dimensions such as thickness, length, and width of various components in the embodiments of this application shown in the drawings are merely illustrative and should not constitute any limitation on this application.

"Multiple" appearing in this application refers to two or more (including two).

In this application, the battery cell may include a lithium-ion secondary battery, a lithium-ion primary battery, a lithium-sulfur battery, a sodium-lithium ion battery, a sodium-ion battery, a magnesium-ion battery, or the like, and the embodiments of this application are not limited thereto. The battery cells may be cylindrical, flat, cuboid, or other shapes, and the embodiments of this application are not limited thereto. Battery cells are generally divided into three types according to their packaging methods: cylindrical battery cells, prismatic battery cells, and pouch battery cells, and the embodiments of this application are not limited thereto.

The battery mentioned in the embodiments of this application refers to a single physical module that includes multiple battery cells to provide higher voltage and capacity. For example, the battery mentioned in this application can be a battery module or a battery pack. A battery module generally includes multiple battery cells. A battery generally includes a housing for encapsulating multiple battery cells or multiple battery modules, and the housing can prevent liquid or other foreign matter from affecting the charging or discharging of the battery cell. Certainly, the battery can alternatively not include a housing.

Illustratively, a battery cell typically can include a casing, a cell assembly, and an electrolyte. The casing is configured to house the cell assembly and the electrolyte. The casing is provided with at least one positive electrode pole and at least one negative electrode pole. The cell assembly includes one or more electrode assemblies, where the electrode assemblies are formed by stacking or winding a positive electrode plate, a negative electrode plate, and a separator.

The positive electrode plate generally can include a positive electrode current collector and a positive electrode active material layer, where the positive electrode active material layer is directly or indirectly applied on the positive electrode current collector. The positive electrode current collector not coated with the positive electrode active material layer protrudes from the positive electrode current collector already coated with the positive electrode active material layer, and the positive electrode current collector not coated with the positive electrode active material layer serves as a positive electrode tab. Multiple positive electrode tabs are stacked together and electrically connected to the positive electrode pole. Illustratively, the multiple stacked positive electrode tabs can be directly welded to the positive electrode pole to form an electrical connection; or the cell assembly can further include a positive electrode adapter, the multiple stacked positive electrode tabs are welded to one end of the positive electrode adapter, and the other end of the positive electrode adapter is welded to the positive electrode pole, so that the positive electrode tabs form an electrical connection with the positive electrode pole.

The negative electrode plate generally can include a negative electrode current collector and a negative electrode active material layer, where the negative electrode active material layer is directly or indirectly applied on the negative electrode current collector. The negative electrode current collector not coated with the negative electrode active material layer protrudes from the negative electrode current collector already coated with the negative electrode active material layer, and the negative electrode current collector not coated with the negative electrode active material layer serves as a negative electrode tab. Multiple negative electrode tabs are stacked together and electrically connected to the negative electrode pole. Illustratively, the multiple stacked negative electrode tabs can be directly welded to the negative electrode pole to form an electrical connection; or the cell assembly can further include a negative electrode adapter, where the multiple stacked negative electrode tabs are welded to one end of the negative electrode adapter, and the other end of the negative electrode adapter is welded to the negative electrode pole, so that the negative electrode tabs form an electrical connection with the negative electrode pole. The material of the separator is not limited. For example, it can be polypropylene or polyethylene.

In recent years, new energy vehicles have developed by leaps and bounds. In the field of electric vehicles, batteries, as the power source of electric vehicles, play an irreplaceable and important role. Batteries, as core components of new energy vehicles, have high requirements in terms of both energy density and reliability.

In related art, heat exchange assemblies are used in batteries to control the temperature of battery cells. However, the heat exchange assemblies suffer from large heat or cold losses, resulting in poor temperature control capability for battery cells.

Based on the above considerations, in order to reduce the heat or cold loss of heat exchange assemblies, a battery is proposed, where the battery includes a housing assembly, battery cells, and a heat exchange assembly. The housing assembly includes a housing and an expansion beam, where the expansion beam is disposed within the housing. The battery cells are disposed within the housing and abut the expansion beam. The heat exchange assembly includes a first heat exchange member, where the first heat exchange member is disposed within the housing and between the battery cell and the housing. The first heat exchange member is configured to exchange heat with the battery cell, and the first heat exchange member is spaced apart from the expansion beam, such that the first heat exchange member and the expansion beam are thermally insulated from each other.

In the above technical solution, by spacing the first heat exchange member apart from the expansion beam, such that the first heat exchange member and the expansion beam are thermally insulated from each other, the heat exchange amount between the first heat exchange member and the expansion beam is reduced, the heat or cold transferred from the first heat exchange member to the expansion beam is lowered, and the temperature difference between a battery cell adjacent to the expansion beam and a battery cell at another location is alleviated, which is beneficial for improving the uniform temperature distribution inside the battery, and also beneficial for increasing the proportion of heat or cold transferred from the first heat exchange member to the battery cell, thereby improving the thermal management performance of the battery.

An embodiment of this application provides an electrical apparatus that uses the battery of this disclosure as a power source. The electrical apparatus can be, but is not limited to, a mobile phone, a tablet, a laptop computer, an electric toy, an electric tool, an electric bicycle, an electric vehicle, a ship, an aerospace vehicle, and so on. Electric toys can include fixed or mobile electric toys, such as game consoles, electric car toys, electric ship toys, electric aircraft toys, and the like. Aerospace vehicles can include airplanes, rockets, space shuttles, and spacecraft, and the like. Electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers, and the like.

For convenience of description, the following embodiments take an electrical apparatus being a vehicle as an example to introduce the structure of the electrical apparatus and battery of this application in detail.

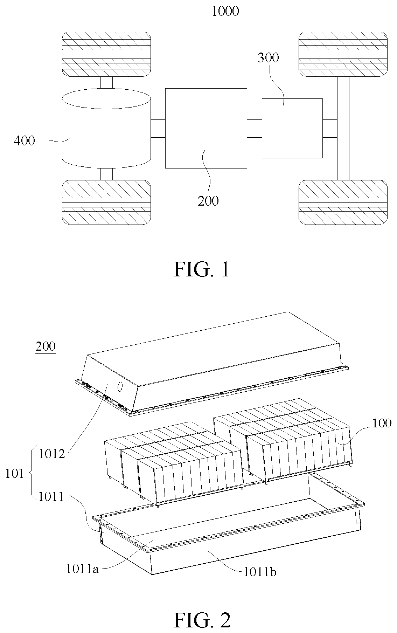

Referring to FIG. 1, FIG. 1 is a schematic structural diagram of an electrical apparatus 1000 being a vehicle provided in some embodiments of this application. The vehicle can be a fuel vehicle, a gas vehicle, or a new energy vehicle. The new energy vehicle can be a battery electric vehicle, a hybrid electric vehicle, or an extended-range electric vehicle, and the like. The vehicle is provided with a battery 200, and the battery 200 can be disposed at the bottom, front, or rear of the vehicle. The battery 200 can be used for power supply of the vehicle. For example, the battery 200 can serve as an operating power source of the vehicle. The vehicle can further include a controller 300 and a motor 400. The controller 300 is configured to control the battery 200 to supply power to the motor 400, for example, for the power demands during vehicle startup, navigation, and driving. In some embodiments of this application, the battery 200 can not only serve as the operating power source of the vehicle but also as the driving power source of the vehicle, replacing or partially replacing fuel or natural gas to provide driving power for the vehicle.

Referring to FIG. 2, FIG. 2 is an exploded structural diagram of a battery cell 100 for a battery 200 provided in some embodiments of this application. The battery 200 includes a housing 101 and a plurality of battery cells 100, where the battery cells 100 are housed within the housing 101. The housing 101 is configured to provide assembly space for the battery cell, and the housing 101 can adopt various structures. In some embodiments, the housing 101 can include a first housing 1011 and a second housing 1012, where the first housing 1011 and the second housing 1012 are mutually fitted, and the first housing 1011 and the second housing 1012 jointly define a receiving cavity for accommodating the battery cell 100. The second housing 1012 can be a hollow structure open at one end, and the first housing 1011 can be a plate-like structure, where the first housing 1011 covers the open side of the second housing 1012, so that the first housing 1011 and the second housing 1012 jointly define the receiving cavity. Alternatively, the first housing 1011 and the second housing 1012 can both be hollow structures open at one side (as shown in FIG. 2), where the open side of the first housing 1011 fits the open side of the second housing 1012. Certainly, the housing 101 formed by the first housing 1011 and the second housing 1012 can be of various shapes, such as cylindrical or cuboid shape.

In the battery 200, multiple battery cells 100 can be connected in series, in parallel, or in a hybrid connection, where a hybrid connection means that multiple battery cells 100 are connected in both series and parallel. The multiple battery cells 100 can be directly connected in series, in parallel, or in a hybrid connection, and then the entirety formed by the multiple battery cells 100 is housed within the housing 101. Alternatively, the battery 200 can be formed by the multiple battery cells 100 first being connected in series, in parallel, or in a hybrid connection to form battery modules, and then the multiple battery modules being connected in series, in parallel, or in a hybrid connection to form an entirety, which is then housed within the housing 101. The battery 200 can further include other structures. For example, the battery 200 can further include a busbar for achieving electrical connection between the multiple battery cells 100.

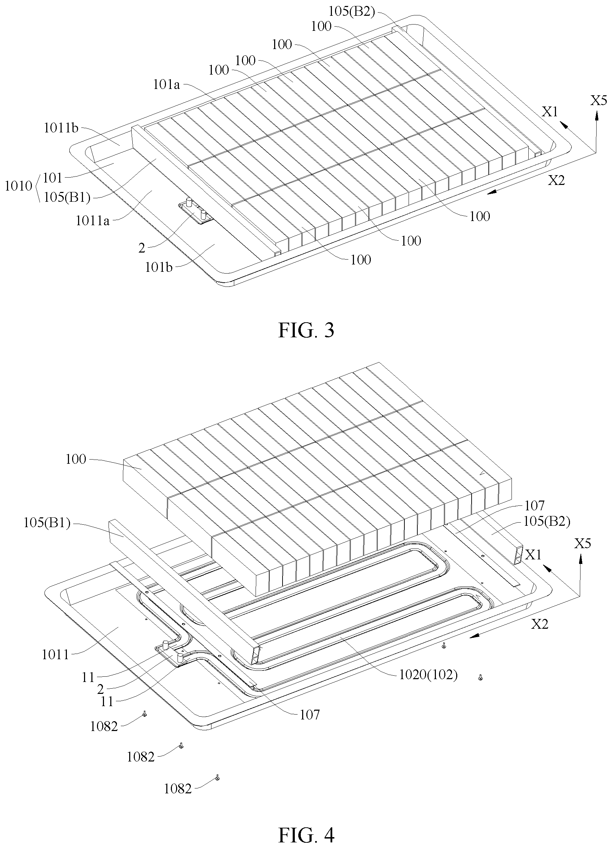

Referring to FIG. 3, any two of a first direction X1, a second direction X2, and a fifth direction X5 intersect, and further, any two of the first direction X1, the second direction X2, and the fifth direction X5 are mutually perpendicular.

Referring to FIGs. 3 to 6, in the embodiments of this application, the battery 200 includes a housing assembly 1010, battery cells 100, and a heat exchange assembly 1020. The housing assembly 1010 includes a housing 101 and an expansion beam 105, where the expansion beam 105 is disposed within the housing 101. The battery cells 100 are disposed within the housing 101 and the battery cells 100 abut the expansion beam 105, so that the expansion beam 105 is configured to bear the expansion force of the battery cells 100. The heat exchange assembly 1020 includes a first heat exchange member 102, where the first heat exchange member 102 is disposed within the housing 101 and the first heat exchange member 102 is located between the battery cell 100 and the housing 101. The first heat exchange member 102 is configured to exchange heat with the battery cell 100, so as to control the temperature of the battery cell 100 through the first heat exchange member 102.

Since the first heat exchange member 102 is disposed within the housing 101 and located between the battery cell 100 and the housing 101, this facilitates good heat transfer between the first heat exchange member 102 and the battery cell 100, and, the first heat exchange member 102 is not exposed outside the housing 101, which facilitates sealing of the heat exchange tube 1. In this case, the first heat exchange member 102 can be disposed on any side of the battery cell 100. For example, the first heat exchange member 102 is disposed on at least one of the upper side, lower side, left side, right side, front side, and rear side of the battery cell 100. In other words, for the housing 101, at least one of the top wall, bottom wall 1011a, left wall, right wall, front wall, and rear wall of the housing 101 is provided with the first heat exchange member 102.

In the embodiments of this application, the manner of fixing the first heat exchange member 102 to the housing 101 is not specifically limited. Illustratively, the manner of fixing the first heat exchange member 102 to the housing 101 includes, but is not limited to, bonding the first heat exchange member 102 to the housing 101. For example, the first heat exchange member 102 is bonded to the housing 101 by using double-sided tape or structural adhesive.

That the first heat exchange member 102 is spaced apart from the expansion beam 105, so that the first heat exchange member 102 and the expansion beam 105 are thermally insulated from each other can be understood as follows: the thermal resistance between the first heat exchange member 102 and the expansion beam 105 is greater than the thermal resistance between the first heat exchange member 102 and the battery cell 100, which is beneficial for reducing the heat or cold taken away by the first heat exchange member 102 from the expansion beam 105.

Under normal circumstances, when there are multiple battery cells 100, peripheral battery cells 100 surround internal battery cells 100. The heat exchange area of the peripheral battery cells 100 is usually larger than the heat exchange area of the internal battery cells 100, resulting in a certain temperature difference between the peripheral battery cells 100 and the internal battery cells 100. In related art, the heat exchange member of the battery cell 100 is not thermally insulated from the expansion beam, so that a certain degree of heat exchange can occur between the heat exchange member and the expansion beam. Therefore, the temperature of the expansion beam is greatly affected by the heat exchange member, which causes the temperature of the expansion beam to be lower than that of the peripheral battery cells 100 when the heat exchange member cools the battery cells 100, and the temperature of the expansion beam to be higher than that of the peripheral battery cells 100 when the heat exchange member heats the battery cells 100. This further exacerbates the temperature difference between the peripheral battery cells 100 and the internal battery cells 100.

In the above technical solution, by spacing the first heat exchange member 102 apart from the expansion beam 105, such that the first heat exchange member 102 and the expansion beam 105 are thermally insulated from each other, and the thermal resistance between the first heat exchange member 102 and the expansion beam 105 is increased, thereby reducing the heat exchange amount between the first heat exchange member 102 and the expansion beam 105, lowering the heat or cold transferred from the first heat exchange member 102 to the expansion beam 105, and reducing the loss of heat or cold. In addition, this is beneficial for reducing the temperature difference between the expansion beam 105 and the peripheral battery cells 100 abutting it, and alleviating the temperature difference between a battery cell 100 adjacent to the expansion beam 105 and a battery cell 100 at another location, which facilitates improved consistency of heat exchange environments of the peripheral battery cells 100 and the internal battery cells 100, thereby being beneficial for reducing the temperature difference between the peripheral battery cells 100 and the internal battery cells 100, improving the uniform temperature distribution inside the battery 200, and enhancing the reliability of the battery 200. In addition, this is beneficial for increasing the proportion of heat or cold transferred from the first heat exchange member 102 to the battery cell 100, thereby improving the thermal management performance of the battery 200.

It can be understood that the first heat exchange member 102 and the expansion beam 105 can always be spaced apart during the entire life cycle of the battery 200. In addition, when the housing 101 has a top wall, a bottom wall 1011a, and a peripheral wall, the first heat exchange member 102 is provided between at least one of the top wall, the bottom wall 1011a, and the peripheral wall and the battery cell 100. The peripheral wall can include a plurality of side walls connected end to end, and the first heat exchange member 102 on the peripheral wall can be disposed between at least one side wall and the battery cell 100.

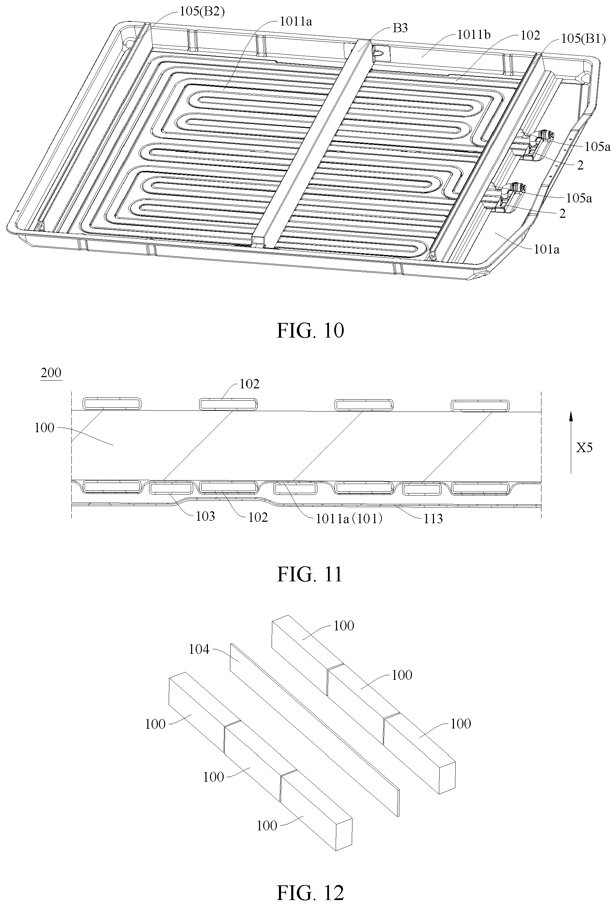

Referring to FIGs. 11 and 12, in some embodiments, the heat exchange assembly 1020 further includes at least one of a second heat exchange member 103 and a third heat exchange member 104, where the second heat exchange member 103 is disposed outside the housing 101, and the third heat exchange member 104 is disposed between two adjacent battery cells 100.

When the heat exchange assembly 1020 includes the second heat exchange member 103, the second heat exchange member 103 can be attached to the outer wall of the housing 101, so as to achieve heat exchange with the battery cell 100 through the housing 101. Since the second heat exchange member 103 is separated from the battery cell 100 by the housing 101, there is no need to consider the insulation between the second heat exchange member 103 and the battery cell 100, which simplifies the insulation design of the second heat exchange member 103, facilitates simplifying the arrangement of the battery 200, and reduces processing difficulty and production cost. In addition, the second heat exchange member 103 does not occupy space inside the housing 101, so that the capacity of the battery 200 is not reduced due to the second heat exchange member 103; and/or when the heat exchange assembly 1020 includes the third heat exchange member 104, the third heat exchange member 104 can exchange heat with adjacent battery cells 100, where the third heat exchange member 104 can exchange heat with at least two battery cells 100.

In the embodiments of this application, when the battery 200 includes the second heat exchange member 103, the disposition position of the second heat exchange member 103 is not specifically limited. For example, the second heat exchange member 103 can be disposed on the lower side of the bottom wall 1011a of the housing 101, which facilitates the second heat exchange member 103 to exchange heat with battery cells 100 within a range, which is beneficial for improving the temperature control effect and temperature control efficiency for the battery cells 100. In this case, a bottom protection plate 113 can be disposed below the second heat exchange member 103, which can reliably protect the second heat exchange member 103, reduce the risk of the second heat exchange member 103 being damaged by impact or collision, and improve the working reliability of the second heat exchange member 103.

In the above technical solution, configuring the heat exchange assembly 1020 to include at least one of the second heat exchange member 103 and the third heat exchange member 104 helps to improve the temperature control capability of the heat exchange assembly 1020 for the battery cell 100, thereby improving the thermal management performance of the battery 200, and facilitates temperature control of the battery cell 100 through different heat transfer paths according to varying heat exchange requirements of the battery cell 100.

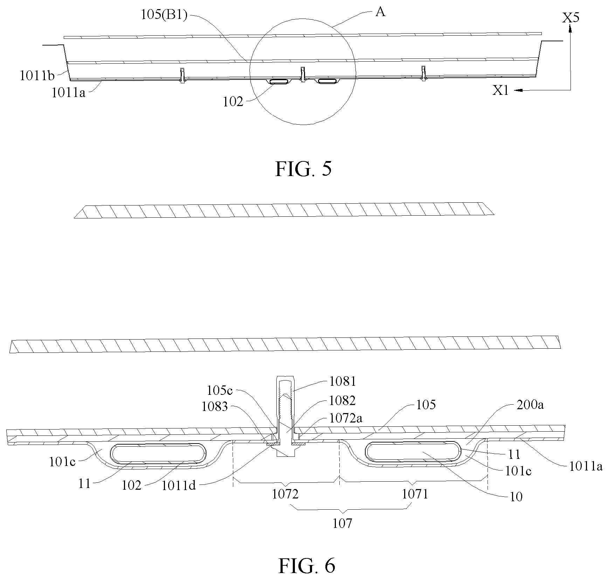

Referring to FIGs. 4 and 6, in some embodiments, the battery 200 further includes a thermal insulation member 107, where the thermal insulation member 107 is disposed between the first heat exchange member 102 and the expansion beam 105. In this solution, whether the avoidance channel 200a can be formed between the expansion beam 105 and the housing 101 is not specifically limited.

In the above technical solution, disposing the thermal insulation member 107 between the first heat exchange member 102 and the expansion beam 105 is beneficial to further increasing the thermal resistance between the first heat exchange member 102 and the expansion beam 105, which facilitates further reduction of the heat exchange amount between the first heat exchange member 102 and the expansion beam 105.

Certainly, in other embodiments of this application, the thermal insulation member 107 may not be disposed between the first heat exchange member 102 and the expansion beam 105. For example, the expansion beam 105 and the first heat exchange member 102 can be thermally insulated by air, and/or when the first heat exchange member 102 is bonded to the housing 101 with structural adhesive, the structural adhesive will overflow to a side of the first heat exchange member 102 facing towards the expansion beam 105. The structural adhesive has a certain thermal insulation capacity and can also increase the thermal resistance between the first heat exchange member 102 and the expansion beam 105.

Referring to FIGs. 4 to 6, in some embodiments, there are multiple expansion beams 105, where one expansion beam 105 divides an internal space of the housing 101 into a first cavity 101a and a second cavity 101b, a part of the first heat exchange member 102 and the battery cell 100 are both disposed in the first cavity 101a, and a portion of the first heat exchange member 102 located in the first cavity 101a is configured to exchange heat with the battery cell 100. At least one avoidance channel 200a is formed between the expansion beam 105 and the housing 101, a part of the surface of the expansion beam 105 defines a part of the wall surface of the avoidance channel 200a, and a part of the surface of the housing 101 defines a part of the wall surface of the avoidance channel 200a. The first heat exchange member 102 passes through the corresponding avoidance channel 200a, so that the first heat exchange member 102 extends from the first cavity 101a to the second cavity 101b, and a wall surface of the expansion beam 105 facing towards the avoidance channel 100a is spaced apart from the first heat exchange member 102.

It can be understood that there is one expansion beam 105, and this expansion beam 105 divides the internal space of the housing 101 into the first cavity 101a and the second cavity 101b; or there are multiple expansion beams 105, and one of the multiple expansion beams 105 divides the internal space of the housing 101 into the first cavity 101a and the second cavity 101b.

In the above technical solution, by forming the at least one avoidance channel 200a between the expansion beam 105 and the housing 101, and with the first heat exchange member 102 passing through the corresponding avoidance channel 200a, the first heat exchange member 102 extends from the first cavity 101a to the second cavity 101b, facilitating the assembly of the first heat exchange member 102 and the expansion beam 105 is facilitated, and making it unnecessary for the first heat exchange member 102 to bend around the expansion beam 105 to extend to the second cavity 101b, which is beneficial for simplifying the structure of the first heat exchange member 102. In addition, the arrangement of the avoidance channel 200a allows all interfaces of the first heat exchange member 102 to be located in the second cavity 101b, meaning that the interfaces of the first heat exchange member 102 and the battery cell 100 are located in different cavities, which facilitates provision of suitable arrangement space by the housing 101 for communication of the first heat exchange member 102 with other components. In addition, the expansion beam 105 can separate the interfaces of the first heat exchange member 102 from the battery cell 100, which is beneficial for reducing the impact of heat exchange medium leakage at the interface locations of the first heat exchange member 102 on the battery cell 100, thereby improving the use reliability of the battery cell 100. Moreover, the wall surface of the expansion beam 105 corresponding to the avoidance channel 200a is spaced apart from the first heat exchange member 102, which facilitates the thermal insulation between the first heat exchange member 102 and the expansion beam 105 in a case that the first heat exchange member 102 passes from one side of the expansion beam 105 to the other side of the expansion beam 105.

It can be understood that when there are multiple expansion beams 105, in addition to the expansion beam 105 that divides the internal space of the housing 101 into the first cavity 101a and the second cavity 101b, another expansion beam 105 may form an avoidance channel 200a or may not form an avoidance channel 200a with the housing 101. For example, the first expansion beam B1 described later divides the internal space of the housing 101 into the first cavity 101a and the second cavity 101b, and the third expansion beam B3 described later is disposed in the first cavity 101a and also forms an avoidance channel 200a with the housing 101. The second expansion beam B2 described later is disposed in the first cavity 101a and does not form an avoidance channel 200a with the housing 101. The entire first heat exchange member 102 is located on a side of the width of the second expansion beam B2, and the first heat exchange member 102 is also spaced apart from the second expansion beam B2 for thermal insulation. It can be seen that regardless of whether the expansion beam 105 forms an avoidance channel 200a with the housing 101, the first heat exchange member 102 is spaced apart from the expansion beam 105 for thermal insulation.

In some embodiments, in addition to the battery cell 100, other components can also be disposed in the first cavity 101a. For example, the first expansion beam B1 divides the internal space of the housing 101 into the first cavity 101a and the second cavity 101b, and a second expansion beam B2 can also be disposed in the first cavity 101a, with all battery cells 100 sandwiched between the first expansion beam B1 and the second expansion beam B2. For another example, the expansion beam 105 is configured as the first expansion beam B1, and a second expansion beam B2 and a third expansion beam B3 can also be disposed in the first cavity 101a, with the third expansion beam B3 located between the first expansion beam B1 and the second expansion beam B2, and a battery cell 100 disposed between the first expansion beam B1 and the third expansion beam B3, and a battery cell 100 disposed also disposed between the second expansion beam B2 and the third expansion beam B3.

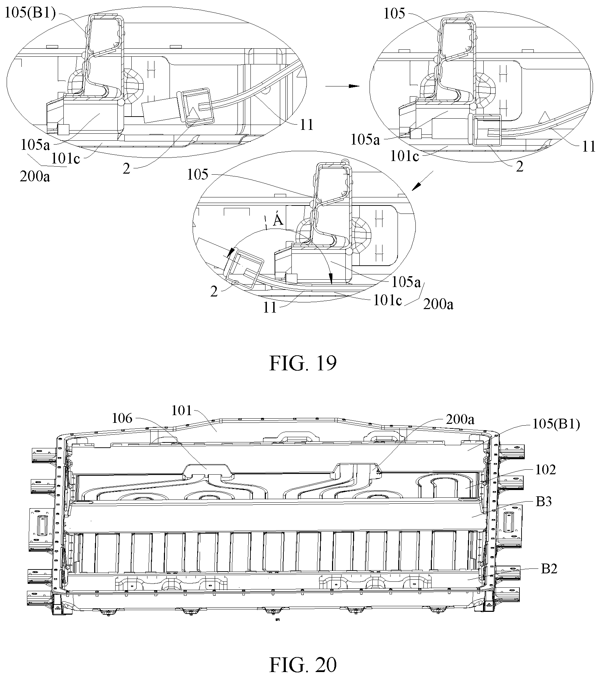

Referring to FIGs. 6 and 19, in some embodiments, the expansion beam 105 has a first recess 105a, and/or a wall of the housing 101 has a second recess 101c, where the first recess 105a and/or the second recess 101c forms the avoidance channel 200a. For example, the expansion beam 105 has the first recess 105a, and the wall of the housing 101 is not provided with the second recess 101c, and the avoidance channel 200a is formed only at the first recess 105a; or the expansion beam 105 is not provided with the first recess 105a, and the wall of the housing 101 has the second recess 101c, and the avoidance channel 200a is formed only at the second recess 101c; or the expansion beam 105 has the first recess 105a, and the wall of the housing 101 has the second recess 101c, and the first recess 105a and the second recess 101c cooperate to form the avoidance channel 200a.

In the above solution, the wall of the housing 101 can be understood as the wall of the housing 101 corresponding to the first heat exchange member 102. For example, the first heat exchange member 102 is disposed between the bottom wall 1011a of the housing 101 and the battery cell 100, at least one avoidance channel 200a is formed between the bottom wall 1011a of the housing 101 and the expansion beam 105, and the first heat exchange member 102 passes through the corresponding avoidance channel 200a. For another example, the first heat exchange member 102 is disposed between the top wall of the housing 101 and the battery cell 100, the avoidance channel 200a is formed between the top wall of the housing 101 and the expansion beam 105, and the first heat exchange member 102 passes through the corresponding avoidance channel 200a. For yet another example, the first heat exchange member 102 is disposed between the side wall of the housing 101 and the battery cell 100, an avoidance channel 200a is formed between the side wall of the housing 101 and the expansion beam 105, and the first heat exchange member 102 passes through the corresponding avoidance channel 200a.

In the above solution, the wall of the housing 101 can be understood as the wall of the housing 101 corresponding to the first heat exchange member 102. For example, the first heat exchange member 102 is disposed between the bottom wall 1011a of the housing 101 and the battery cell 100, the avoidance channel 200a is formed between the bottom wall 1011a of the housing 101 and the expansion beam 105, and the first heat exchange member 102 passes through one or more corresponding avoidance channels 200a. For another example, the first heat exchange member 102 is disposed between the top wall of the housing 101 and the battery cell 100, the avoidance channel 200a is formed between the top wall of the housing 101 and the expansion beam 105, and the first heat exchange member 102 passes through one or more corresponding avoidance channels 200a. For yet another example, the first heat exchange member 102 is disposed between the side wall of the housing 101 and the battery cell 100, the avoidance channel 200a is formed between the side wall of the housing 101 and the expansion beam 105, and the first heat exchange member 102 passes through one or more corresponding avoidance channels 200a. It can be seen that the first heat exchange member 102 and its corresponding avoidance channel 200a can be located on the same side of the battery cell 100, which facilitates the passing through and assembly of the first heat exchange member 102. The first heat exchange member 102 can correspond to one or more avoidance channels 200a.

In the above technical solution, forming the avoidance channel 200a with the first recess 105a and/or the second recess 101c facilitates the formation of the avoidance channel 200a is facilitated, and helps to offer as required the avoidance channel 200a with a suitable cross-sectional area so as to allow it to accommodate the passing-through portion of the first heat exchange member 102, so that the cross-sectional area of the avoidance channel 200a can be appropriately reduced while ensuring the smooth passing-through of the first heat exchange member 102, which is beneficial for reducing the difficulty of forming the avoidance channel 200a, and/or reducing the weakening of the expansion beam 105.

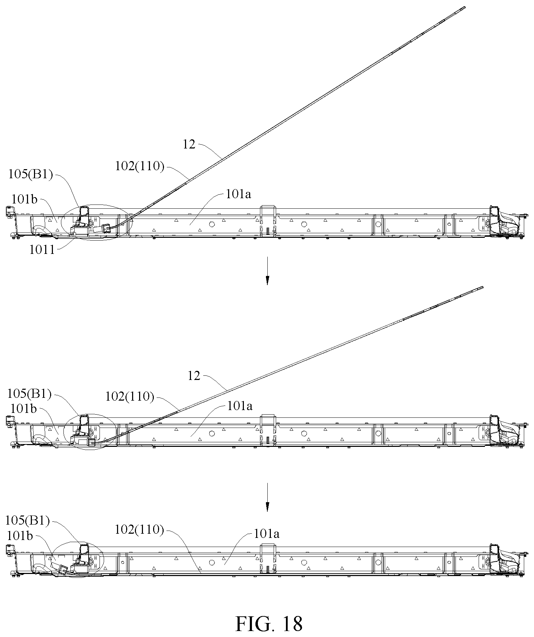

Referring to FIGs. 18 and 19, in some embodiments, portions of the first heat exchange member 102 located on two opposite sides of the expansion beam 105 are connected at an obtuse angle, meaning that an included angle α between the portions of the first heat exchange member 102 located on two opposite sides of the expansion beam 105 is an obtuse angle.

In the above technical solution, by connecting the portions of the first heat exchange member 102 located on two opposite sides of the expansion beam 105 at an obtuse angle, during the assembly process of the first heat exchange member 102, the passing-through portion of the first heat exchange member 102 first aligns with the avoidance channel 200a. At this time, the first heat exchange member 102 is generally tilted. As the first heat exchange member 102 passes through, the tilt angle of the first heat exchange member 102 gradually decreases until the first heat exchange member 102 completes passing-through. At this time, most of the first heat exchange member 102 fits against the corresponding wall of the housing 101, which facilitates the passing-through of the first heat exchange member 102 and is beneficial for improving the ease of installation of the first heat exchange member 102.

It can be seen that the above solution is particularly suitable for assembling the first heat exchange member 102 onto the housing 101 after the expansion beam 105 and the housing 101 have been assembled. For example, after the expansion beam 105 and the housing 101 have been welded, the expansion beam 105 and the housing 101 are electrocoated together, and the first heat exchange member 102 is installed after electrocoating. Certainly, in other embodiments of this application, the first heat exchange member 102 can alternatively be assembled onto the housing 101 first, and then the expansion beam 105 and the housing 101 are assembled.

Certainly, in other embodiments, the included angle α can alternatively be a straight angle, as shown in FIG. 10.

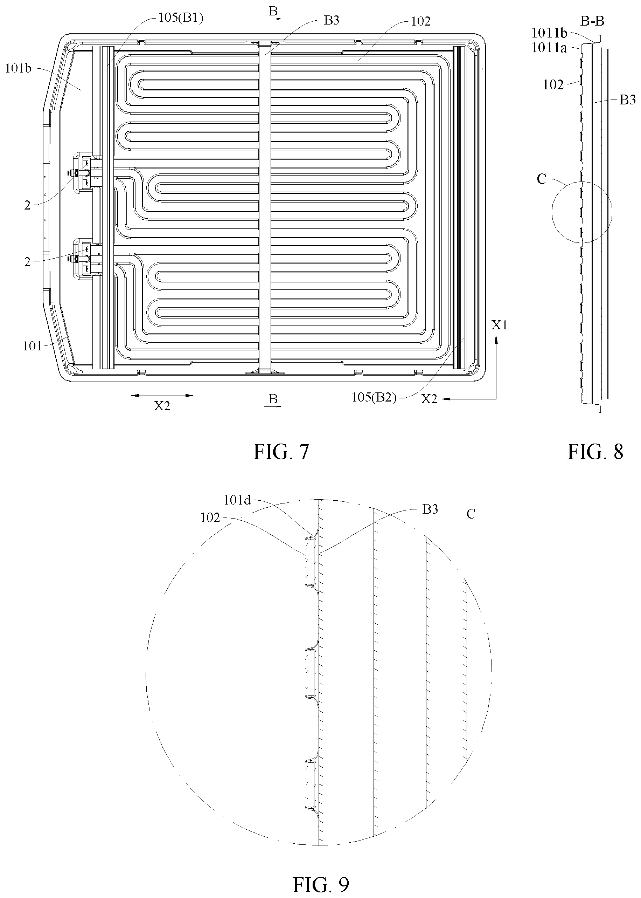

Referring to FIG. 7, in some embodiments, the first heat exchange member 102 includes a heat exchange tube 1 and a current collector 2, where a heat exchange flow passage 10 is defined within the heat exchange tube 1, an end portion 11 of the heat exchange flow passage 10 passes through a corresponding avoidance channel 200a, the current collector 2 corresponds one-to-one with the avoidance channel 200a, the current collector 2 communicates with the end portion 11 of the heat exchange flow passage 10, and the current collector 2 is disposed in the second cavity 101b. For example, the current collector 2 can communicate with multiple end portions 11 passing through the corresponding avoidance channel 200a, and these multiple end portions 11 can belong to the same heat exchange tube 1 or to different heat exchange tubes 1. The heat exchange flow passage 10 has two end portions 11. When one of the two end portions 11 is used for fluid inlet and the other is used for fluid outlet, the two end portions 11 of the same heat exchange flow passage 10 can pass through the same avoidance channel 200a, or can pass through different avoidance channels 200a respectively.

The current collector 2 communicates with interfaces of a plurality of end portions 11 of the corresponding avoidance channel 200a, or the current collector 2 separates interfaces of a plurality of the end portions 11 of the corresponding avoidance channel 200a into a plurality of independent flow channels. For example, a plurality of end portions 11 passing through the avoidance channel 200a are all used for fluid inlet, or all used for fluid outlet, and the current collector 2 communicates with interfaces of a plurality of end portions 11 of the avoidance channel 200a, so that the medium in the current collector 2 is distributed to the plurality of end portions 11, or the medium flowing out from the plurality of end portions 11 converges in the current collector 2. When at least one of the plurality of end portions 11 passing through the avoidance channel 200a is used for fluid inlet, and at least one of the remaining end portions is used for fluid outlet, the current collector 2 separates the interfaces of the plurality of end portions 11 of the avoidance channel 200a into a plurality of independent flow channels, where at least one flow channel is used to provide a medium to the end portion 11, and at least one of the remaining flow channels is used to collect a medium flowing out from the end portion 11.

For example, as shown in FIG. 4, when there is one heat exchange tube 1, there is one current collector 2, and the two end portions 11 of the heat exchange flow passage 10 both communicate with the current collector 2. In this case, two independent flow channels are defined within the current collector 2, and the two flow channels respectively communicate with the two end portions 11 of the heat exchange flow passage 10. Alternatively, when there are multiple heat exchange tubes 2, there is one current collector 2, and the two end portions 11 of each heat exchange flow passage 10 both communicate with the current collector 2. Two independent flow channels are also defined within the current collector 2, where one flow channel communicates with one end portion 11 of each heat exchange flow passage 10, and the other flow channel communicates with the other end portion of each heat exchange flow passage 10. In this case, multiple heat exchange flow passages 10 are arranged in parallel. Alternatively, as shown in FIG. 7, when there are multiple heat exchange tubes 2, there are two current collectors 2, and all end portions 11 of heat exchange flow passages 10 used for fluid inlet communicate with one of the current collectors 2, and all end portions 11 of heat exchange flow passages 10 used for fluid outlet communicate with the other current collector 2. Alternatively, when there are multiple heat exchange tubes 2, there are two current collectors 2, and the two end portions 11 of the heat exchange flow passage 10 are respectively a first end portion 11a and a second end portion 11b. The first end portion 11a is used for fluid inlet, and the second end portion 11b is used for fluid outlet. The first end portion 11a of at least one heat exchange flow passage 10 and the second end portion 11b of at least one heat exchange flow passage 10 are both communicate with one of the current collectors 2, and the second end portion 11b of at least one heat exchange flow passage 10 and the first end portion 11a of at least one heat exchange flow passage 10 both extend to the other current collector 2.

In the above technical solution, configuring the first heat exchange member 102 to include the heat exchange tube 1 and the current collector 2 facilitates flexible configuration of the first heat exchange member 102 by adjusting at least one of the number of heat exchange tubes 1 and the number of current collectors 2. In addition, the disposition of the current collector 2 facilitates improvement in the overall structural stability and reliability of the first heat exchange member 102 on the premise of ensuring normal circulation of the medium within each heat exchange tube 1.

Certainly, in other embodiments of this application, the first heat exchange member 102 can alternatively include the heat exchange tube 1, but not the current collector 2.

Referring to FIGs. 18 and 19, in some embodiments, the avoidance channel 200a is configured to allow the corresponding current collector 2 to pass through. For example, after the expansion beam 105 and the housing 101 have been assembled, the avoidance channel 200a is formed between the expansion beam 105 and the housing 101. During the assembly of the first heat exchange member 102, the current collector 2 can move from a side of the expansion beam 105 corresponding to the first cavity 101a through the avoidance channel 200a to a side of the expansion beam 105 corresponding to the second cavity 101b.

It can be understood that in the above solution, the heat exchange tube 1 and the current collector 2 can be fixedly connected, and after the expansion beam 105 and the housing 101 are assembled, the structure obtained by connecting the heat exchange tube 1 and the current collector 2 is assembled to the housing 101. Obviously, the above installation is not prone to restrict the operating space for connecting the heat exchange tube 1 and the current collector 2 (for example, welding the heat exchange tube 1 and the current collector 2) by the housing 101 and the expansion beam 105, which is beneficial for improving the convenience of connecting the heat exchange tube 1 and the current collector 2.

In the above technical solution, configuring the avoidance channel 200a to allow the corresponding current collector 2 to pass through is convenient to provide sufficient operating space for connecting the heat exchange tube 1 and the current collector 2, which facilitates the connection operation of the heat exchange tube 1 and the current collector 2.

Referring to FIGs. 8 and 9, in some embodiments, a wall of the housing 101 is formed with a second recess 101c, where the second recess 101c forms at least part of the avoidance channel 200a, and a portion of the first heat exchange member 102 passing through the avoidance channel 200a is disposed within the second recess 101c. The expansion beam 105 abuts a part of the wall of the housing 101 other than the second recess 101c; or the expansion beam 105 is spaced apart from a part of the wall of the housing 101 other than the second recess 101c.

In the above technical solution, by configuring the expansion beam 105 to abut the part of the wall of the housing 101 other than the second recess 101c, for the expansion beam 105 and the above wall of the housing 101, at the passing-through location of the first heat exchange member 102, the expansion beam 105 is spaced apart from the wall of the housing 101, that is, the expansion beam 105 is spaced apart from the second recess 101c, so as to avoid the first heat exchange member 102 while achieving thermal insulation between the expansion beam 105 and the first heat exchange member 102. At the location where the first heat exchange member 102 does not pass through, the expansion beam 105 abuts the wall of the housing 101, that is, the expansion beam 105 is flush with the wall of the housing 101, which facilitates increasing the contact area between the expansion beam 105 and the housing 101, thereby helping to improve the installation reliability of the expansion beam 105. Configuring the expansion beam 105 to be spaced apart from the part of the wall of the housing 101 other than the second recess 101c is beneficial to further increasing the spacing between the entire expansion beam 105 and the first heat exchange member 102, which facilitates improving the thermal resistance between the entire expansion beam 105 and the first heat exchange member 102, reduces the heat or cold transferred from the first heat exchange member 102 to the expansion beam 105, and facilitates improving the energy utilization rate of the first heat exchange member 102.

Referring to FIGs. 8 and 9, in some embodiments, the battery 200 further includes a third expansion beam B3, where the third expansion beam B3 is disposed in the first cavity 101a. Battery cells 100 are respectively disposed on two opposite sides of the third expansion beam B3, the portion of the first heat exchange member 102 located in the first cavity 101a passes through the avoidance space between the third expansion beam B3 and the housing 101, so that a part of the first heat exchange member 102 is disposed on two opposite sides of the third expansion beam B3. The first heat exchange member 102 is spaced apart from the third expansion beam B3, so that the first heat exchange member 102 and the third expansion beam B3 are thermally insulated from each other.

Illustratively, the housing 101 is formed with a third recess 101d, and/or the third expansion beam B3 is formed with a fourth recess, where the third recess 101d and/or the fourth recess forms the avoidance space.

Illustratively, the wall of the housing 101 is formed with a third recess 101d, where the third recess 101d forms at least part of the avoidance space, and the portion of the first heat exchange member 102 passing through the avoidance space is disposed within the third recess 101d. The third expansion beam B3 abuts a part of the wall of the housing 101 other than the third recess 101d; or the third expansion beam B3 is spaced apart from a part of the wall of the housing 101 other than the third recess 101d.

Referring to FIG. 6, in some embodiments, the battery 200 further includes a thermal insulation member 107, where the thermal insulation member 107 includes a first thermal insulation portion 1071, and the first thermal insulation portion 1071 is disposed between the wall surface of the expansion beam 105 facing towards the avoidance channel 200a and the first heat exchange member 102, so as to fill at least part of the gap between the wall surface of the expansion beam 105 facing towards the avoidance channel 200a and the first heat exchange member 102.

In the above technical solution, by disposing the first thermal insulation portion 1071 between the wall surface of the expansion beam 105 facing towards the avoidance channel 200a and the first heat exchange member 102, the first thermal insulation portion 1071 corresponds to the second recess 101c, so as to further increase the thermal resistance between the expansion beam 105 and the first heat exchange member 102 through the thermal insulation member 107.

Certainly, in other embodiments of this application, the thermal insulation member 107 may not be provided. In this case, the expansion beam 105 and the first heat exchange member 102 can be thermally insulated by air, and/or when the first heat exchange member 102 is bonded to the housing 101 with structural adhesive, the structural adhesive will overflow to the side of the first heat exchange member 102 facing towards the expansion beam 105. The structural adhesive has a certain thermal insulation capacity and can also increase the thermal resistance between the first heat exchange member 102 and the expansion beam 105.

Referring to FIG. 6, in some embodiments, the thermal insulation member 107 further includes a second thermal insulation portion 1072, where the second thermal insulation portion 1072 is disposed between a part of the wall of the housing 101 other than the second recess 101c and the expansion beam 105.

It can be understood that the second recess 101c can be configured to accommodate at least one end portion 11 of the first heat exchange member 102. Illustratively, multiple spaced-apart second recesses 101c are formed at the position of the housing 101 corresponding to the avoidance channel 200a, and each second recess 101a accommodates one end portion 11. Multiple first thermal insulation portions 1071 and multiple second thermal insulation portions 1072 are provided, where the multiple first thermal insulation portions 1071 and the multiple second thermal insulation portions 1072 are alternately arranged one by one along the length direction of the expansion beam 105.

In the above solution, disposing the second thermal insulation portion 1072 between the part of the wall of the housing 101 other than the second recess 101c and the expansion beam 105 is convenient to sandwich the thermal insulation member 107 between the housing 101 and the expansion beam 105, and facilitates reliable installation of the thermal insulation member 107 through the fixation of the expansion beam 105 and the housing 101. Thus, this allows the thermal insulation member 107 to provide a relatively flat mating surface for the connection of the housing 101 and the expansion beam 105, and is beneficial to reducing the depth of the second recess 101c, thereby improving the convenience of forming the second recess 101c.

Referring to FIG. 6, in some embodiments, the expansion beam 1050 is further provided with a first fixing member 1081, and at least part of the first fixing member 1081 is located within the expansion beam 1050; and the battery 200 further includes a second fixing member 1082, the second fixing member 1082 passes through the housing 101, the second thermal insulation portion 1072, and the expansion beam 105, and the second fixing member 1082 is connected to the first fixing member 1081.

In the above technical solution, by disposing the at least part of the first fixing member 1081 within the expansion beam 105, and by passing the second fixing member 1082 through the housing 101, the second thermal insulation portion 1072, and the expansion beam 105 and connecting it to the first fixing member 1081, the housing 101, the thermal insulation member 107, and the expansion beam 105 are fixed by a simple fixing manner, and the reliable installation of the thermal insulation member 107 is achieved. In addition, the second fixing member 1082 can be installed along a direction in which the thermal insulation member 107 faces towards the expansion beam 105, allowing for sufficient operating space during the assembly of the second fixing member 1082, and improving assembly convenience. In addition, the second fixing member 1082 passing through the second thermal insulation portion 1072 facilitates spacing the second fixing member 1082 apart from the first heat exchange member 102, so that the arrangement of the second fixing member 1082 does not affect the first heat exchange member 102.

Illustratively, the first fixing member 1081 is a rivet nut, and the second fixing member 1082 is a threaded fastener (for example, a bolt). The housing 101 is formed with a first mounting hole 1011d, the second thermal insulation portion 1072 is formed with a second mounting hole 1072a, and the expansion beam 105 is formed with a third mounting hole 105c. The head of the first fixing member 1081 mates with the second mounting hole 1072a, the first fixing member 1081 passes through the third mounting hole 105c such that a portion of the first fixing member 1081 extends into the expansion beam 105, and the second fixing member 1082 passes through the first mounting hole 1011d and threadedly mates with the portion of the first fixing member 1081 extending into the expansion beam 105, causing the above portion of the first fixing member 1081 to deform and be riveted onto the expansion beam 105. In addition, the first fixing member 1081 and the second fixing member 1082 are threadedly connected. It can be understood that the above arrangement can achieve sealing of the opening position of the housing 101 through corresponding sealing means, including but not limited to providing a gasket 1083 between the head of the second fixing member 1082 and the housing 101.

It can be understood that the above embodiments of this application regarding the thermal insulation arrangement of the expansion beam 105 that divides the internal space of the housing 101 into the first cavity 101a and the second cavity 101b are all applicable to other expansion beams of the battery 200.

For example, the first expansion beam B1 divides the internal space of the housing 101 into a first cavity 101a and a second cavity 101b, and the battery 200 further includes a second expansion beam B2, where the second expansion beam B2 is disposed in the first cavity 101a, and all battery cells 100 are sandwiched between the first expansion beam B1 and the second expansion beam B2. In the direction from the first cavity 101a towards the second cavity 101b, the first heat exchange member 102 is spaced apart from the second expansion beam B2, so as to achieve thermal insulation between the first heat exchange member 102 and the second expansion beam B2, that is, the entire first heat exchange member 102 is spaced apart on the side of the second expansion beam B2 facing towards the second cavity 101b. It can be understood that a thermal insulation member 107 may disposed or a thermal insulation member 107 may not be disposed between the second expansion beam B2 and the wall of the housing 101 on which the first heat exchange member 102 is disposed.

For another example, the battery 200 further includes a second expansion beam B2 and a third expansion beam B3, where the second expansion beam B2 and the third expansion beam B3 are both disposed in the first cavity 101a, and the third expansion beam B3 is located between the first expansion beam B1 and the second expansion beam B2. A battery cell 100 is disposed between the first expansion beam B1 and the third expansion beam B3, and a battery cell 100 is also disposed between the second expansion beam B2 and the third expansion beam B3. A part of the first heat exchange member 102 is disposed on two opposite sides of the third expansion beam B3. In this case, an avoidance channel can be formed between the third expansion beam B3 and the housing 101, and the avoidance channel communicates two opposite sides of the third expansion beam B3. For example, the housing 101 is formed with a third recess 101d, and/or the third expansion beam B3 is formed with a fourth recess, where the third recess 101d and/or the fourth recess forms the avoidance channel. The first heat exchange member 102 passes through the avoidance channel, and the portion of the first heat exchange member 102 passing through the avoidance channel is spaced apart from the third expansion beam B3, so as to achieve thermal insulation between the first heat exchange member 102 and the third expansion beam B3.

Illustratively, the thermal insulation manner between the first heat exchange member 102 and the third expansion beam B3 is the same as or different from the thermal insulation manner between the first heat exchange member 102 and the expansion beam 105. Illustratively, the wall of the housing 101 is formed with a third recess 101d, where the third recess 101d forms at least part of the avoidance channel, and the portion of the first heat exchange member 102 passing through the avoidance channel is disposed within the third recess 101d. The third expansion beam B3 abuts a part of the wall of the housing 101 other than the third recess 101d; or the third expansion beam B3 is spaced apart from a part of the wall of the housing 101 other than the third recess 101d.

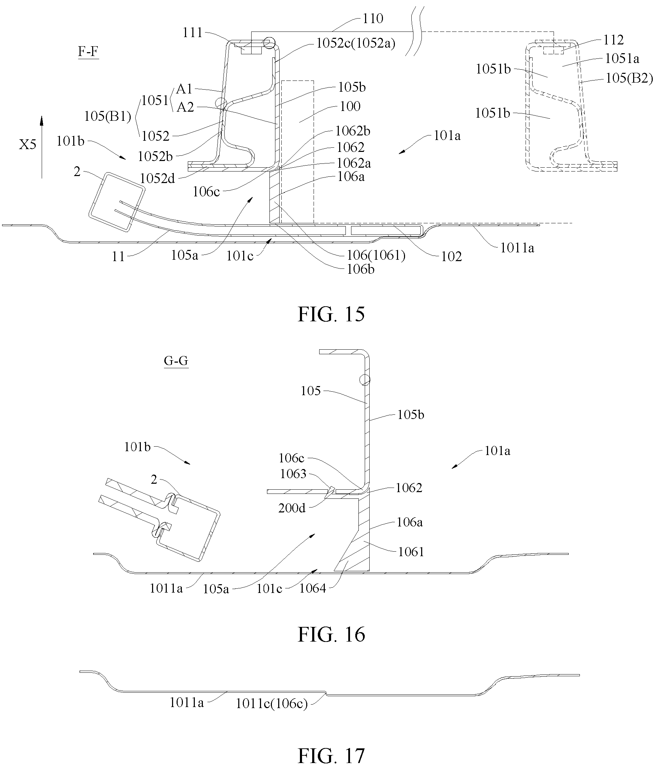

Referring to FIGs. 15, 16, and 20, in some embodiments, the expansion beam 105 has a first recess 105a, where the first recess 105a is configured to form at least part of the avoidance channel 200a, the expansion beam 105 further has a first mating surface 105b abutting the battery cell 100, and the housing assembly 1010 further includes a bearing member 106, where the bearing member 106 is disposed in the avoidance channel 200a, the bearing member 106 has a second mating surface 106a abutting the battery cell 100, and the first mating surface 105b and the second mating surface 106a are arranged flush. For example, the first mating surface 105b and the second mating surface 106a can be located in the same plane. The bearing member 106 has a slot 106b for avoiding the first heat exchange member 102, where the slot 106b runs through an outer peripheral side of the bearing member 106, and the slot 106b can avoid the portion of the first heat exchange member 102 passing through the corresponding avoidance channel 200a, which facilitates smooth installation of the bearing member 106 after the first heat exchange member 102 is installed.

It can be understood that the first mating surface 105b can be in direct contact with the battery cell 100, or the first mating surface 105b can indirectly abut the battery cell 100. Similarly, the second mating surface 106a can be in direct contact with the battery cell 100, or the second mating surface 106a can indirectly abut the battery cell 100.

Illustratively, the first heat exchange member 102 includes at least one heat exchange tube 1, where a heat exchange flow passage 10 is defined within the heat exchange tube 1, and each heat exchange flow passage 10 has two end portions 11. The portion of the first heat exchange member 102 passing through the corresponding avoidance channel 200a corresponds to a plurality of end portions 11, the bearing member 106 corresponds one-to-one with the avoidance channel 200a, and at least one slot 106b is formed on the bearing member 106, where the slot 106b is configured to avoid one or more end portions 11.

In the above technical solution, by disposing the bearing member 106 in the avoidance channel 200a and arranging the second mating surface 106a flush with the first mating surface 105b, the bearing member 106 can bear the expansion force of the battery cell 100 together with the expansion beam 105, which is beneficial for reducing the risk of lithium precipitation caused by excessive deformation differences of the battery cell 100 at the avoidance channel 200a location and other locations, and also beneficial for reducing the risk of shell rupture and electrolyte leakage caused by uneven force on the battery cell 100, thereby improving the use reliability of the battery 200.

For example, the slot 106b can be located on the side of the bearing member 106 away from the wall surface of the expansion beam 105 corresponding to the avoidance channel 200a, and the side of the slot 106b away from the expansion beam 105 is open. For example, the first heat exchange member 102 is disposed on the bottom wall 1011a of the housing 101, the expansion beam 105 is disposed on the upper side of the bottom wall 1011a, and the lower side of the slot 106b is open. In this case, the bearing member 106 can separate the first heat exchange member 102 from the expansion beam 105, which is beneficial for increasing the thermal resistance between the first heat exchange member 102 and the expansion beam 105, and is beneficial for reducing the heat or cold transferred from the first heat exchange member 102 to the expansion beam 105.

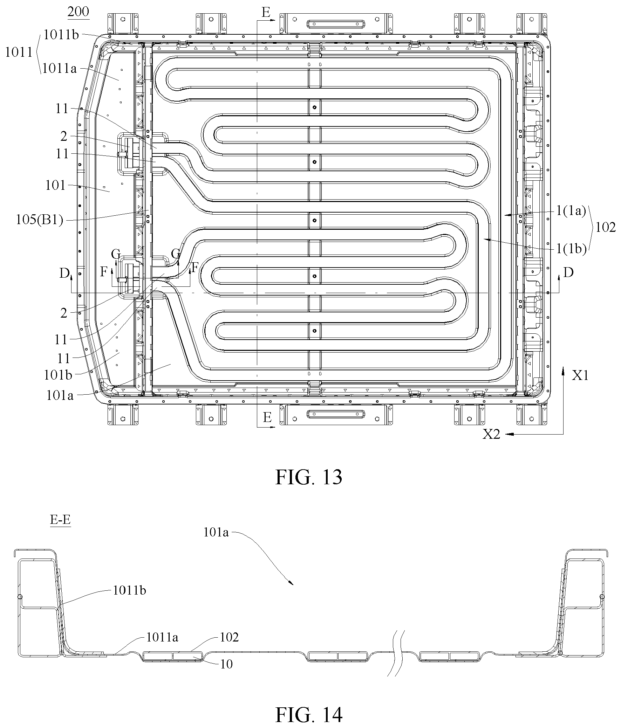

Referring to FIGs. 14 and 15, in some embodiments, a stop portion 106c is formed on at least one of the expansion beam 105 and the housing 101, where the stop portion 106c abuts the bearing member 106, so as to restrict movement of the bearing member 106 in a direction from the first cavity 101a towards the second cavity 101b. It can also be understood that the stop portion 106c is in direct contact with the bearing member 106, or the stop portion 106c indirectly abuts the bearing member 106.

In the above technical solution, by forming the stop portion 106c on at least one of the expansion beam 105 and the housing 101, to restrict the movement of the bearing member 106 in the direction from the first cavity 101a towards the second cavity 101b, the reliable positioning of the bearing member 106 in the width direction of the expansion beam 105 (for example, the second direction X2 in FIG. 3) is achieved. In addition, the stop portion 106c can resist the expansion force applied by the battery cell 100 to the bearing member 106, which is beneficial for improving the bearing capacity of the bearing member 106, so that the bearing member 106 can stably bear the expansion force of the battery cell 100, reducing the probability of the bearing member 106 moving towards the second cavity 101b under the action of the battery cell 100. If at least one of the expansion beam 105 and the housing 101 is also connected and fixed to the bearing member 106 in another manner, for example, at least one of the expansion beam 105 and the housing 101 is bonded to the bearing member 106, the above solution is beneficial for reducing the force exerted on the another connection manner between at least one of the expansion beam 105 and the housing 101 and the bearing member 106, which is beneficial for improving the arrangement reliability and stability of the bearing member 106.

Referring to FIGs. 14 and 16, in some embodiments, the stop portion 106c is formed on a side of the expansion beam 105 facing towards the first cavity forms at a location of the avoidance channel, that is, the end that is of the portion of the expansion beam 105 corresponding to the avoidance channel 200a and that faces towards the first cavity 101a forms the stop portion 106c; and/or a stop step 1011c protruding towards the expansion beam 105 is formed on a wall of the housing 101 on which the first heat exchange member 102 is disposed, where the stop step 1011c forms the stop portion 106c.

Illustratively, as shown in FIG. 14, the expansion beam 105 has a first recess 105a, and at least part of the edge portion of the first recess 105a corresponding to the side where the first cavity 101a is located forms the stop portion 106c; and/or as shown in FIG. 16, the wall of the housing 101 has a second recess 101c, and the bottom wall of the second recess 101c is formed with the stop step 1011c.

In the above technical solution, forming the stop portion 106c on the side of the expansion beam 105 facing towards the first cavity 101a at the location of the avoidance space 200a is convenient to use the inherent structure of the expansion beam 105 to define the stop portion 106c for limiting the bearing member 106, without requiring additional separate arrangement, which is beneficial for simplifying the structure of the expansion beam 105. In addition, the stop portion 106c is located on the side of the expansion beam 105 facing towards the first cavity 101a, which is convenient to match the installation manner of the bearing member 106 "mating with the avoidance channel 200a along the direction from the first cavity 101a towards the second cavity 101b", so that the stop portion 106c does not interfere with the assembly of the bearing member 106. This is beneficial for improving assembly convenience. Forming the stop step 1011c protruding towards the expansion beam 105 on the wall of the housing 101 is convenient to use the inherent structure of the housing 101 to define the stop portion 106c for limiting the bearing member 106, without requiring additional separate arrangement, where the stop step 1011c forms the stop portion 106c. This is beneficial for simplifying the structure of the housing 101, and the arrangement of the stop step 1011c does not affect the sealing performance of the inherent structure of the housing 101.

Illustratively, the first recess 105a of the expansion beam 105 forms at least part of the avoidance channel 200a, and the end of the first recess 105a facing towards the first cavity 101a forms the stop portion 106c, which is beneficial for increasing the contact area between the expansion beam 105 and the bearing member 106, and facilitates further improving the disposition reliability and bearing capacity of the bearing member 106; and/or the recessed second recess 101c is formed on the wall of the housing 101 on which the first heat exchange member 102 is disposed, and the stop step 1011c is formed on the groove wall of the second recess 101c.

Referring to FIG. 14, in some embodiments, in a cross-section of the expansion beam 105, the stop portion 106c on the expansion beam 105 is formed as an arc-shaped structure, and the cross-section of the expansion beam 105 is perpendicular to a length direction of the expansion beam 105 (for example, the first direction X1 in FIG. 3).

In the above technical solution, configuring the stop portion 106c on the expansion beam 105 to be arc-shaped in the cross-section of the expansion beam 105, on the premise that the stop portion 106c can restrict the movement of the bearing member 106, can also, to a certain extent, avoid the portion of the bearing member 106 that mates with the stop portion 106c. In addition, the stop portion 106c being located on the side of the expansion beam 105 facing towards the first cavity 101a is convenient to alleviate the situation that the bearing member 106, due to its mating with the stop portion 106c, tends to protrude from the first mating surface 105b towards the first cavity 101a, thereby facilitating the flush arrangement of the second mating surface 106a and the first mating surface 105b. In addition, when the portion of the expansion beam 105 corresponding to the stop portion 106c is an integrally formed bent plate, the stop portion 106c can be located at the bending position of the plate, so that the stop portion 106c can be formed directly during the forming process of the bent plate, which is beneficial for reducing processing steps of the expansion beam 105, reducing processing difficulty, and improving production efficiency.

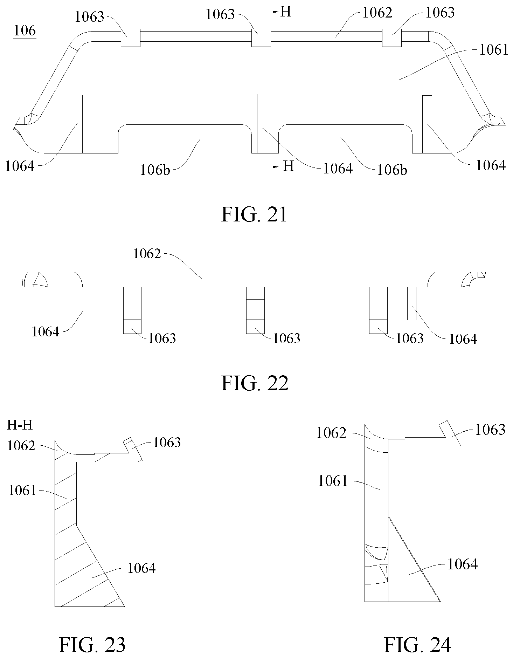

Referring to FIGs. 14, 15, and 21 to 24, in some embodiments, the bearing member 106 includes a plate body portion 1061 and a mating portion 1062, where a surface on a side of a thickness of the plate body portion 1061 forms the second mating surface 106a, and the second mating surface 106a is located on a side of the plate body portion 1061 facing towards the first cavity 101a. The slot 106b runs through two sides of the thickness of the plate body portion 1061. The mating portion 1062 is formed at an outer edge of the plate body portion 1061, and the mating portion 1062 abuts the expansion beam 105, so as to restrict movement of the bearing member 106 in a direction from the first cavity 101a towards the second cavity 101b. For example, the mating portion 1062 abuts the stop portion 106c on the expansion beam 105.

In the above technical solution, configuring the bearing member 106 to include the plate body portion 1061 and the mating portion 1062 is convenient for the plate body portion 1061 to provide a relatively flat second mating surface 106a with a large area, and improves the bearing member 106's ability to cover the avoidance space 200a. In addition, the mating portion 1062 can achieve positioning of the bearing member 106 and reliable installation of the bearing member 106, so that the bearing member 106 has a certain ability to withstand the expansion force of the battery cell 100, and the bearing member 106 has a simple structure and is easy to implement. In addition, since the mating portion 1062 abuts the expansion beam 105, if the expansion beam 105 deforms to some extent under the action of the battery cell 100, causing the first mating surface 105b to deviate from its original position and/or original posture, this is convenient for the mating portion 1062 to adapt to the deformation of the expansion beam 105, causing the second mating surface 106a of the bearing member 106 to adaptively adjust with the change of the first mating surface 105b, which to a certain extent facilitates keeping the second mating surface 106a and the first mating surface 105b always flush or slightly misaligned.

It can be understood that when the bearing member 106 includes the plate body portion 1061 and the mating portion 1062, if the housing 101 is also formed with the stop portion 106c, the plate body portion 1061 can abut the stop portion 106c on the housing 101. Certainly, when the bearing member 106 further includes the support portion 1064 described below, the stop portion 106c on the housing 101 can abut the support portion 106c.

Referring to FIG. 14, in some embodiments, the mating portion 1062 has a first surface 1062a and a second surface 1062b, where the first surface 1062a is formed as an arc-shaped surface recessed towards the second surface 1062b and the first surface 1062a mates with the expansion beam 105, the second surface 1062b is connected to the first surface 1062a, and the second surface 1062b is arranged flush with the second mating surface 106a. For example, the second surface 1062b and the second mating surface 106a are located on the same plane.

In the above technical solution, since the first surface 1062a is arc-shaped, configuring the first surface 1062a of the mating portion 1062 to abut the expansion beam 105 facilitates the limited mating of the bearing member 106 with the expansion beam 105, and facilitates ensuring that the second surface 1062b does not protrude from the second mating surface 106a towards the first cavity 101a, which does not affect the mating of the second mating surface 106a with the battery cell 100. Certainly, the second surface 1062b can alternatively abut the battery cell 100.

Illustratively, the first surface 1062a of the mating portion 1062 abuts the stop portion 106c of the expansion beam 105, and in a cross-section of the expansion beam 105, both the first surface 1062a and the stop portion 106c are arc-shaped.

Referring to FIG. 15, in some embodiments, at least one snap hole 200d is formed on the expansion beam 105, and the bearing member 106 further includes at least one snap hook portion 1063, where the snap hook portion 1063 is formed at an outer edge of the plate body portion 1061 and is located on a side of the plate body portion 1061 away from the second mating surface 106a, and the snap hook portion 1063 is snapped into the corresponding snap hole 200d. The snap hook portion 1063 and the mating portion 1062 are located on the same side of the plate body portion 1061, and both are located on a side of the plate body portion 1061 facing towards the expansion beam 105.

Illustratively, the first heat exchange member 102 is disposed on the bottom wall 1011a of the housing 101, the expansion beam 105 is disposed on the upper side of the bottom wall 1011a of the housing 101, the snap hole 200d is formed in the portion of the expansion beam 105 corresponding to the avoidance space 200a, and a part of the snap hook portion 1063 extends upward into the snap hole 200d.

In the above technical solution, snapping the snap hook portion 1063 of the bearing member 106 into the snap hole 200d in the expansion beam 105 facilitates the movement of the bearing member 106 in the direction from the second cavity 101b towards the first cavity 101a, which is beneficial for further improving the installation reliability of the bearing member 106 and alleviating the problem that the bearing member 106 is prone to detach from the avoidance channel along the direction from the second cavity 101b towards the first cavity 101a during the assembly process of the battery 200. For example, the above arrangement can achieve pre-positioning of the bearing member 106, which is beneficial for further improving the battery 200 assembly efficiency.

Illustratively, for a single snap hole 200d, the snap hole 200d can correspond to one or more snap hook portions 1063, so the number of snap holes 200d can be equal to or unequal to the number of snap hook portions 1063. Illustratively, multiple snap hook portions 1063 are spaced apart along the length direction of the expansion beam 105, so as to improve the pre-positioning reliability of the bearing member 106.

Illustratively, the snap hook portion 1063 is configured as an elastic snap hook portion 1063. In this case, the snap hook portion 1063 can include a cantilever portion and a hook portion, where the cantilever portion extends in the direction from the first cavity 101a towards the second cavity 101b, one end of the cantilever portion is connected to the plate body portion 1061, and the hook portion is disposed at the other end of the cantilever portion. During the assembly process of the bearing member 106, it cooperates with the avoidance space 200a along the direction from the first cavity 101a towards the second cavity 101b, the snap hook portion 1063 is pressed and deformed by the expansion beam 105, and the bearing member 106 continues to move towards the second cavity 101b until the snap hook portion 1063 is snapped into the snap hole 200d.

Referring to FIGs. 15, and 21 to 24, in some embodiments, the bearing member 106 further includes at least one support portion 1064, where the support portion 1064 is disposed on a side of the plate body portion 1061 away from the second mating surface 106a, the support portion 1064 is arranged to avoid the first heat exchange member 102, the support portion 1064 can be spaced apart from the slot 106b, and the support portion 1064 abuts the housing 101.

That the support portion 1064 is arranged to avoid the first heat exchange member 102 can be understood as an orthogonal projection of the support portion 1064 in the thickness direction of the plate body portion 1061 being outside an outer contour of an orthogonal projection of the groove wall of the slot 106b. Illustratively, the mating portion 1062 abuts the stop portion 106c of the expansion beam 105, and the support portion 1064 abuts the housing 101 (for example, the stop portion 106c on the housing 101 mentioned above).

In the above embodiment, providing the support portion 1064 is convenient to strengthen the plate body portion 1061 and improve the structural strength of the bearing member 106, and the support portion 1064 does not affect the abutting cooperation between the plate body portion 1061 and the battery cell 100. The support portion 1064 abutting the housing 101 facilitates distributing the force applied by the battery cell 100 to the bearing member 106 to the housing 101 through the support portion 1064, which is beneficial for further improving the installation reliability and bearing capacity of the bearing member 106. Moreover, the bearing member 106 achieves mating with the expansion beam 105 and the housing 101 respectively through the mating portion 1062 and the support portion 1064, which facilitates providing relatively balanced support and positioning for the entire plate body portion 1061. In addition, since the support portion 1064 is arranged to avoid the slot 106b, the arrangement of the support portion 1064 does not interfere with the first heat exchange member 102, which facilitates convenient assembly of the bearing member 106.

Illustratively, the support portion 1064 can be configured such that: the support portion 1064 abuts the housing 101 in the direction from the first cavity 101a towards the second cavity 101b, and/or the support portion 1064 abuts the housing 101 in the thickness direction of the first heat exchange member 102 (for example, the fifth direction X5 in FIG. 7, where the fifth direction X5 can be the height direction of the battery cell 100), that is, in the normal direction of the wall of the housing 101 on which the first heat exchange member 102 is disposed. For example, referring to FIGs. 7 and 10, the bottom wall 1011a of the housing 101 is provided with the first heat exchange member 102, the expansion beam 105 is disposed on the upper side of the bottom wall 1011a of the housing 101, the first cavity 101a and the second cavity 101b are sequentially arranged along the first direction X1, and the support portion 1064 can abut the bottom wall 1011a of the housing 101 in the second direction X2 (for example, the support portion 1064 abuts the stop step 1011c on the housing 101), and/or the support portion 1064 abuts the bottom wall 1011a of the housing 101 in the fifth direction X5. The first direction and the second direction both intersect the fifth direction. Illustratively, the first direction, the second direction, and the fifth direction are mutually perpendicular.

Illustratively, there are multiple support portions 1064, and each slot 106b is provided with at least one support portion 1064 on two sides along the length direction of the expansion beam 105 (for example, the first direction X1 in FIG. 1).

Referring to the figure, in some embodiments, a width of the support portion 1064 in a thickness direction of the plate body portion 1061 increases in a direction from the mating portion 1062 towards the first heat exchange member 102. The width of the end of the support portion 1064 facing towards the wall of the housing 101 on which the first heat exchange member 102 is disposed is the largest, and the width of the end of the support portion 1064 facing towards the mating portion 1062 is the smallest.

Illustratively, the first heat exchange member 102 is disposed between the bottom wall 1011a of the housing 101 and the battery cell 100, the expansion beam 105 is disposed on the upper side of the bottom wall 1011a, and the width of the support portion 1064 in the thickness direction of the plate body portion 1061 increases from top to bottom. For example, the support portion 1064 is roughly shaped as a triangular plate.

In the above technical solution, configuring the width of the support portion 1064 in the thickness direction of the plate body to increase in the direction from the mating portion 1062 towards the first heat exchange member 102 is convenient to use less material to increase the abutting contact area between the support portion 1064 and the housing 101, improving the mating reliability between the support portion 1064 and the housing 101, and balancing cost and bearing reliability.

Illustratively, when the bearing member 106 includes a plate body portion 1061, a mating portion 1062, a snap hook portion 1063, and a support portion 1064, the mating portion 1062 and the snap hook portion 1063 are located on the same side of the plate body portion 1061, and the snap hook portion 1063 and the support portion 1064 can be located on two opposite sides of the plate body portion 1061. While achieving positioning of the bearing member 106 in the width direction of the expansion beam 105, this can also restrict the rotation of the bearing member 106, which is beneficial for improving the stability of the bearing member 106 abutting the battery cell 100.

In some embodiments, the bearing member 106 is disposed between the first heat exchange member 102 and the expansion beam 105, such that the first heat exchange member 102 and the expansion beam 105 are spaced apart by the bearing member 106. In this case, a side of the slot 106b facing towards the wall of the housing 101 on which the first heat exchange member 102 is disposed is open. A thermal conductivity coefficient of the bearing member 106 is lower than a thermal conductivity coefficient of the expansion beam 105; and/or the bearing member 106 is spaced apart from the first heat exchange member 102, so as to achieve thermal insulation between the bearing member 106 and the first heat exchange member 102.

Illustratively, the first heat exchange member 102 is disposed on the bottom wall 1011a of the housing 101, the expansion beam 105 is disposed on the upper side of the bottom wall 1011a of the housing 101, the bearing member 106 is disposed in the avoidance space 200a, the lower side of the slot 106b is open, and the first heat exchange member 102 passes through the slot 106b. The bearing member 106 can separate the portion of the first heat exchange member 102 passing through the expansion beam 105 from the expansion beam 105.

In the above technical solution, disposing the bearing member 106 between the first heat exchange member 102 and the expansion beam 105, the thermal conductivity coefficient of the bearing member 106 being lower than the thermal conductivity coefficient of the expansion beam 105, and/or the bearing member 106 being spaced apart from the first heat exchange member 102 are beneficial to increasing the thermal resistance between the first heat exchange member 102 and the expansion beam 105, and reduce the heat exchange amount between the expansion beam and the first heat exchange member 102, which to a certain extent is beneficial for increasing the proportion of heat or cold transferred from the first heat exchange member 102 to the battery cell 100, thereby improving thermal management performance. In addition, when the bearing member 106 is spaced apart from the first heat exchange member 102, the risk of interference between the bearing member 106 and the first heat exchange member 102 during assembly of the bearing member 106 can be reduced, improving the convenience of installing the bearing member 106.

In some embodiments, a strength of a material of the bearing member 106 is at least 0.8 times a strength of a material of the expansion beam 105. For example, the strength of the material of the bearing member 106 is 0.8 times, 0.85 times, 0.9 times, 1 time, and the like the strength of the material of the expansion beam 105.

Illustratively, the material of the bearing member 106 and the material of the expansion beam 105 can be the same or different. For example, the expansion beam 105 is a metal part, and the bearing member 106 is a plastic part, without limitations.

In the above technical solution, setting the strength of the material of the bearing member 106 to be at least 0.8 times the strength of the material of the expansion beam 105 is convenient to ensure that the bearing member 106 itself has good bearing capacity, so as to reliably and stably withstand the expansion force of the battery cell 100.

Referring to FIG. 14, in some embodiments, the first heat exchange member 102 is disposed on a bottom wall 1011a of the housing 101, and an end of the second mating surface 106a facing towards the first heat exchange member 102 is arranged flush with an end of the battery cell 100 facing towards the corresponding first heat exchange member 102, or an end of the second mating surface 106a facing towards the first heat exchange member 102 is arranged adjacent to the first heat exchange member 102 as compared with the end of the battery cell 100 facing towards the corresponding first heat exchange member 102.

It can be seen that when the first heat exchange member 102 is disposed on the lower side of the battery cell 100, the lower end of the second mating surface 106a is arranged flush with the lower end of the battery cell 100, or the lower end of the second mating surface 106a is located below the lower end of the battery cell 100.

In the above technical solution, arranging the end of the second mating surface 106a facing towards the first heat exchange member 102 flush with the end of the battery cell 100 facing towards the corresponding first heat exchange member 102, or arranging the end of the second mating surface 106a facing towards the first heat exchange member 102 adjacent to the first heat exchange member 102 as compared with the end of the battery cell 100 facing towards the corresponding first heat exchange member 102 is convenient to ensure that the entire surface of the battery cell 100 facing towards the expansion beam 105 can be supported, which facilitates improving the uniformity of force exerted on the battery cell 100 when it undergoes expansion deformation, and alleviates problems such as lithium precipitation and electrolyte leakage caused by uneven force, thereby improving the use reliability of the battery 200.

Referring to FIG. 6, in some embodiments, the first heat exchange member 102 includes at least one heat exchange tube 1, where a heat exchange flow passage 10 is defined within the heat exchange tube 1, and the heat exchange tube 1 is a flat tube or an accordion tube. In this case, in a cross-section of the heat exchange tube 1, the thickness of the heat exchange tube 1 is less than the width of the heat exchange tube 1, and the cross-section of the heat exchange tube 1 is perpendicular to the central axis of the heat exchange tube 1.

In the above technical solution, configuring the heat exchange tube 1 to be a flat tube or an accordion tube is beneficial to reducing the space occupied by the heat exchange tube 1, and is convenient to use one thickness side of the heat exchange tube 1 to exchange heat with the battery cell 100, achieving a balance between volumetric energy density and thermal management for the battery 200. For example, the heat exchange tube 1 can be extruded, and the thickness of the heat exchange tube 1 can be as small as about 0.7 mm. In related art, a water-cooling plate structure is used, and the water-cooling plate typically includes two stacked plates. The two plates are welded and fixed to define flow channels. Therefore, the water-cooling plate usually has a large thickness, exceeding 2.4 mm. It can be seen that the above arrangement of this application can reduce the cost of the first heat exchange member 102, and reduce the space occupied by the first heat exchange member 102, which is beneficial for improving the energy density of the battery 200 even when the first heat exchange member 102 is disposed within the housing 101.

In embodiments of this application, an accordion tube can be understood as a flat tube with at least one partition structure added internally to divide the internal space of the flat tube into multiple flow channels, where two ends of each flow channel are connected to the inlet end and outlet end of the heat exchange tube 1 respectively. The multiple flow channels can be spaced apart along the width direction of the flat tube; or the multiple flow channels can be arranged in multiple rows and columns along the width direction and the thickness direction of the flat tube.

It can be understood that when the heat exchange tube 1 is a flat tube or an accordion tube, if the end portion 11 of the heat exchange tube 1 passes through the avoidance channel 200a between the expansion beam 105 and the housing 101, the above structure of the heat exchange tube 1 is beneficial for reducing the height of the avoidance channel 200a in the thickness direction of the heat exchange tube 1, thereby reducing the difficulty of forming the avoidance channel 200a, and/or reducing the weakening of the corresponding structure.

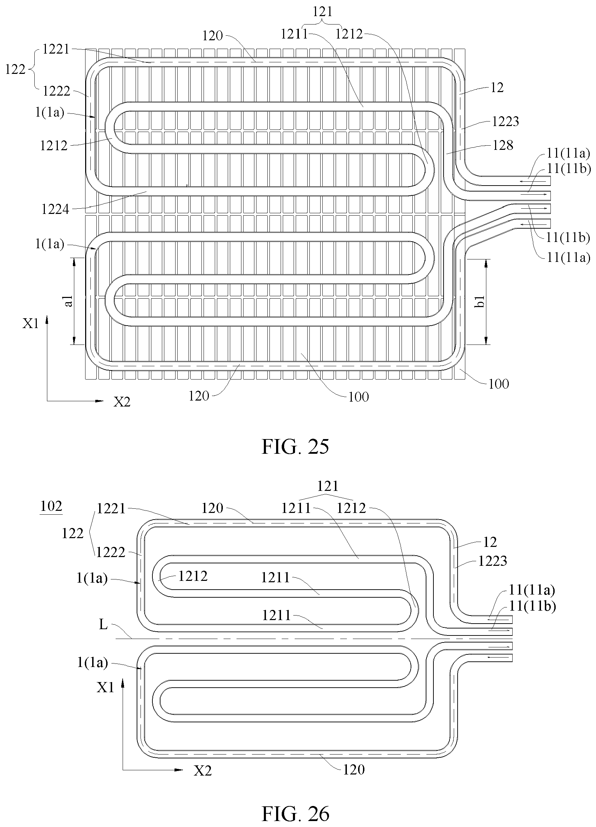

Referring to FIGs. 25 to 29, in some embodiments, the first heat exchange member 102 includes a first heat exchange tube 1a, where the first heat exchange tube 1a includes a first heat exchange section 121 and a second heat exchange section 122, the second heat exchange section 122 is bent to form a U-shaped region 120, the first heat exchange section 121 is bent and disposed within the U-shaped region 120, and the first heat exchange tube 121 is bent and connected to the second heat exchange section 122.

For example, the battery 200 may include multiple battery cells 100, and the first heat exchange tube 1a is configured to exchange heat with the multiple battery cells 100 of the battery 200, so that the temperature of the battery 200 can be maintained within a reliable operating temperature, achieving reliable operation of the battery 200.

That "the second heat exchange section 122 is bent to form a U-shaped region 120, and the first heat exchange section 121 is bent and disposed within the U-shaped region 120" aims to indicate that the second heat exchange section 122 is disposed at the peripheral outer circumference of the first heat exchange section 121, and can be arranged on at least three sides of the circumference of the first heat exchange section 121, and the second heat exchange section 122 can be arranged closer to the peripheral edge of the battery 200 than the first heat exchange section 121.

The second heat exchange section 122 is bent to form the U-shaped region 120, meaning that, in the direction from one end of the second heat exchange section 122 towards the other end, at least part of the second heat exchange section 122 extends along a U-shaped line, forming a U-shaped region 120 that takes the shape of U.

The first heat exchange section 121 is bent and disposed within the U-shaped region 120, meaning that the first heat exchange section 121 is arranged within the space enclosed by the second heat exchange section 122, and the first heat exchange section 121 extends along a non-linear path inside the second heat exchange section 122, and has at least one bending position.

It should be noted that this embodiment only defines that the first heat exchange section 121 is bent and disposed within the U-shaped region 120, without limiting the specific bending manner of the first heat exchange section 121. That is, the specific bending manner of the first heat exchange section 121 can be designed according to the heat exchange requirements of the battery 200. For example, the first heat exchange section 121 may extend along the length direction of the battery cell 100 (that is, the first direction X1 in FIG. 3), bend toward the width direction of the battery cell 100 (that is, the second direction X2 in FIG. 3) after extending to a certain length, and then continue to extend along the length direction of the battery cell 200 while bending in the width direction. Alternatively, the first heat exchange section 121 may extend along the width direction of the battery cell 100, bend toward the length direction of the battery cell 100 after extending to a certain length, and then continue to extend along the width direction of the battery cell 100 while bending in the length direction.

The first heat exchange section 121 and the second heat exchange section 122 are bent and connected, meaning that one end of the first heat exchange section 121 is connected to one end of the second heat exchange section 122, and the connection position between the first heat exchange section 121 and the second heat exchange section 122 is a bent non-linear structure. For example, the connection position between the first heat exchange section 121 and the second heat exchange section 122 can be bent into an arc segment.

Illustratively, the end of the first heat exchange section 121 away from the second heat exchange section 122 can be connected to one end portion 11, and the end of the second heat exchange section 122 away from the first heat exchange section 121 can be connected to the other end portion 11. Thus, when the first heat exchange tube 1a performs heat exchange, the heat exchange medium can flow from the first heat exchange section 121 to the second heat exchange section 122, or from the second heat exchange section 122 to the first heat exchange section 121.

It can be understood that during the flow of the heat exchange medium in the first heat exchange tube 1a, the temperature of the heat exchange medium gradually changes, leading to a gradual decrease in the heat exchange effect. For example, when the first heat exchange tube 1a cools the battery cell 100 for heat dissipation, the heat of the battery cell 100 is gradually transferred to the heat exchange medium, causing the temperature of the heat exchange medium to gradually increase as it flows along the first heat exchange tube 1a, the temperature difference with the battery cell 100 to gradually decrease, and the heat exchange efficiency to gradually decrease. When the first heat exchange tube 1a heats the battery cell 100 for temperature increase, the heat in the heat exchange medium is gradually transferred to the battery cell 100, causing the temperature of the heat exchange medium to gradually decrease as it flows along the first heat exchange tube 1a, the temperature difference with the battery cell 100 to gradually decrease, and the heat exchange efficiency to gradually decrease.

In this embodiment, when the first heat exchange tube 1a cools multiple battery cells 100 for heat dissipation, the heat exchange medium can flow from the first heat exchange section 121 to the second heat exchange section 122, but the heat exchange medium can alternatively flow from the second heat exchange section 122 to the first heat exchange section 121. When the heat exchange medium also flows from the first heat exchange section 121 to the second heat exchange section 122, the battery cells 100 at the central position (that is, the internal battery cells 100 on the inner side of the periphery) can be cooled first, and then the battery cells 100 at the peripheral edge position can be cooled. Since the heat dissipation of the battery cells 100 at the peripheral edge position is better than the heat dissipation of the internal battery cells 100, the lower-temperature heat exchange medium of the first heat exchange section 121 can better meet the heat dissipation needs of the battery cells 100 at the central position. In addition, since the battery cells 100 at the peripheral edge position can directly dissipate heat naturally to the external environment, even if the temperature of the heat exchange medium in the second heat exchange section 122 is slightly higher, the heat dissipation needs of the peripheral battery cells 100 can still be met, so that the cooling effects obtained by the battery cells 100 at the peripheral edge position and the battery cells 100 at the central position are generally consistent, thereby making the temperature of the battery cells 100 at the peripheral edge position and the battery cells 100 at the central position relatively consistent after cooling and heat dissipation, and making the temperature distribution inside the battery 200 more uniform.

When the first heat exchange tube 1a heats multiple battery cells 100 for temperature increase, the heat exchange medium can flow from the first heat exchange section 121 to the second heat exchange section 122, but the heat exchange medium can alternatively flow from the second heat exchange section 122 to the first heat exchange section 121. Illustratively, when the heat exchange medium flows from the second heat exchange section 122 to the first heat exchange section 121, the peripheral battery cells 100 can be heated first, and then the heat exchange medium cools the battery cells 100 at the central position. Since the peripheral battery cells 100 dissipate more heat to the external environment, the temperature of the peripheral battery cells 100 of the battery 200 is more likely to drop. The heat exchange medium first heats the peripheral battery cells 100 of the battery 200, and while raising the temperature of the peripheral battery cells 100, the higher-temperature heat exchange medium can compensate for the heat lost by the battery cells 100 caused by dissipating heat to the external environment, meeting their heating needs. The battery cells 100 at the central position have a smaller contact area with the external environment and less heat loss, and the lower-temperature heat exchange medium flowing in the first heat exchange section 121 can cooperate with the heat generated by the battery cells 100 themselves to meet their heating needs well. Thus, the heating effects obtained by the peripheral battery cells 100 and the battery cells 100 at the central position of the battery module can be basically consistent, thereby making the temperature of the peripheral battery cells 100 and the battery cells 100 at the central position relatively consistent after heating and temperature increase, and making the temperature distribution inside the battery 200 more uniform.

In the above embodiment, by bending the second heat exchange section 122 to form the U-shaped region 120, and by bending the first heat exchange section 121 and disposing it within the U-shaped region 120, when the first heat exchange tube 1a exchanges heat with multiple battery cells 100, the U-shaped region 120 formed by the peripheral second heat exchange section 122 can be opposed to the peripheral battery cell 100, and the first heat exchange section 121 within the U-shaped region 120 can be opposed to the internal battery cell 100, so that the first heat exchange tube 1a can compensate for the temperature difference caused by heat exchange between the peripheral battery cells 100 and the environment, making the heat exchange effect of the peripheral battery cells 100 consistent with that of the internal battery cells 100, thereby improving the temperature uniformity of the battery 200. This can increase the service life of the battery 200 to a certain extent.

Illustratively, the second heat exchange section 122 can be located at the outermost circumference of the first heat exchange tube 1a, meaning that the second heat exchange section 122 forms the outermost flow channel of the first heat exchange tube 1a. In this way, the second heat exchange section 122 can be configured to exchange heat with the peripheral battery cells 100, which is beneficial for alleviating the temperature difference between the peripheral battery cells 100 and the internal battery cells 100 caused by heat exchange with the environment, thereby improving the temperature uniformity of the battery cells 100 at the peripheral outer circumference of the battery 200.

Illustratively, the first heat exchange section 121 and the second heat exchange section 122 are bent in the same plane, which can enable the first heat exchange tube 1a to exchange heat with multiple battery cells 100 in the same plane. Thus, the structure of the first heat exchange tube 1a can be simplified, the production difficulty of the first heat exchange tube 1a can be reduced, and the space occupied by the first heat exchange tube 1a can be reduced, improving the volumetric energy density of the battery 200.

Illustratively, as shown in FIG. 4, multiple heat exchange tubes 1 are spaced apart along the first direction. Two heat exchange tubes 1 at two ends of the first direction X1 are both first heat exchange tubes 1a; and the two first heat exchange tubes 1a are arranged symmetrically about the center line L of the first heat exchange member 102 extending along the second direction X2. It can be understood that arranging the second heat exchange sections 122 of the first heat exchange tubes 1a at the peripheral edge position can improve the temperature uniformity inside and outside the battery module. Therefore, configuring the two heat exchange tubes 1 at the two ends of the first direction to be the first heat exchange tubes 1a can make the temperature uniformity of the battery cell 100 at two ends of the battery module in the first direction better, achieving overall temperature uniformity of the battery module. Thus, by arranging the two symmetrically disposed first heat exchange tubes 1, electrolyte can be introduced from two sides simultaneously, increasing the electrolyte flow rate, shortening the length of a single heat exchange flow passage, and reducing the pressure drop within a single heat exchange flow passage, which in turn can improve heat exchange efficiency.

Furthermore, the medium flow directions of the two heat exchange tubes 1 at two ends of the first direction and the inlet and outlet at two ends are arranged symmetrically. In this way, the two first heat exchange tubes 1a can simultaneously exchange heat with two ends of the battery module in the first direction, resulting in better temperature uniformity.

Certainly, in other embodiments, the multiple heat exchange tubes 1 can be asymmetrical about the center line of the first heat exchange member 102 along the second direction.

Referring to FIGs. 25-29, in some embodiments, the first heat exchange section 121 includes first heat exchange portions 1211 and a first bent portion 1212, where a plurality of first heat exchange portions 1211 are provided, the plurality of first heat exchange portions 1211 are spaced apart along a first direction, each of the first heat exchange portions 1211 extends along a second direction, and the first bent portion 1212 is arc-shaped and is bent and connected between two adjacent first heat exchange portions 1211, so that the plurality of first heat exchange portions 1211 are sequentially connected, where the second direction is arranged at an included angle to the first direction.

It should be noted that the shape of the first heat exchange portion 1211 can be varied. Fr example, the first heat exchange portion 1211 can be linear, curved, and the like. In this way, multiple first heat exchange portions 1211 being sequentially bent and connected can enable the first heat exchange section 121 to form S-shaped, zigzag, V-shaped, or other forms of heat exchange flow passages. The shape of the first bent portion 1212 can be arc-shaped, polygonal, or the like. "The first direction is arranged at an included angle to the second direction" aims to indicate that the first direction and the second direction can be arranged perpendicularly, or can be arranged only intersecting but not perpendicularly. For example, the first direction X1 and the second direction X2 can be arranged at an angle of 30°, 60°, 80°, 120°, 150°, or 170°. For example, as shown in FIG. 25, the first direction is the length direction of the battery cell 100, and the second direction is the thickness direction of the battery cell 100. In this way, the multiple first heat exchange portions 1211 bent and connected can form an S-shaped heat exchange flow passage, which can achieve heat exchange with multiple battery cells 100.

In the above embodiment, on the one hand, by arranging a plurality of first heat exchange portions 1211, the heat exchange area of the first heat exchange section 121 can be increased, which in turn can increase the heat exchange area of the first heat exchange tube 1a, thereby improving the heat exchange effect of the first heat exchange tube 1a. On the other hand, since the internal battery cells 100 are surrounded by the external battery cells 100, the temperature difference between the internal battery cells 100 is not significant. Therefore, by arranging the plurality of first heat exchange portions 1211, the overall heat exchange effect can be ensured while maintaining a small temperature difference between the internal and external battery cells 100.

It can be understood that the first bent portion 1212 is arc-shaped, and the fluid flow directions at both ends of the first bent portion 1212 have a certain angle. Thus, the first bent portion 1212 can change the fluid flow direction, which in turn can enable the two connected first heat exchange portions 1211 to be arranged to extend within a preset region, thereby increasing the heat exchange area of the first heat exchange section 121 and improving the heat exchange efficiency of the first heat exchange section 121. In addition, the first bent portion 1212 is arc-shaped, and the arc shape can reduce the fluid flow resistance and pressure drop, thereby increasing the fluid flow rate and further increasing the heat exchange efficiency of the first heat exchange section 121. Moreover, it can also make the structure of the first heat exchange tube 1a more compact and occupy less space, which is beneficial for the miniaturization design of the battery 200.

Illustratively, the first bent portion 1212 is semi-circular, so as to connect two mutually parallel and spaced-apart first heat exchange portions 1211, which is beneficial for increasing the design diversity of the heat exchange flow passage 10, improving the adaptability of the first heat exchange tube 1a to multiple battery cells 100, and has a simple structure and is easy to produce. Certainly, the bending angle of the first bent portion 1212 can also be adjusted as needed, for example, it can be 150°, or 135°, and the like.

In addition, the number of first bent portions 1212 can be one, two, three, or more than three. The first bent portion 1212 can enable the first heat exchange tube 1a to be arranged in a circuitous manner, which is beneficial for increasing the heat exchange area of the first heat exchange tube 1a and improving heat exchange efficiency.

Referring to FIGs. 25 to 29, in some embodiments, the second heat exchange section 122 includes a second heat exchange portion 1221, a third heat exchange portion 1222, and a fourth heat exchange portion 1223, where the second heat exchange portion 1221 extends along a first peripheral side of the first heat exchange section 121, the third heat exchange portion 1222 is connected between the second heat exchange portion 1221 and the first heat exchange section 121, and extends along a second peripheral side of the first heat exchange section 121, a first end of the third heat exchange portion 1222 is connected to the second heat exchange portion 1221 at an included angle, a second end of the third heat exchange portion 1222 is connected to the first heat exchange section 121 at an included angle, and the fourth heat exchange portion 1223 communicates with the second heat exchange portion 1221, and is connected to the second heat exchange portion 1221 at an included angle, and the fourth heat exchange portion 1223 extends along a third peripheral side of the first heat exchange section 121.

It can be understood that the fourth heat exchange portion 1223 is connected to the end of the second heat exchange portion 1221 away from the third heat exchange portion 1222, and the fourth heat exchange portion 1223, the second heat exchange portion 1221, and the third heat exchange portion 1222 are sequentially connected to form a U-shaped region 120. The first heat exchange section 121 is disposed within the U-shaped region 120 and is connected to the end of the third heat exchange portion 1222 away from the second heat exchange portion 1221.

The first end of the third heat exchange portion 1222 is connected to the second heat exchange portion 1221 at an included angle, meaning that the third heat exchange portion 1222 is connected to the second heat exchange portion 1221, and the third heat exchange portion 1222 and the second heat exchange portion 1221 are not collinear or parallel, but are arranged at an angle greater than 0° and less than 180°. For example, the third heat exchange portion 1222 is connected to the second heat exchange portion 1221 at an included angle of 30°, 45°, 60°, 90°, 120°, 135°, 150°, and the like.

The second end of the third heat exchange portion 1222 is connected to the first heat exchange section 121 at an included angle; meaning that the second end of the third heat exchange portion 1222 is connected to the second heat exchange portion 1221, and the second end of the third heat exchange portion 1222 is arranged at an angle greater than 0° and less than 180° to the first heat exchange section 121. For example, the second end of the third heat exchange portion 1222 is connected to the first heat exchange section 121 at an included angle of 30°, 45°, 60°, 90°, 120°, 135°, 150°, and the like.

The fourth heat exchange portion 1223 is connected to the second heat exchange portion 1221, and is connected to the second heat exchange portion 1221 at an included angle, meaning that the fourth heat exchange portion 1223 is connected to the second heat exchange portion 1221 at an angle greater than 0° and less than 180°. For example, the fourth heat exchange portion 1223 is connected to the second heat exchange portion 1221 at an included angle of 30°, 45°, 60°, 90°, 120°, 135°, 150°, and the like.

It should be noted that this embodiment defines that the second heat exchange section 122 is arranged on three sides of the circumference of the first heat exchange section 121, and does not define the specific positions of the second heat exchange portion 1221, the third heat exchange portion 1222, and the fourth heat exchange portion 1223 relative to the first heat exchange section 121. Thus, the specific positions of the second heat exchange portion 1221, the third heat exchange portion 1222, and the fourth heat exchange portion 1223 can be designed according to actual conditions. For example, if the second heat exchange portion 1221 can be arranged on one side of the first heat exchange section 121 in the first direction, the third heat exchange portion 1222 and the fourth heat exchange portion 1223 are respectively arranged on two sides of the first heat exchange section 121 in the second direction. If the second heat exchange portion 1221 is arranged on one side of the first heat exchange section 121 in the second direction, the third heat exchange portion 1222 and the fourth heat exchange portion 1223 are respectively arranged on two sides of the first heat exchange section 121 in the first direction.

In the above embodiment, by arranging the second heat exchange portion 1221, the third heat exchange portion 1222, and the fourth heat exchange portion 1223 on three sides of the first heat exchange section 121, respectively, the second heat exchange section 122 can surround the first heat exchange section 121, which can increase the arrangement compactness of the first heat exchange tube 1a to realize miniaturization of the structure of the first heat exchange tube 1a, thereby being beneficial for improving the volumetric energy density of the battery 200. In addition, this can simplify the structure of the first heat exchange tube 1a, facilitating the processing and production of the first heat exchange member 102.

Referring to FIGs. 25 to 29, in some embodiments, the first heat exchange section 121 includes a plurality of first heat exchange portions 1211, where the plurality of first heat exchange portions 1211 are sequentially bent and connected in a first direction. The second heat exchange portion 1221 is located on one side of the plurality of first heat exchange portions 1211 along the first direction, the third heat exchange portion 1222 is located on a side of the plurality of first heat exchange portions 1211 along a second direction, the first direction and the second direction are arranged at an included angle, a first end of the third heat exchange portion 1222 is connected to one end of the second heat exchange portion 1221 along the second direction, a second end of the third heat exchange portion 1222 is connected to one of the plurality of first heat exchange portions 1211 that is farthest from the second heat exchange portion 1221 along the first direction, the fourth heat exchange portion 1223 is located on the other side of the plurality of first heat exchange portions 1211 along the second direction, one end of the fourth heat exchange portion 1223 is connected to an end of the second heat exchange portion 1221 away from the third heat exchange portion 1222, and the other end of the fourth heat exchange portion 1223 extends along the first direction leaving the second heat exchange portion 1221.

The multiple first heat exchange portions 1211 are sequentially bent and connected in the first direction, meaning that the multiple first heat exchange portions 1211 are arranged sequentially in the first direction, and in the first direction, two adjacent and connected first heat exchange portions 1211 are bent and connected. The first heat exchange portion 1211 can extend along a straight line parallel to the second direction, the first heat exchange portion 1211 can alternatively extend along a straight line arranged at an included angle to the second direction, and the first heat exchange portion 1211 can alternatively extend along a curve and/or a broken line in the second direction.

It can be understood that the fourth heat exchange portion 1223, the second heat exchange portion 1221, the third heat exchange portion 1222, and the first heat exchange portion 1211 farthest from the second heat exchange portion 1221 are sequentially connected, and the plurality of first heat exchange portions 1211 are spaced apart along the first direction and sequentially bent and connected. In this way, the heat exchange medium can sequentially flow through the fourth heat exchange portion 1223, the second heat exchange portion 1221, and the third heat exchange portion 1222, and then enter the first heat exchange section 121. Within the first heat exchange section 121, the medium first passes through the first heat exchange portion 1211 farthest from the second heat exchange portion 1221, and finally flows to the first heat exchange portion 1211 closest to the second heat exchange portion 1221; or the heat exchange medium can first flow into the first heat exchange section 121. Within the first heat exchange section 121, the fluid first flows through the first heat exchange portion 1211 closest to the second heat exchange portion 1221, flows out from the first heat exchange portion 1211 farthest from the second heat exchange portion 1221, then flows to the third heat exchange portion 1222, and then sequentially flows through the second heat exchange portion 1221 and the fourth heat exchange portion 1223 via the third heat exchange portion 1222.

The first heat exchange tube 1a arranged in FIG. 25 farther away from the coordinate origin in the first direction is used as an example. The first heat exchange portion 1211 extends linearly along the second direction, and multiple first heat exchange portions 1211 are spaced apart in the first direction. The second heat exchange portion 1221 is arranged on the side of the multiple first heat exchange portions 1211 farther away from the coordinate origin in the first direction and extends linearly along the second direction, and used for heat exchange with the side edge of the multiple battery cells 100 farther away from the coordinate origin in the first direction. The third heat exchange portion 1222 is arranged on the side of the multiple first heat exchange portions 1211 close to the coordinate origin in the second direction and extends linearly along the first direction. The third heat exchange portion 1222 is used for heat exchange with the side edge of the multiple battery cells 100 close to the coordinate origin in the second direction. The fourth heat exchange portion 1223 is arranged on the side of the multiple first heat exchange portions 1211 away from the coordinate origin in the second direction and extends linearly along the first direction, and the fourth heat exchange portion 1223 can be used for heat exchange with the side edge of the multiple battery cells 100 farther away from the coordinate origin in the second direction.

In the above embodiment, the positional relationship between the second heat exchange portion 1221, the third heat exchange portion 1222, the fourth heat exchange portion 1223, and the first heat exchange portion 1211 is defined by arranging the plurality of first heat exchange portions 1211 to be sequentially bent and connected in the first direction, the second heat exchange portion 1221 to be located on one side of the plurality of first heat exchange portions 1211 along the first direction, the third heat exchange portion 1222 to be located on one side of the plurality of first heat exchange portions 1211 along the second direction, and the fourth heat exchange portion 1223 to be located on the other side of the plurality of first heat exchange portions 1211 along the second direction. This further defines the layout of the first heat exchange tube 1a, simplifies the structure of the first heat exchange tube 1a, and facilitates processing and manufacturing.

Illustratively, the third heat exchange portion 1222 and the fourth heat exchange portion 1223 extend along the first direction, and the first heat exchange portion 1211 and the second heat exchange portion 1221 both extend along the second direction, which is beneficial for the circuitous arrangement of the first heat exchange tube 1a, and thus can reduce the production difficulty of the first heat exchange tube 1a and the production cost of the first heat exchange member 102. Furthermore, the third heat exchange portion 1222 and the fourth heat exchange portion 1223 can both extend linearly along the first direction, and the first heat exchange portion 1211 and the second heat exchange portion 1221 can both extend linearly along the second direction. The linear structure is simple, easy to produce, and easy to arrange, thereby further reducing the production complexity and production cost of the first heat exchange flow passage 10.

Illustratively, as shown in FIG. 25, the third heat exchange portion 1222 and the fourth heat exchange portion 1223 both extend along the first direction. In the first direction, the length b1 of the fourth heat exchange portion 1223 is less than or equal to the length a1 of the third heat exchange portion 1222. When the length b1 of the fourth heat exchange portion 1223 is equal to the length a1 of the third heat exchange portion 1222, the fourth heat exchange portion 1223, the second heat exchange portion 1221, and the third heat exchange portion 1222 are sequentially connected to form a standard U-shaped flow channel, and the dimensions of the two ends of the U-shaped region 120 are similar, which is beneficial for controlling the temperature difference of the battery cell 100 at the two ends in the second direction, improving temperature uniformity. The length b1 of the fourth heat exchange portion 1223 being less than the length a1 of the third heat exchange portion 1222 can be beneficial for avoiding other flow channel sections of the first heat exchange tube 1a, and avoiding other heat exchange flow passages, or avoiding other components, which is beneficial for the layout of the first heat exchange tube 1a and a compact structure.

Referring to FIG. 25, in some embodiments, the fourth heat exchange portion 1223 extends along the first direction, and extends to a position close to one of the plurality of first heat exchange portions 1211 that is farthest from the second heat exchange portion 1221. For example, the fourth heat exchange portion 1223 extends along the first direction, one end of the fourth heat exchange portion 1223 is connected to the second heat exchange portion 1221, and the other end of the fourth heat exchange portion 1223 extends to a position close to one of the plurality of first heat exchange portions 1211 that is farthest from the second heat exchange portion 1221. That is, the other end of the fourth heat exchange portion 1223 extends to a position flush with one of the plurality of first heat exchange portions 1211 that is farthest from the second heat exchange portion 1221, the other end of the fourth heat exchange portion 1223 extends to a position close to the first heat exchange portion 1211 that is farthest from the second heat exchange portion 1221, or the other end of the fourth heat exchange portion 1223 extends beyond the first heat exchange portion 1211 that is farthest from the second heat exchange portion 1221.

This can increase the length of the fourth heat exchange portion 1223, increase the heat exchange area of the fourth heat exchange portion 1223, further improve the heat exchange effect of the first heat exchange member 102, and is also beneficial for the layout of the first heat exchange tube 1a.

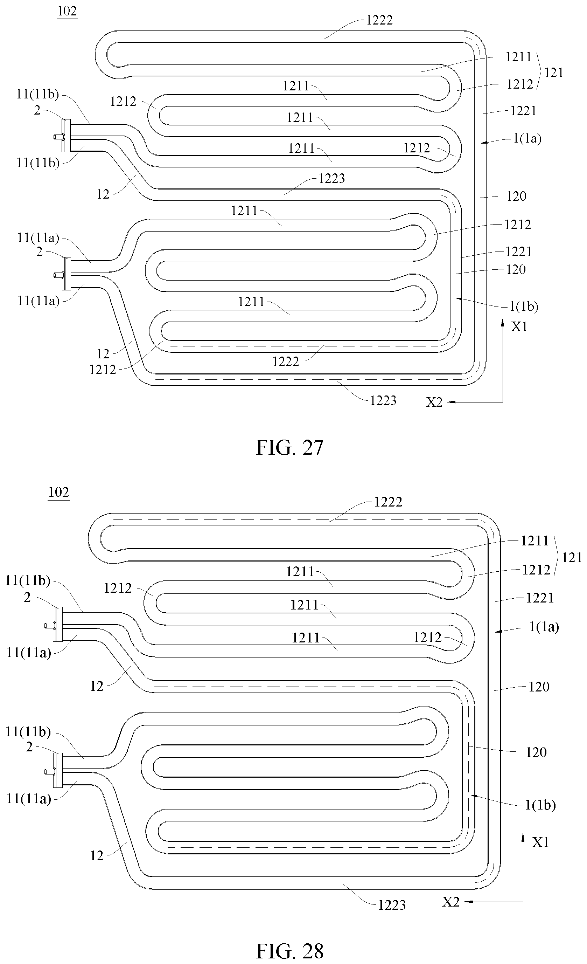

Referring to FIG. 27, in some embodiments, the first heat exchange section 121 can include a plurality of first heat exchange portions 1211, where the plurality of first heat exchange portions 1211 are sequentially bent and connected in a first direction. The second heat exchange portion 1221 is located on one side of the plurality of first heat exchange portions 1211 along a second direction, the third heat exchange portion 1222 is located on one side of the plurality of first heat exchange portions 1211 along the first direction, and the first direction and the second direction are arranged at an included angle. A first end of the third heat exchange portion 1222 is connected to one end of the second heat exchange portion 1221 along the first direction, a second end of the third heat exchange portion 1222 is connected to one of the plurality of first heat exchange portions 1211 that is closest to the third heat exchange portion 1222 along the first direction, the fourth heat exchange portion 1223 is located on the other side of the plurality of first heat exchange portions 1211 along the first direction, one end of the fourth heat exchange portion 1223 is connected to an end of the second heat exchange portion 1221 away from the third heat exchange portion 1222, and the other end of the fourth heat exchange portion 1223 extends along the second direction leaving the second heat exchange portion 1221.

The multiple first heat exchange portions 1211 are sequentially bent and connected in the first direction, meaning that the multiple first heat exchange portions 1211 are arranged sequentially in the first direction, and in the first direction, two adjacent and connected first heat exchange portions 1211 are bent and connected. The first heat exchange portion 1211 can extend along a straight line parallel to the second direction, the first heat exchange portion 1211 can alternatively extend along a straight line arranged at an included angle to the second direction, and the first heat exchange portion 1211 can alternatively extend along a curve and/or a broken line in the second direction.

It can be understood that the fourth heat exchange portion 1223, the second heat exchange portion 1221, the third heat exchange portion 1222, and the first heat exchange portion 1211 closest to the third heat exchange portion 1222 are sequentially connected, and the plurality of first heat exchange portions 1211 are spaced apart along the first direction and sequentially bent and connected. In this way, the heat exchange medium can sequentially flow through the fourth heat exchange portion 1223, the second heat exchange portion 1221, and the third heat exchange portion 1222, and then enter the first heat exchange section 121. Within the first heat exchange section 121, the fluid first flows through the first heat exchange portion 1211 closest to the third heat exchange portion 1222, and finally flows to the first heat exchange portion 1211 farthest from the third heat exchange portion 1222. Alternatively, the heat exchange medium can first flow into the first heat exchange section 121. Within the first heat exchange section 121, the medium first flows through the first heat exchange portion 1211 farthest from the third heat exchange portion 1222, flows out from the first heat exchange portion 1211 closest to the third heat exchange portion 1222 to flow to the third heat exchange portion 1222, and then sequentially flows through the second heat exchange portion 1221 and the fourth heat exchange portion 1223 via the third heat exchange portion 1222.

In the above embodiment, by arranging the second heat exchange portion 1221 on one side of the plurality of first heat exchange portions 1211 along the second direction, the third heat exchange portion 1222 on one side of the plurality of first heat exchange portions 1211 along the first direction, and the fourth heat exchange portion 1223 on the other side of the plurality of first heat exchange portions 1211 along the first direction, another layout of the first heat exchange tube 1a is defined. Thus, the diversity of the first heat exchange tube 1a can be increased, allowing it to meet the heat exchange requirements of different batteries 200, simplifying the structure of the first heat exchange tube 1a, and facilitating processing and manufacturing.

Illustratively, as shown in FIG. 27, the first heat exchange portion 1211, the third heat exchange portion 1222, and the fourth heat exchange portion 1223 extend along the second direction, and the second heat exchange portion 1221 extends along the first direction. Furthermore, the first heat exchange portion 1211, the third heat exchange portion 1222, and the fourth heat exchange portion 1223 can all extend linearly along the second direction, and the second heat exchange portion 1221 can extend linearly along the first direction. The linear structure is simple, easy to produce, and easy to arrange, thereby further reducing the production complexity and production cost of the first heat exchange flow passage 10.

Illustratively, the second heat exchange portion 1221 and the third heat exchange portion 1222 are connected by an arc-shaped bent portion, and the third heat exchange portion 1222 and the first heat exchange portion 1211 are connected by an arc-shaped bent portion, so that the flow direction of the heat exchange medium changes, and the second heat exchange section 122 extends within a preset region and is used for heat exchange with the battery cell 100. In addition, the arc-shaped bent portion can reduce the fluid flow resistance and pressure drop, thereby increasing the flow rate of the heat exchange medium and further increasing the heat exchange efficiency. Illustratively, the arc-shaped bent portions between the second heat exchange portion 1221 and the third heat exchange portion 1222, and the arc-shaped bent portions between the third heat exchange portion 1222 and the first heat exchange portion 1211 are both quarter-circular, which can change the fluid flow direction from the original flow direction to a direction perpendicular to the original flow direction after the fluid passes through the arc-shaped bent portion. In addition, the arc shape can also reduce the resistance of fluid flow, allowing the fluid to flow smoothly within the arc-shaped bent portion, thereby effectively preventing the heat exchange efficiency from decreasing due to slow medium flow.

Referring to FIGs. 25 and 26, in some embodiments, the second heat exchange section 122 further includes a fifth heat exchange portion 1224, where the fifth heat exchange portion 1224 extends along a fourth peripheral side of the first heat exchange section 121, and the fifth heat exchange portion 1224 closes at least part of an opening of the U-shaped region 120 formed by the second heat exchange portion 121, the third heat exchange portion 122, and the fourth heat exchange portion 125. Thus, one of the first heat exchange portions 1211 can extend along the fourth peripheral side of the first heat exchange section 121.

It can be understood that the fifth heat exchange portion 1224 may close part of the opening of the U-shaped region 120 or completely close the opening of the U-shaped region 120. Accordingly, the second heat exchange section 122 can substantially cover the peripheral edge positions of the battery 200 and exchange heat with the peripheral edge. In this way, the second heat exchange section 122 can exchange heat with all or most of the peripheral edges of the battery module. Thus, the structure of the first heat exchange tube 1a can be set according to the actual arrangement or heat exchange requirements of the multiple battery cells 100, thereby optimizing the heat exchange structure and improving heat exchange efficiency.

In the above embodiment, by arranging the fifth heat exchange portion 1224, the second heat exchange section 122 can exchange heat with the four peripheral sides of the assembly formed by all battery cells 100. In this way, the second heat exchange section 12 of one first heat exchange tube 1a can be used to exchange heat with the four peripheral sides of the assembly formed by multiple battery cells 100, which is beneficial for improving the heat exchange effect on the four peripheral sides of the battery 200 and improving the temperature uniformity of the battery 200.

Illustratively, the fifth heat exchange portion 1224 is arranged opposite to the first heat exchange portion 1221, and the fifth heat exchange portion 1224 extends along the second direction. The fifth heat exchange portion 1224 is connected between the second end of the third heat exchange portion 1222 and the first heat exchange section 111, and the fifth heat exchange portion 1224 is connected to the third heat exchange portion 1222 at an included angle. The fifth heat exchange portion 1224 is connected to the first heat exchange section 111 at an included angle.

It should be noted that in the embodiment of this application, "the fifth heat exchange portion 1224 is connected to the third heat exchange portion 1222 at an included angle" and "the fifth heat exchange portion 1224 is connected to the first heat exchange section 111 at an included angle" can mean that the corresponding two parts are connected and arranged at an angle greater than 0° and less than or equal to 180°. Obviously, the third heat exchange portion 1222 and the second heat exchange portion 1221 are arranged at an angle greater than 0° and less than 180°, and the fourth heat exchange portion 1223 and the second heat exchange portion 1221 are arranged at an angle greater than 0° and less than 180°.

In some embodiments, the first heat exchange section 121 is connected downstream of the second heat exchange section 122 along the medium flow direction, meaning that the heat exchange medium first flows through the second heat exchange section 122, and then flows into the first heat exchange section 121. The second heat exchange section 122 is arranged around the circumference of the first heat exchange section 121. When the first heat exchange tube 1a exchanges heat with the battery cell 100, the periphery of the assembly formed by all battery cells 100 (hereinafter referred to as the battery module) dissipates heat faster. Especially under low-temperature heating conditions, the high-temperature heat exchange medium starts heat exchange from the second heat exchange section 122, which can enable the first heat exchange tube 1a to prioritize heat exchange with the outer peripheral direction of the battery module, thereby being beneficial for improving the temperature difference inside and outside the battery module, and increasing the service life of the battery 200 to a certain extent.

In some embodiments, the first heat exchange tube 1a is configured such that: when heating the battery cell 100, the first connection section 121 is connected downstream of the second heat exchange section 122 along a medium flow direction; and when cooling the battery cell 100, the first heat exchange section 121 is connected upstream of the second heat exchange section 122 along a medium flow direction.

For example, when heating the battery module of the battery 200, the temperature of the heat exchange medium flowing in the first heat exchange member 102 is higher than the operating temperature of the battery 200. The first heat exchange member 102 heats the battery module for temperature increase. The high-temperature heat exchange medium first flows into the second heat exchange section 122 and then flows to the first heat exchange section 121. The temperature of the heat exchange medium flowing inside the second heat exchange section 122 is higher than the temperature of the heat exchange medium inside the first heat exchange section 121.

Since the high-temperature medium first enters the second heat exchange section 122 located at the periphery of the first heat exchange tube 1a, the second heat exchange section 122 can first heat the peripheral battery cells 100 of the battery module, and the heat exchange medium then enters the first heat exchange section 121 to cool the battery cells 100 at the central position of the battery module. Since the peripheral battery cells 100 of the battery module dissipate more heat to the external environment, the temperature of the peripheral battery cells 100 of the battery module drops more. The heat exchange medium first heats the peripheral battery cells 100 of the battery module, and the higher-temperature heat exchange medium can compensate for the heat lost by the battery cells 100 due to heat dissipation to the external environment while raising the temperature of the peripheral battery cells 100, meeting their heating needs. The battery cells 100 at the central position of the battery module have less contact area with the external environment and less heat loss, and the lower-temperature heat exchange medium flowing in the first heat exchange section 121 can cooperate with the heat generated by the battery cells 100 themselves to meet their heating needs well. Thus, the heating effects obtained by the peripheral battery cells 100 of the battery module and the battery cells 100 at the central position of the battery module can be basically consistent, thereby making the temperature of the peripheral battery cells 100 of the battery module and the battery cells 100 at the central position of the battery module relatively consistent after heating and temperature increase, and making the temperature distribution inside the battery 200 more uniform.

When cooling the battery module of the battery 200, the temperature of the heat exchange medium flowing in the first heat exchange member 102 is lower than the operating temperature of the battery 200, and the first heat exchange member 102 is used to cool the battery 200. The heat exchange medium flows from the first heat exchange section 121 to the second heat exchange section 122, and the temperature of the heat exchange medium flowing inside the first heat exchange section 121 is lower than the temperature of the heat exchange medium inside the second heat exchange section 122.

When cooling the battery 200, the heat exchange medium flows from the first heat exchange section 121 to the second heat exchange section 122, meaning that the heat exchange medium flows and exchanges heat from the middle part of the battery module to the edge position of the battery module. Since the heat dissipation of the battery cells 100 at the peripheral edge position of the battery 200 is better than heat dissipation of the internal battery cells 100, the lower-temperature heat exchange medium of the first heat exchange section 121 can better meet the heat dissipation needs of the battery cells 100 at the central position of the battery module. In addition, since the battery cells 100 at the peripheral edge position of the battery module can directly dissipate heat naturally to the external environment, even if the temperature of the heat exchange medium in the second heat exchange section 122 is slightly higher, the heat dissipation needs of the peripheral battery cells 100 can still be met. In this way, the cooling effects obtained by the battery cells 100 at the peripheral edge position of the battery module and the battery cells 100 at the central position of the battery module are generally consistent, thereby making the temperatures of the battery cells 100 at the peripheral edge position of the battery module and the battery cells 100 at the central position of the battery module relatively consistent after cooling and heat dissipation, reducing the temperature difference inside and outside the battery module, and making the temperature distribution inside the battery 200 more uniform.

Referring to FIGs. 27 to 29, in some embodiments, the first heat exchange member 102 further includes a second heat exchange tube 1b, where the second heat exchange tube 1b and the first heat exchange tube 1a are disposed on a same side of the battery cell 100, at least part of the second heat exchange tube 1b is bent and disposed within the U-shaped region 120 of the first heat exchange tube 1a, meaning that part of the second heat exchange tube 1b is bent and disposed within the U-shaped region 120 of the first heat exchange tube 1a, or the entire second heat exchange tube 1b is bent and disposed within the U-shaped region 120 of the first heat exchange tube 1a, and bent structures of the second heat exchange tube 1b and the first heat exchange tube 1a are the same or different.

For example, when the bent structure of the second heat exchange tube 1b is the same as the bent structure of the first heat exchange tube 1a, the second heat exchange tube 1b can include a U-shaped region 120 with the same structure as the first heat exchange tube 1a. The second heat exchange tube 1b further includes a first heat exchange portion, a second heat exchange portion, a third heat exchange portion, and a fourth heat exchange portion. The fourth heat exchange portion, the second heat exchange portion, and the third heat exchange portion of the second heat exchange tube 1b are sequentially bent and connected to form a U-shaped structure. A plurality of first heat exchange portions of the second heat exchange tube 1b are provided and are disposed within the U-shaped region 120 of the second heat exchange tube 1b, and the plurality of first heat exchange portions are spaced apart and sequentially bent and connected. The first heat exchange portion, the second heat exchange portion, the third heat exchange portion, and the fourth heat exchange portion of the second heat exchange tube 1b are all disposed within the U-shaped region 120 of the first heat exchange tube 1a.

Certainly, in other examples, the bent structure of the second heat exchange tube 1b can alternatively be different from the bent structure of the first heat exchange tube 1a.

In the above technical solution, providing the second heat exchange tube 1b can increase the diversity of heat exchange flow passages of the first heat exchange member 102, making the arrangement of the heat exchange tube 1 more flexible, which is beneficial for further improving the heat exchange effect of the first heat exchange member 102 and enhancing the temperature uniformity of the battery 200.

Illustratively, for the second heat exchange tube 1b: a plurality of first heat exchange portions 1211 are sequentially bent and connected in the first direction, the second heat exchange portion 1221 is located on one side of the plurality of first heat exchange portions 1211 along the second direction, the third heat exchange portion 1222 is located on one side of the plurality of first heat exchange portions 1211 along the first direction, and the first direction and the second direction are arranged at an included angle. A first end of the third heat exchange portion 1222 is connected to one end of the second heat exchange portion 1221 along the first direction, a second end of the third heat exchange portion 1222 is connected to one of the plurality of first heat exchange portions 1211 that is closest to the third heat exchange portion 1222 along the first direction, the fourth heat exchange portion 1223 is located on the other side of the plurality of first heat exchange portions 1211 along the first direction, one end of the fourth heat exchange portion 1223 is connected to an end of the second heat exchange portion 1221 away from the third heat exchange portion 1222, and the other end of the fourth heat exchange portion 1223 extends along the second direction leaving the second heat exchange portion 1221.

Certainly, in other examples, for the second heat exchange tube 1b: a plurality of first heat exchange portions 1211 are sequentially bent and connected in the first direction, the second heat exchange portion 1221 is located on one side of the plurality of first heat exchange portions 1211 along the first direction, the third heat exchange portion 1222 is located on one side of the plurality of first heat exchange portions 1211 along the second direction, and the first direction and the second direction are arranged at an included angle. A first end of the third heat exchange portion 1222 is connected to one end of the second heat exchange portion 1221 along the second direction, a second end of the third heat exchange portion 1222 is connected to the one of the plurality of first heat exchange portions 1211 that is farthest from the second heat exchange portion 1221 along the first direction, the fourth heat exchange portion 1223 is located on the other side of the plurality of first heat exchange portions 1211 along the second direction, one end of the fourth heat exchange portion 1223 is connected to an end of the second heat exchange portion 1221 away from the third heat exchange portion 1222, and the other end of the fourth heat exchange portion 1223 extends along the first direction leaving the second heat exchange portion 1221.

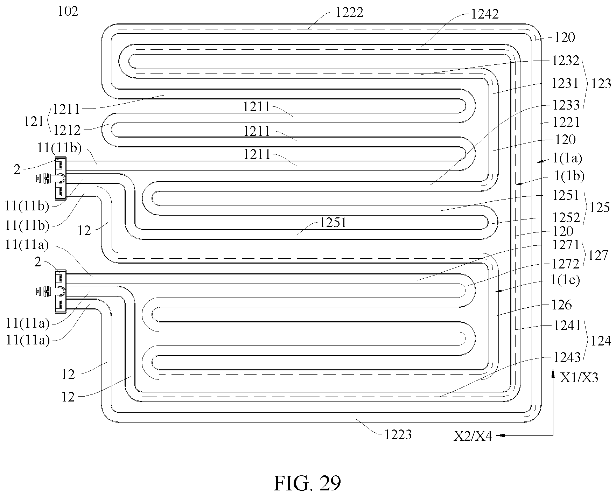

Referring to FIG. 29, in some embodiments, the second heat exchange tube 1b includes a U-shaped region 120 having the same structure as the first heat exchange tube 1a, and at least part of the first heat exchange section 121 of the first heat exchange tube 1a is disposed within the U-shaped region 120 of the second heat exchange tube 1b, meaning that part of the first heat exchange section 121 of the first heat exchange tube 1a is disposed within the U-shaped region 120 of the second heat exchange tube 1b, or the entire first heat exchange tube 121 of the first heat exchange tube 1a is disposed within the U-shaped region 120 of the second heat exchange tube 1b.

In the above technical solution, by arranging at least part of the first heat exchange section 121 of the first heat exchange tube 1a within the U-shaped region 120 of the second heat exchange tube 1b, the first heat exchange tube 1a and the second heat exchange tube 1a can be mutually wound and arranged around each other. In this way, the winding manner of multiple heat exchange tubes 1 can be set according to the heat exchange requirements of various parts of the battery module, further enhancing the heat exchange effect of the first heat exchange member 102 and improving the temperature uniformity of the battery 200.

Referring to FIG. 29, in some embodiments, the second heat exchange tube 1b includes a third heat exchange section 123 and a fourth heat exchange section 124 connected by bending, where the third heat exchange section 123 and the fourth heat exchange section 124 are respectively bent to form U-shaped regions 120, the third heat exchange section 123 is disposed within the U-shaped region 120 of the fourth heat exchange section 124, and at least part of the first heat exchange section 121 of the first heat exchange tube 1a is disposed within the U-shaped region 120 of the third heat exchange section 123.

In the embodiments of this application, the opening direction of the U-shaped region 120 of the third heat exchange section 123 and the opening direction of the U-shaped region 120 of the fourth heat exchange section 124 can be the same or different. Illustratively, the opening direction of the U-shaped region 120 of the third heat exchange section 123 is the same as the opening direction of the U-shaped region 120 of the fourth heat exchange section 124. In this case, the three heat exchange sections of the third heat exchange section 123 and the three heat exchange portions of the fourth heat exchange section 124 can be arranged in parallel respectively, which is beneficial for simplifying the arrangement of the second heat exchange tube 1b, and is beneficial for providing avoidance for the at least part of the first heat exchange section 121 of the first heat exchange tube 1a to extend into the U-shaped region 120 of the third heat exchange section 123.

In the above technical solution, by disposing at least part of the first heat exchange section 121 of the first heat exchange tube 1a within the U-shaped region 120 of the third heat exchange section 123, the at least part of the first heat exchange section 121 of the first heat exchange tube 1a is also located within the U-shaped region 120 of the fourth heat exchange section 124. On the premise of realizing mutual winding arrangement between the first heat exchange tube 1a and the second heat exchange tube 1b, this facilitates simplifying their winding arrangement, and is beneficial for further improving the heat exchange effect and enhancing the temperature uniformity of the battery 200.

Illustratively, as shown in FIG. 29, the third heat exchange section 123 includes a seventh heat exchange portion 1231, an eighth heat exchange portion 1232, and a ninth heat exchange portion 1233. The eighth heat exchange portion 1232 and the ninth heat exchange portion 1233 are respectively bent and connected at two length ends of the seventh heat exchange portion 1231. The fourth heat exchange section 124 includes a tenth heat exchange portion 1241, an eleventh heat exchange portion 1242, and a twelfth heat exchange portion 1243. The eleventh heat exchange portion 1242 and the twelfth heat exchange portion 1243 are respectively bent and connected at two length ends of the tenth heat exchange portion 1241.

Illustratively, the seventh heat exchange portion 1231 and the tenth heat exchange portion 1241 extend in parallel. The eighth heat exchange portion 1232, the ninth heat exchange portion 1233, the eleventh heat exchange portion 1242, and the twelfth heat exchange portion 1243 extend in parallel. In other examples, the seventh heat exchange portion 1231 and the tenth heat exchange portion 1241 can alternatively be arranged at an included angle.

Referring to FIG. 29, in some embodiments, the second heat exchange tube 1b further includes a fifth heat exchange section 125, where the fifth heat exchange section 125 includes sixth heat exchange portions 1251 and a second bent portion 1252, a plurality of sixth heat exchange portions 1251 are provided, the plurality of sixth heat exchange portions 1251 are spaced apart along a third direction X3, each of the sixth heat exchange portions 1251 extends along a fourth direction X4, and the second bent portion 1252 is arc-shaped and is bent and connected between two adjacent sixth heat exchange portions 1251, so that the plurality of sixth heat exchange portions 1251 are sequentially connected, where the fourth direction is arranged at an included angle to the third direction. Illustratively, the fourth direction is perpendicular to the third direction.

The fifth heat exchange section 125 is disposed between the third heat exchange section 123 and the fourth heat exchange section 124; and/or the fifth heat exchange section 125 is disposed between the third heat exchange section 123 and a corresponding end portion 11 (that is, the end portion 11 corresponding to an end of the third heat exchange section 123 away from the fourth heat exchange section 124). It can be seen that at least one of the two length ends of the third heat exchange section 123 is provided with the fifth heat exchange section 125, and the fifth heat exchange section 125 can be disposed within the U-shaped region 120 of the fourth heat exchange section 124 and outside the U-shaped region 120 of the third heat exchange section 123.

Illustratively, the second bent portion 1252 is arc-shaped, and the fluid flow directions at two ends of the second bent portion 1252 have a certain included angle. Thus, the second bent portion 1252 can change the fluid flow direction, which in turn can enable the two connected sixth heat exchange portions 1251 to be arranged to extend within a preset region, thereby increasing the heat exchange area of the fifth heat exchange section 125 and improving the heat exchange efficiency of the fifth heat exchange section 125. In addition, the second bent portion 1252 is arc-shaped, and the arc shape can reduce the fluid flow resistance and pressure drop, thereby increasing the fluid flow rate and further increasing the heat exchange efficiency of the fifth heat exchange section 125. Moreover, it can also make the structure of the second heat exchange tube 1b more compact and occupy less space, which is beneficial for the miniaturization design of the battery 200.

Illustratively, the second bent portion 1252 is semi-circular, so as to connect two mutually parallel and spaced-apart sixth heat exchange portions 1251, which is beneficial for increasing the design diversity of the heat exchange flow passage 10, and improving the adaptability of the second heat exchange tube 1b to multiple battery cells 100. This offers a simple structure and facilitates production. Certainly, the bending angle of the second bent portion 1252 can also be adjusted as needed. For example, it can be 150°, 135°, or the like.

In addition, the number of second bent portions 1252 can be one, two, three, or more than three. The second bent portion 1252 can enable the second heat exchange tube 1b to be arranged in a circuitous manner, which is beneficial for increasing the heat exchange area of the second heat exchange tube 1b and improving heat exchange efficiency.

In the above technical solution, providing the fifth heat exchange section 125 is convenient to further increase the heat exchange area of the second heat exchange tube 1b, improves the heat exchange effect of the second heat exchange tube 1b, and is beneficial to achieving temperature control of the internal battery cells 100. In addition, the arrangement of the fifth heat exchange section 125 does not affect the mutual winding of the first heat exchange tube 1a and the second heat exchange tube 1b.

Illustratively, the third direction X3 is the same as the first direction X1, and the fourth direction X4 is the same as the second direction X2.

Referring to FIG. 29, in some embodiments, the first heat exchange member 102 further includes a third heat exchange tube 1c, where at least part of the third heat exchange tube 1c is bent and disposed within the U-shaped region 120 of the second heat exchange tube 1b, meaning that the at least part of the third heat exchange tube 1c is non-linear.

In the above technical solution, disposing at least part of the third heat exchange tube 1c bent within the U-shaped region 120 of the second heat exchange tube 1b is convenient to further achieve good temperature control of the internal battery cells 100, which is beneficial for improving the temperature distribution of the entire battery 200 and enhancing the temperature uniformity of the battery 200.

For example, when the second heat exchange tube 1b includes a third heat exchange section 123 and a fourth heat exchange section 124 that are bent and connected, the at least part of the third heat exchange tube 1c is bent and disposed within the U-shaped region 120 of the fourth heat exchange section 124 and outside the U-shaped region 120 of the third heat exchange section 123; or the at least part of the third heat exchange tube 1c is bent and disposed within the U-shaped region 120 of the third heat exchange section 123.

In the embodiments of this application, the bending arrangement of the portion of the third heat exchange tube 1c disposed within the U-shaped region 120 of the second heat exchange tube 1b is not specifically limited. For example, the third heat exchange tube 1c is generally S-shaped, but is not limited thereto. Illustratively, as shown in FIG. 29, the third heat exchange tube 1c includes a sixth heat exchange section 126 and a seventh heat exchange section 127. The sixth heat exchange section 126 is bent to form a U-shaped region 120. The seventh heat exchange section 127 is bent and disposed within the U-shaped region 120 of the sixth heat exchange section 126, and the seventh heat exchange section 127 is bent and connected to the sixth heat exchange section 126.

Illustratively, the seventh heat exchange section 127 includes thirteenth heat exchange portions 1271 and a third bent portion 1272. A plurality of thirteenth heat exchange portions 1271 are provided and are spaced apart along the first direction. Each of the thirteenth heat exchange portions 1271 extends along the second direction, and the third bent portion 1272 is arc-shaped and is bent and connected between two adjacent thirteenth heat exchange portions 1271, so that the plurality of thirteenth heat exchange portions 1271 are sequentially connected. Certainly, the plurality of thirteenth heat exchange portions 1271 can alternatively be spaced apart along the second direction, and each of the thirteenth heat exchange portions 1271 extends along the first direction, but is not limited thereto.

Referring to FIG. 15, in some embodiments, the expansion beam 105 includes a beam body 1051 and a reinforcing partition 1052, where the beam body 1051 defines a cavity 1051a, the reinforcing partition 1052 is disposed in the cavity 1051a, and the reinforcing partition 1052 has a plurality of spaced-apart connecting portions 1052a. The plurality of connecting portions 1052a include a first connecting portion 1052b and a second connecting portion 1052c, where the first connecting portion 1052b and the second connecting portion 1052c are respectively connected to two opposite side walls of the beam body 1051, so that the reinforcing partition 1052 divides the cavity 1051a into a plurality of chambers 1051b, and the first connecting portion 1052b and the second connecting portion 1052c are staggered.

For example, the first connecting portion 1052b and the second connecting portion 1052c are respectively connected to the width side walls of the beam body 1051. In the height direction of the beam body 1051, the first connecting portion 1052b and the second connecting portion 1052c are staggered. Thus, if one of two adjacent connecting portions 1052a is the first connecting portion 1052b, the other is the second connecting portion 1052c.

In the above technical solution, by configuring the expansion beam 105 to include the beam body 1051 and the reinforcing partition 1052, where the reinforcing partition 1052 is disposed in the cavity 1051a and divides the cavity 1051a of the beam body 1051 into the plurality of chambers 1051b, the reinforcing partition 1052 provides certain support and reinforcement to two opposite sides of the beam body 1051, which is beneficial for improving the structural strength, bearing capacity, and structural stability of the expansion beam 105, thereby improving the use reliability of the expansion beam 105.

Illustratively, the two sides of the beam body 1051 in the width direction are both connected to the reinforcing partition 1052, so that the reinforcing partition 1052 can support the beam body 1051 in the width direction of the beam body 1051, and the support direction of the reinforcing partition 1052 is basically opposite to the expansion force direction of the battery cell 100100, achieving reliable support for the battery cell 100100. In this case, each chamber 1051b extends along the length direction of the expansion beam 105.

Referring to FIG. 15, in some embodiments, the beam body 1051 includes a first plate body A1 and a second plate body A2 arranged opposite to each other, where the first plate body A1 and the second plate body A2 are connected and jointly define the cavity 1051a, and the reinforcing partition 1052 is disposed between the first plate body A1 and the second plate body A2 and the reinforcing partition 1052 further has a third connecting portion 1052d, where the third connecting portion 1052d is sandwiched between the first plate body A1 and the second plate body A2, and the third connecting portion 1052d is connected to the first plate body A1 and the second plate body A2.

Illustratively, the first plate body A1, the second plate body A2, and the reinforcing partition 1052 all extend along the length direction of the expansion beam 105. The first plate body A1, the reinforcing partition 1052, and the second plate body A2 can be stacked along the width direction of the expansion beam 105, which facilitates the assembly of the expansion beam 105. In addition, the arrangement of the third connecting portion 1052d is beneficial for improving the connection reliability between the reinforcing partition 1052 and the beam body 1051. It can be seen that the first connecting portion 1052b can be connected to the first plate body A1, and the second connecting portion 1052c can be connected to the second plate body A2.

In the above technical solution, by configuring the beam body 1051 to include the first plate body A1 and the second plate body A2, and by disposing the reinforcing partition 1052 between the first plate body A1 and the second plate body A2, not only are the first plate body A1 connected through the first connecting portion 1052b and the third connecting portion 1052d, the second plate body A2 is connected through the second connecting portion 1052c and the third connecting portion 1052d, but also the expansion beam 105 has a simple structure, is easy to assemble, and has good structural stability.

Referring to FIGs. 10 and 15, in some embodiments, multiple expansion beams 105 are provided and the multiple expansion beams 105 include a first expansion beam B1 and a second expansion beam B2 spaced apart, where the battery cell 100 is disposed between the first expansion beam B1 and the second expansion beam B2, a third fixing member 111 is disposed in the cavity 1051a of the first expansion beam B1, a fourth fixing member 112 is disposed in the cavity 1051a of the second expansion beam B2, and the housing assembly 1010 further includes a pull rope 110, where the pull rope 110 passes through the corresponding cavity 1051a, and the pull rope 110 is connected to both the third fixing member 111 and the fourth fixing member 112.

In the above technical solution, by connecting the pull rope 110 to the third fixing member 111 and connecting the pull rope 110 to the fourth fixing member 112, when the battery cell 100 between the first expansion beam B1 and the second expansion beam B2 undergoes expansion deformation, the pull rope 110 can apply force to the first expansion beam B1 and the second expansion beam B2 to resist the expansion force of the battery cell 100. Moreover, since the third fixing member 111 and the fourth fixing member 112 are disposed within the cavities 1051a of the corresponding expansion beams 105, even if the connection between at least one of the third fixing member 111 and the fourth fixing member 112 and the corresponding expansion beam 105 fails, the at least one of the third fixing member 111 and the fourth fixing member 112 can still be restricted within the cavity 1051a of the corresponding expansion beam 105, which is beneficial for reducing the risk that the at least one of the third fixing member 111 and the fourth fixing member 112 detaching from the corresponding expansion beam 105 leads to failure of the pull rope 110.

Illustratively, when there are multiple expansion beams 105, including a first expansion beam B1 and a second expansion beam B2, an avoidance channel 200a can be formed between the first expansion beam B1 and the housing 101, and the first heat exchange member 102 passes through the avoidance channel 200a200a. No avoidance channel 200a is formed between the second expansion beam B2 and the housing 101.

Certainly, the structural form of the expansion beam 105 is not limited thereto.

Referring to FIGs. 3, 10, and 20, in some embodiments, the housing 101 includes a first housing 101, where the first housing 101 is an integrally stamped part, the first housing 101 includes a bottom wall 1011a and a peripheral wall 1011b, the peripheral wall 1011b is arranged around the bottom wall 1011a, and the expansion beam 105 is connected to both the bottom wall 1011a and the peripheral wall 1011b. The first heat exchange member 102 is provided between the battery cell 100 and at least one of the bottom wall 1011a and the peripheral wall 1011b, and/or the first heat exchange member 102 is provided between the top wall of the housing 101 and the battery cell 100.

It can be understood that the peripheral wall 1011b can include a plurality of side walls connected end to end, and the peripheral wall 1011b and the bottom wall 1011a can cooperate to form a receiving space, and the receiving space can form at least part of the internal space of the housing 101. When the first heat exchange member 102 is disposed between the peripheral wall 1011b and the battery cell 100, the first heat exchange member 102 can be provided between at least one of the plurality of side walls and the battery cell 100.

In related art, the bottom wall 1011a and the peripheral wall 1011b of the housing 101 are separate parts (for example, profile housing 101), and they are connected by multiple connecting members to achieve sealing between the bottom wall 1011a and the peripheral wall 1011b. The number of connecting members is large, even exceeding 100, making the assembly of the housing 101 cumbersome and inefficient.

In the above technical solution, by configuring the first housing 101, which includes the bottom wall 1011a and the peripheral wall 1011b, as an integrally stamped part, the forming of the first housing 101 is facilitated, which is beneficial for reducing the cost of the first housing 101, and also facilitates providing the first housing 101 with good structural strength. In addition, the inherent structure of the first housing 101 achieves sealing between the bottom wall 1011a and the peripheral wall 1011b, which is beneficial for improving the sealing performance of the bottom of the first housing 101, thereby saving multiple connecting members (such as bolts) in the housing 101 used to achieve bottom sealing of the first housing 101, saving the connection process of the bottom wall 1011a and the peripheral wall 1011b, and improving the assembly efficiency of the housing 101.

According to a second aspect, an embodiment of this application provides an electrical apparatus 1000, including the battery 200 described above, where the battery 200 is configured to provide electrical energy. In the above technical solution, the electrical apparatus 1000 uses the battery 200 described above, which is convenient to achieve good temperature control over the battery 200, thereby improving the use reliability of the electrical apparatus 1000.

Refer to the drawings again to describe the battery 200 of the specific embodiments of this application.

### Embodiment 1

Referring to FIGs. 3 to 6 and 25, the battery 200 includes a housing 101, an expansion beam 105, and a plurality of battery cells 100, where all battery cells 100 are disposed within the housing 101. The battery 200 further includes a first heat exchange member 102, where the first heat exchange member 102 and the expansion beam 105 are spaced apart within the housing 101, such that the first heat exchange member 102 and the expansion beam 105 are thermally insulated from each other. The first heat exchange member 102 is located between the housing 101 and the battery cells 100, so as to exchange heat with all battery cells 100. The housing 101 includes a first housing 101 and a second housing 102, where the first housing 101 is an integrally stamped sheet metal part and includes a bottom wall 1011a and a peripheral wall 1011b. The peripheral wall 1011b is arranged around the bottom wall 1011a, and the first heat exchange member 102 is located between the bottom wall 1011a and the battery cells 100.

There are two expansion beams 105. The two expansion beams 105 are a first expansion beam B1 and a second expansion beam B2. The first expansion beam B1 divides an internal space of the housing 101 into a first cavity 101a and a second cavity 101b. The second expansion beam B2 is disposed in the first cavity 101a. All battery cells 100 are disposed in the first cavity 101a and located between the first expansion beam B1 and the second expansion beam B2. An avoidance channel 200a is formed between the first expansion beam B1 and the housing 101. The first heat exchange member 102 passes through a corresponding avoidance channel 200a, so that the first heat exchange member 102 extends from the first cavity 101a to the second cavity 101b. A wall surface of the first expansion beam B1 corresponding to the avoidance channel 200a is spaced apart from the first heat exchange member 102. The housing 101 has a first recess 101c, and the second recess 101c forms at least part of the avoidance channel 200a. Certainly, the first heat exchange member 102 can alternatively pass through multiple avoidance channels 200a.

A thermal insulation member 107 is disposed between the first expansion beam B1 and the bottom wall 1011a of the housing 101. The thermal insulation member 107 is an integral part and includes a first thermal insulation portion 1071 and a second thermal insulation portion 1072. The first thermal insulation portion 1071 is disposed between the wall surface of the first expansion beam B1 corresponding to the avoidance channel 200a and the first heat exchange member 102. The second thermal insulation portion 1072 is disposed between a portion of the bottom wall 1011a of the housing 101 other than the portion corresponding to the avoidance channel 200a and the first expansion beam B1.

The first heat exchange member 102 includes two heat exchange tubes 1, each heat exchange tube 1 having two end portions 11. The two end portions 11 are a first end portion 11a and a second end portion 11b. A peripheral side of the first heat exchange member 102 includes two sides arranged opposite to each other along the first direction X1 and two sides arranged opposite to each other along the second direction X2. The first housing 101 and the second housing 102 are arranged opposite to each other along the fifth direction X5.

The first direction X1 being the left-to-right direction, the second direction X2 being the back-to-front direction, and the fifth direction X5 being the bottom-to-top direction are used as an example, where the three directions are mutually perpendicular:

The two heat exchange tubes 1 of the first heat exchange member 102 are spaced apart along the left-right direction. Each heat exchange tube 1 is formed by bending a single tube, and the heat exchange tube 1 is bent in an arc shape at the bending position. Each heat exchange tube 1 is a flat tube or an accordion tube, and the thickness direction of the heat exchange tube 1 is the X5 direction. Each heat exchange tube 1 further includes a communication section 12 connected between the two end portions 11. The central axes of at least the communication sections 12 of all heat exchange tubes 1 are located in the same plane, so as to better mate with the battery cell 100.

Each heat exchange tube 1 is configured as a first heat exchange tube 1a. The communication section 12 of the first heat exchange tube 1a includes a first heat exchange section 121 and a second heat exchange section 122. The second heat exchange section 122 is bent to form a U-shaped region 120. The first heat exchange section 121 is bent and disposed within the U-shaped region of the second heat exchange section 122, and the first heat exchange section 121 is bent and connected to the second heat exchange section 122. The communication sections 12 of the two heat exchange tubes 1 can be arranged symmetrically about the center line of the first heat exchange member 102 perpendicular to the left-right direction.

The first heat exchange section 121 includes first heat exchange portions 1211 and a first bent portion 1212. The plurality of first heat exchange portions 1211 are provided and spaced apart along the first direction, each second heat exchange portion 1211 extends linearly along the second direction, and the first bent portion 1212 is arc-shaped and is bent and connected between two adjacent first heat exchange portions 1211, so that the plurality of first heat exchange portions 1211 are sequentially connected.

The second heat exchange section 122 includes a second heat exchange portion 1221, a third heat exchange portion 1222, a fourth heat exchange portion 1223, and a fifth heat exchange portion 1224. The second heat exchange portion 1221 extends along the right peripheral side of the first heat exchange section 121 (the second heat exchange portion 1221 extends along the second direction). The third heat exchange portion 1222 is connected between the second heat exchange portion 1221 and the first heat exchange section 121, and extends along the rear peripheral side of the first heat exchange section 121 (the third heat exchange portion 1222 extends along the first direction). The first end of the third heat exchange portion 1222 is connected to the second heat exchange portion 1221 at an included angle of approximately 90°. The second end of the third heat exchange portion 1222 is connected to the first heat exchange section 121 at an included angle of approximately 90°. The fourth heat exchange portion 1223 communicates with the second heat exchange portion 1221, and is connected to the second heat exchange portion 1221 at an included angle of approximately 90°. The fourth heat exchange portion 1223 extends along the front peripheral side of the first heat exchange section 121 (the fourth heat exchange portion 1223 extends along the first direction), so that the opening of the U-shaped region 120 formed by the second heat exchange portion 1221, the third heat exchange portion 1222, and the fourth heat exchange portion 1223 is oriented to the left. The fifth heat exchange portion 1224 extends along the left peripheral side of the first heat exchange section 121, and closes at least part of the opening of the U-shaped region 120 formed by the second heat exchange portion 1221, the third heat exchange portion 1222, and the fourth heat exchange portion 1223. One end of the fifth heat exchange portion 1224 is bent and connected to the third heat exchange portion 1222, and the other end is connected to the first bent portion 1212.

The first heat exchange tube 1a further includes an eighth heat exchange section 128. The first heat exchange section 12 is connected between the eighth heat exchange section 128 and the second heat exchange section 122, and the eighth heat exchange section 128 is connected to the first heat exchange section 121 at an included angle of approximately 90°. The eighth heat exchange section 128 is bent and connected to one end portion 11, and the fourth heat exchange portion 1223 is bent and connected to the other end portion 11.

### Embodiment 2

Referring to FIGs. 7-10 and 29, this embodiment is substantially the same as Embodiment 1, where the same components use the same reference signs. The only difference is that the first expansion beam B1 has a first recess 105a, and the first recess 105a and the second recess 101c form an avoidance channel 200a. The first heat exchange member 102 further includes a current collector 2, where the current collector 2 corresponds one-to-one with the avoidance channel 200a. The current collector 2 connects multiple end portions 11 and is disposed in the second cavity 101b, and the avoidance channel 200a is configured to allow the current collector 2 to pass through.

The battery 200 further includes a third expansion beam B3, where the third expansion beam B3 is disposed between the first expansion beam B1 and the second expansion beam B2. The housing 101 is formed with a third recess 101d, and the third recess 101d forms an avoidance space. The portion of the first heat exchange member 102 located in the first cavity 101a passes through the avoidance space. The third expansion beam B3 is spaced apart from the first heat exchange member 102 for thermal insulation, and the third expansion beam B3 abuts a part of the wall of the housing 101 other than the third recess 101d.

The three heat exchange tubes 1 of the first heat exchange member 102 are a first heat exchange tube 1a, a second heat exchange tube 1b, and a third heat exchange tube 1c. The communication section 12 of the first heat exchange tube 1a includes a first heat exchange section 121 and a second heat exchange section 122. The second heat exchange section 122 is bent to form a U-shaped region 120. The first heat exchange section 121 is bent and disposed within the U-shaped region of the second heat exchange section 122, and the first heat exchange section 121 is bent and connected to the second heat exchange section 122. The first heat exchange section 121 includes first heat exchange portions 1211 and a first bent portion 1212. A plurality of first heat exchange portions 1211 are provided and are spaced apart along the first direction. Each of the second heat exchange portions 1211 extends linearly along the second direction. The first bent portion 1212 is arc-shaped and is bent and connected between two adjacent first heat exchange portions 1211, so that the plurality of first heat exchange portions 1211 are sequentially connected. The second heat exchange section 122 includes a second heat exchange portion 1221, a third heat exchange portion 1222, and a fourth heat exchange portion 1223. The second heat exchange portion 1221, the third heat exchange portion 1222, and the fourth heat exchange portion 1223 form a U-shaped region 120. The second heat exchange portion 1221 extends along the first direction. The third heat exchange portion 1222 extends along the second direction. The fourth heat exchange portion 1223 extends along the second direction.

At least the communication section 12 of the second heat exchange tube 1a is disposed within the U-shaped region 120 of the first heat exchange tube 1a. For the second heat exchange tube 1a: its communication section 12 includes a third heat exchange section 123, a third heat exchange section 124, and a fifth heat exchange section 125. The third heat exchange section 123 and the fourth heat exchange section 124 are respectively bent to form U-shaped regions 120. The third heat exchange section 123 and the fourth heat exchange section 124 are bent and connected. The third heat exchange section 123 is disposed within the U-shaped region 120 of the fourth heat exchange section 124. At least part of the first heat exchange section 121 of the first heat exchange tube 1a is disposed within the U-shaped region 120 of the third heat exchange section 123. The three side edges corresponding to the U-shaped region 120 of the third heat exchange section 123 and the three side edges corresponding to the U-shaped region 120 of the fourth heat exchange section 124 are respectively arranged in parallel. The fifth heat exchange section 125 is connected to the end of the third heat exchange section 123 farther away from the fourth heat exchange section 124, and includes sixth heat exchange portions 1251 and a second bent portion 1252. A plurality of sixth heat exchange portions 1251 are provided and are spaced apart along the first direction. Each of the sixth heat exchange portions 1251 extends along the second direction. The second bent portion 1252 is arc-shaped and is bent and connected between two adjacent sixth heat exchange portions 1251, so that the plurality of sixth heat exchange portions 1251 are sequentially connected.

### Embodiment 3

Referring to FIGs. 13 and 27, this embodiment is substantially the same as Embodiment 1, where the same components use the same reference signs. The only difference is that one of the two heat exchange tubes 1 of the first heat exchange member 102 is configured as a first heat exchange tube 1a, and the other is configured as a second heat exchange tube 1b. One side of the first heat exchange member 102 in the second direction corresponds to two current collectors 2. First end portions 11a of all heat exchange tubes 1 extend to one of the current collectors 2, and second end portions 11b of all heat exchange tubes 1 extend to the other current collector 2.

The communication section 12 of the first heat exchange tube 1a includes a first heat exchange section 121 and a second heat exchange section 122. The second heat exchange section 122 is bent to form a U-shaped region 120. The first heat exchange section 121 is bent and disposed within the U-shaped region of the second heat exchange section 122, and the first heat exchange section 121 is bent and connected to the second heat exchange section 122. The first heat exchange section 121 includes first heat exchange portions 1211 and a first bent portion 1212. A plurality of first heat exchange portions 1211 are provided and are spaced apart along the first direction. Each second heat exchange portion 1211 extends linearly along the second direction. The first bent portion 1212 is arc-shaped and is bent and connected between two adjacent first heat exchange portions 1211, so that the plurality of first heat exchange portions 1211 are sequentially connected. The second heat exchange section 122 includes a second heat exchange portion 1221, a third heat exchange portion 1222, and a fourth heat exchange portion 1223. The second heat exchange portion 1221, the third heat exchange portion 1222, and the fourth heat exchange portion 1223 form a U-shaped region 120. The second heat exchange portion 1221 extends along the first direction. The third heat exchange portion 1222 extends along the second direction. The fourth heat exchange portion 1223 extends along the second direction.

At least the communication section 12 of the second heat exchange tube 1a is disposed within the U-shaped region 120 of the first heat exchange tube 1a. For the second heat exchange tube 1a: its communication section 12 includes a first heat exchange section 121 and a second heat exchange section 122. The second heat exchange section 122 is bent to form a U-shaped region 120. The first heat exchange section 121 is bent and disposed within the U-shaped region of the second heat exchange section 122, and the first heat exchange section 121 is bent and connected to the second heat exchange section 122. The first heat exchange section 121 includes first heat exchange portions 1211 and a first bent portion 1212. A plurality of first heat exchange portions 1211 are provided and are spaced apart along the first direction. Each second heat exchange portion 1211 extends linearly along the second direction. The first bent portion 1212 is arc-shaped and is bent and connected between two adjacent first heat exchange portions 1211, so that the plurality of first heat exchange portions 1211 are sequentially connected. The second heat exchange section 122 includes a second heat exchange portion 1221, a third heat exchange portion 1222, and a fourth heat exchange portion 1223. The second heat exchange portion 1221, the third heat exchange portion 1222, and the fourth heat exchange portion 1223 form a U-shaped region 120. The second heat exchange portion 1221 extends along the first direction. The third heat exchange portion 1222 extends along the second direction. The fourth heat exchange portion 1223 extends along the second direction.

In addition, it should be noted that the various specific technical features described in the above specific embodiments can be combined in any suitable manner without contradiction. To avoid unnecessary repetition, this application will not describe various possible combinations separately. Furthermore, various different embodiments of this application can also be arbitrarily combined, as long as they do not violate the spirit of this application, and they should also be considered as content disclosed by this application. That is to say, in the absence of conflict, the embodiments and features in the embodiments of this application can be combined with each other.

The above are only preferred embodiments of this application and are not intended to limit this application. Various changes and modifications can be made to this application by those skilled in the art. Any modifications, equivalent substitutions, improvements, and the like, made within the spirit and principle of this application shall be included in the protection scope of this application.

## Claims

1. A battery, comprising:
a housing assembly, comprising a housing and an expansion beam, wherein the expansion beam is disposed within the housing;
battery cells, disposed within the housing and abutting the expansion beam; and
a heat exchange assembly, comprising a first heat exchange member, wherein the first heat exchange member is disposed within the housing and between the battery cell and the housing, the first heat exchange member is configured to exchange heat with the battery cell, and the first heat exchange member is spaced apart from the expansion beam, such that the first heat exchange member and the expansion beam are thermally insulated from each other.

2. The battery according to claim 1, wherein the heat exchange assembly further comprises at least one of a second heat exchange member and a third heat exchange member, wherein the second heat exchange member is disposed outside the housing, and the third heat exchange member is disposed between two adjacent battery cells.

3. The battery according to claim 1 or 2, further comprising:
a thermal insulation member, wherein the thermal insulation member is disposed between the first heat exchange member and the expansion beam.

4. The battery according to any one of claims 1 to 3, wherein there are multiple expansion beams, wherein one expansion beam divides an internal space of the housing into a first cavity and a second cavity, a part of the first heat exchange member and the battery cell are both disposed in the first cavity, at least one avoidance channel is formed between the expansion beam and the housing, the first heat exchange member passes through the corresponding avoidance channel, so that the first heat exchange member extends from the first cavity to the second cavity, and a wall surface of the expansion beam facing towards the avoidance channel is spaced apart from the first heat exchange member.

5. The battery according to claim 4, wherein the expansion beam has a first recess, and/or a wall of the housing has a second recess, wherein the first recess and/or the second recess forms the avoidance channel.

6. The battery according to claim 4 or 5, wherein portions of the first heat exchange member located on two opposite sides of the expansion beam are connected at an obtuse angle.

7. The battery according to any one of claims 4 to 6, wherein the first heat exchange member comprises a heat exchange tube and a current collector, wherein a heat exchange flow passage is defined within the heat exchange tube, an end portion of the heat exchange flow passage passes through a corresponding avoidance channel, the current collector corresponds one-to-one with the avoidance channel, and the current collector communicates with the end portion of the heat exchange flow passage and is disposed in the second cavity; and
the current collector communicates with interfaces of a plurality of end portions of the corresponding avoidance channel, or the current collector separates interfaces of a plurality of end portions of the corresponding avoidance channel into a plurality of independent flow channels.

8. The battery according to claim 7, wherein the avoidance channel is configured to allow the corresponding current collector to pass through.

9. The battery according to any one of claims 4 to 8, wherein a wall of the housing is formed with a second recess, wherein the second recess forms at least part of the avoidance channel, and a portion of the first heat exchange member passing through the avoidance channel is disposed within the second recess; and
the expansion beam abuts a part of the wall of the housing other than the second recess; or
the expansion beam is spaced apart from a part of the wall of the housing other than the second recess.

10. The battery according to claim 9, wherein the battery further comprises:
a thermal insulation member, wherein the thermal insulation member comprises a first thermal insulation portion, and the first thermal insulation portion is disposed between the wall surface of the expansion beam facing towards the avoidance channel and the first heat exchange member.

11. The battery according to claim 10, wherein the thermal insulation member further comprises a second thermal insulation portion, wherein the second thermal insulation portion is disposed between the part of the wall of the housing other than the second recess and the expansion beam.

12. The battery according to claim 11, wherein the expansion beam is further provided with a first fixing member, and at least part of the first fixing member is located within the expansion beam; and
the battery further comprises a second fixing member, and the second fixing member passes through the housing, the second thermal insulation portion, and the expansion beam, and is connected to the first fixing member.

13. The battery according to any one of claims 4 to 12, wherein the expansion beam has a first recess, wherein the first recess is configured to form at least part of the avoidance channel, the expansion beam further has a first mating surface abutting the battery cell, and the housing assembly further comprises:
a bearing member, wherein the bearing member is disposed in the avoidance channel and has a second mating surface abutting the battery cell, the first mating surface and the second mating surface are arranged flush, and the bearing member has a slot for avoiding the first heat exchange member, wherein the slot extends through an outer peripheral side of the bearing member.

14. The battery according to claim 13, wherein a stop portion that abuts the bearing member in a normal direction of the first mating surface is formed on at least one of the expansion beam and the housing, so as to restrict movement of the bearing member in a direction from the first cavity towards the second cavity.

15. The battery according to claim 14, wherein
the stop portion is formed on a side of the expansion beam facing towards the first cavity at a location of the avoidance channel; and/or
a stop step protruding towards the expansion beam is formed on a wall of the housing on which the first heat exchange member is disposed, wherein the stop step forms the stop portion.

16. The battery according to claim 15, wherein in a cross-section of the expansion beam, the stop portion on the expansion beam is formed as an arc-shaped structure, and the cross-section of the expansion beam is perpendicular to a length direction of the expansion beam.

17. The battery according to any one of claims 13 to 16, wherein the bearing member comprises:
a plate body portion, wherein a surface on a side of a thickness of the plate body portion forms the second mating surface, and the slot runs through two sides of the thickness of the plate body portion; and
a mating portion, wherein the mating portion is formed at an outer edge of the plate body portion, and abuts the expansion beam, so as to restrict movement of the bearing member in a direction from the first cavity towards the second cavity.

18. The battery according to claim 17, wherein the mating portion has a first surface and a second surface, wherein the first surface is formed as an arc-shaped surface recessed towards the second surface and mates with the expansion beam, and the second surface is connected to the second surface and is arranged flush with the second mating surface.

19. The battery according to claim 17 or 18, wherein at least one snap hole is formed on the expansion beam, and the bearing member further comprises:
at least one snap hook portion, wherein the snap hook portion is formed at an outer edge of the plate body portion and is located on a side of the plate body portion away from the second mating surface, and the snap hook portion is snapped into the corresponding snap hole.

20. The battery according to any one of claims 17 to 19, wherein the bearing member further comprises:
at least one support portion, wherein the support portion is disposed on a side of the plate body portion away from the second mating surface, and is arranged to avoid the first heat exchange member, and the support portion abuts the housing.

21. The battery according to claim 20, wherein a width of the support portion in a thickness direction of the plate body portion increases in a direction from the mating portion towards the first heat exchange member.

22. The battery according to any one of claims 13 to 21, wherein the bearing member is disposed between the first heat exchange member and the expansion beam;
a thermal conductivity coefficient of the bearing member is lower than a thermal conductivity coefficient of the expansion beam; and/or
the bearing member is spaced apart from the first heat exchange member.

23. The battery according to any one of claims 13 to 22, wherein a strength of a material of the bearing member is at least 0.8 times a strength of a material of the expansion beam.

24. The battery according to any one of claims 13 to 23, wherein the first heat exchange member is disposed on a bottom wall of the housing, and an end of the second mating surface facing towards the first heat exchange member is arranged flush with an end of the battery cell facing towards the corresponding first heat exchange member, or an end of the second mating surface facing towards the first heat exchange member is arranged adjacent to the first heat exchange member as compared with an end of the battery cell facing towards the corresponding first heat exchange member.

25. The battery according to any one of claims 1 to 24, wherein the first heat exchange member comprises at least one heat exchange tube, wherein the heat exchange tube is a flat tube or an accordion tube.

26. The battery according to any one of claims 1 to 25, wherein the first heat exchange member comprises a first heat exchange tube, wherein the first heat exchange tube comprises a first heat exchange section and a second heat exchange section, the second heat exchange section is bent to form a U-shaped region, and the first heat exchange section is bent and disposed within the U-shaped region, and is bent and connected to the second heat exchange section.

27. The battery according to claim 26, wherein the first heat exchange section comprises first heat exchange portions and a first bent portion, wherein a plurality of first heat exchange portions are provided and spaced apart along a first direction, each of the first heat exchange portions extends along a second direction, and the first bent portion is arc-shaped and is bent and connected between two adjacent first heat exchange portions, so that the plurality of first heat exchange portions are sequentially connected, wherein the second direction is arranged at an included angle to the first direction.

28. The battery according to claim 26 or 27, wherein the second heat exchange section comprises a second heat exchange portion, a third heat exchange portion, and a fourth heat exchange portion, wherein the second heat exchange portion extends along a first peripheral side of the first heat exchange section, the third heat exchange portion is connected between the second heat exchange portion and the first heat exchange section, and extends along a second peripheral side of the first heat exchange section, a first end of the third heat exchange portion is connected to the second heat exchange portion at an included angle, a second end of the third heat exchange portion is connected to the first heat exchange section at an included angle, the fourth heat exchange portion communicates with the second heat exchange portion, and is connected to the second heat exchange portion at an included angle, and the fourth heat exchange portion extends along a third peripheral side of the first heat exchange section.

29. The battery according to claim 28, wherein the first heat exchange section comprises a plurality of first heat exchange portions, wherein the plurality of first heat exchange portions are sequentially bent and connected in a first direction; wherein
the second heat exchange portion is located on one side of the plurality of first heat exchange portions along the first direction, the third heat exchange portion is located on a side of the plurality of first heat exchange portions along a second direction, the first direction and the second direction are arranged at an included angle, a first end of the third heat exchange portion is connected to one end of the second heat exchange portion along the second direction, a second end of the third heat exchange portion is connected to one of the plurality of first heat exchange portions that is farthest from the second heat exchange portion along the first direction, the fourth heat exchange portion is located on the other side of the plurality of first heat exchange portions along the second direction, one end of the fourth heat exchange portion is connected to an end of the second heat exchange portion away from the third heat exchange portion, and the other end of the fourth heat exchange portion extends along the first direction leaving the second heat exchange portion; or
the second heat exchange portion is located on a side of the plurality of first heat exchange portions along the second direction, the third heat exchange portion is located on one side of the plurality of first heat exchange portions along the first direction, the first direction and the second direction are arranged at an included angle, a first end of the third heat exchange portion is connected to an end of the second heat exchange portion along the first direction, a second end of the third heat exchange portion is connected to one of the plurality of first heat exchange portions that is closest to the third heat exchange portion along the first direction, the fourth heat exchange portion is located on the other side of the plurality of first heat exchange portions along the first direction, one end of the fourth heat exchange portion is connected to an end of the second heat exchange portion away from the third heat exchange portion, and the other end of the fourth heat exchange portion extends along the second direction leaving the second heat exchange portion.

30. The battery according to claim 29, wherein the second heat exchange section further comprises a fifth heat exchange portion, wherein the fifth heat exchange portion extends along a fourth peripheral side of the first heat exchange section, and closes at least part of an opening of the U-shaped region formed by the second heat exchange portion, the third heat exchange portion, and the fourth heat exchange portion.

31. The battery according to any one of claims 26 to 30, wherein the first heat exchange section is connected downstream of the second heat exchange section along a fluid flow direction; or the first heat exchange tube is configured such that: when heating the battery cell, the first heat exchange section is connected downstream of the second heat exchange section along a fluid flow direction; and when cooling the battery cell, the first heat exchange section is connected upstream of the second heat exchange section along a fluid flow direction.

32. The battery according to any one of claims 26 to 31, wherein the first heat exchange member further comprises a second heat exchange tube, wherein the second heat exchange tube and the first heat exchange tube are disposed on a same side of the battery cell, at least part of the second heat exchange tube is bent and disposed within the U-shaped region of the first heat exchange tube, and bent structures of the second heat exchange tube and the first heat exchange tube are the same or different.

33. The battery according to claim 32, wherein the second heat exchange tube comprises a U-shaped region having the same structure as the first heat exchange tube, and at least part of the first heat exchange section of the first heat exchange tube is disposed within the U-shaped region of the second heat exchange tube.

34. The battery according to claim 33, wherein the second heat exchange tube comprises a third heat exchange section and a fourth heat exchange section connected by bending, wherein the third heat exchange section and the fourth heat exchange section are respectively bent to form U-shaped regions, the third heat exchange section is disposed within the U-shaped region of the fourth heat exchange section, and at least part of the first heat exchange section of the first heat exchange tube is disposed within the U-shaped region of the third heat exchange section.

35. The battery according to claim 34, wherein the second heat exchange tube further comprises a fifth heat exchange section, wherein the fifth heat exchange section comprises sixth heat exchange portions and a second bent portion, a plurality of sixth heat exchange portions are provided and spaced apart along a first direction, each of the first heat exchange portions extends along a second direction, and the second bent portion is arc-shaped and is bent and connected between two adjacent sixth heat exchange portions, so that the plurality of sixth heat exchange portions are sequentially connected, wherein the second direction is arranged at an included angle to the first direction,
wherein the fifth heat exchange section is disposed between the third heat exchange section and the fourth heat exchange section, and/or the fifth heat exchange section is disposed between the third heat exchange section and a corresponding end portion.

36. The battery according to any one of claims 32 to 35, wherein the first heat exchange member further comprises a third heat exchange tube, wherein at least part of the third heat exchange tube is bent and disposed within the U-shaped region of the second heat exchange tube.

37. The battery according to any one of claims 1 to 36, wherein the expansion beam comprises:
a beam body, wherein the beam body defines a cavity; and
a reinforcing partition, wherein the reinforcing partition is disposed in the cavity and has a plurality of spaced-apart connecting portions, the plurality of connecting portions comprise a first connecting portion and a second connecting portion, the first connecting portion and the second connecting portion are respectively connected to two opposite side walls of the beam body, so that the reinforcing partition divides the cavity into a plurality of chambers, and the first connecting portion and the second connecting portion are staggered.

38. The battery according to claim 37, wherein the beam body comprises a first plate body and a second plate body arranged opposite to each other, wherein the first plate body and the second plate body are connected and jointly define the cavity, and the reinforcing partition is disposed between the first plate body and the second plate body and has a third connecting portion, wherein the third connecting portion is sandwiched between the first plate body and the second plate body and is connected to the first plate body and the second plate body.

39. The battery according to claim 37 or 38, wherein multiple expansion beams are provided and comprise a first expansion beam and a second expansion beam spaced apart, wherein the battery cell is disposed between the first expansion beam and the second expansion beam, a third fixing member is disposed in the cavity of the first expansion beam, a fourth fixing member is disposed in the cavity of the second expansion beam, and the housing assembly further comprises a pull rope, wherein the pull rope passes through the corresponding cavity and is connected to both the third fixing member and the fourth fixing member.

40. The battery according to any one of claims 1 to 39, wherein the housing comprises a first housing, wherein the first housing is an integrally stamped part and comprises a bottom wall and a peripheral wall, the peripheral wall is arranged around the bottom wall, and the expansion beam is connected to both the bottom wall and the peripheral wall.

41. An electrical apparatus, comprising the battery according to any one of claims 1 to 40.
